# EUROPÄISCHE PATENTSCHRIFT

(11) **EP 1 165 342 B1**
(45) Veröffentlichungstag und Bekanntmachung des Hinweises auf die Patenterteilung: **08.03.2006**
(21) Anmeldenummer: 00929232.7
(22) Anmeldetag: 15.03.2000
(51) Int. Cl.: B60N 2/12

(54) **KRAFTFAHRZEUGSITZ**
AUTOMOBILE SEAT
SIEGE DE VEHICULE

(30) Priorität: 15.03.1999 DE 19911358
(43) Veröffentlichungstag der Anmeldung: 02.01.2002
(73) Patentinhaber: Brose Fahrzeugteile GmbH & Co. KG, Coburg, 96450 Coburg (DE)
(72) Erfinder: LIEBETRAU, Matthias, D-96450 Coburg (DE); BÄTZ, Harald, D-96476 Bad Rodach (DE)
(74) Vertreter: Baumgärtel, Gunnar
(86) Internationale Anmeldenummer: PCT/DE2000/000843
(87) Internationale Veröffentlichungsnummer: WO 2000/055002

(56) Entgegenhaltungen:
- EP-A- 0 945 301
- FR-A- 2 729 898
- FR-A- 2 739 066
- FR-A- 2 756 522
- US-A- 5 407 165

## Beschreibung

Die Erfindung betrifft einen Kraftfahrzeugsitz mit einem Sitzgestell, einer auf dem Sitzgestell vorgesehene Sitzfläche und einer Rückenlehne, die schwenkbar an dem Sitzgestell gelagert ist und die in Richtung auf die Sitzfläche vorklappbar ist.

Derartige Sitze werden als Vordersitze in Kraftfahrzeugen eingesetzt, wobei durch das Vorklappen der Rückenlehne das Einsteigen eines Passagiers oder das Einschieben eines Gegenstandes in den Fond des Kraftfahrzeugs erleichtert werden soll. Eine zusätzliche Erleichterung beim Einsteigen, die bei zweitürigen Kraftfahrzeugen von Bedeutung ist, wird dabei dadurch erreicht, daß der Sitz nach dem Vorklappen der Rückenlehne nach vorne verschoben werden kann. Hierzu weist der Kraftfahrzeugsitz weiterhin folgendes auf:
- eine Längsführung, mit der das Sitzgestell zur Einstellung der Sitzlängsposition in Sitzlängsrichtung bewegbar ist;
- eine Feststellvorrichtung zum Arretieren des Sitzgestells in einer zuvor eingestellten Sitzlängsposition;
- ein Betätigungselement zum Entriegeln der Feststellvorrichtung, so daß das Sitzgestell in Sitzlängsrichtung bewegbar ist;
- einen Koppelmechanismus zur Kopplung der Feststellvorrichtung mit der Rückenlehne, der auf das Betätigungselement einwirkt und dadurch die Feststellvorrichtung entriegelt, wenn die Rückenlehne in Richtung auf die Sitzfläche vorgeklappt ist;
- eine Memory-Einrichtung, mittels der das Sitzgestell bei einer Bewegung in Sitzlängsrichtung automatisch in einer vorgebbaren, als Memory-Position definierten Sitzlängsposition angehalten werden kann, wobei ein dem Sitzgestell zugeordneter, in Sitzlängsrichtung bewegbarer Anschlag mit einem Gegenanschlag der Memory-Einrichtung in Eingriff tritt;
- Einstellmittel der Memory-Einrichtung, mit denen die Memory-Position durch Verschieben der Position des Gegenanschlages in Sitzlängsrichtung einstellbar ist;
- eine Verriegelungsvorrichtung der Memory-Einrichtung zum Verriegeln einer eingestellten Memory-Position und
- Schaltmittel, mit denen die Verriegelungsvorrichtung entriegelbar ist, um die Memory-Position einstellen zu können.

Ein derartiger Sitz bietet zum einen die Möglichkeit, nach dem Vorklappen der Rückenlehne in Richtung auf die Sitzfläche das Sitzgestell, und somit den gesamten Fahrzeugsitz, nach vorne zu verschieben, um das Einsteigen eines Passagieres in den Fond zu erleichtern (Easy-Entry-Funktion). Gleichzeitig kann der Sitz anschließend sehr einfach wieder in seine ursprüngliche Sitzlängsposition verschoben werden, wenn diese Sitzlängsposition mittels der hierfür vorgesehenen Memory-Einrichtung als Memory-Position gespeichert ist. In diesem Fall wird das Sitzgestell beim Zurückschieben des Sitzes automatisch in der Memory-Position angehalten, wobei ein dem Sitzgestell zugeordneter Anschlag mit einem Gegenanschlag der Memory-Einrichtung zusammenwirkt.

Bei einem aus der DE 42 01 829 A1 bekannten Fahrzeugsitz dieser Art, der ein Sitzgestell mit einer nach vorne klappbaren Rückenlehne, eine Längsführung zur Einstellung der Sitzlängsposition, eine der Längsführung zugeordnete Feststellvorrichtung sowie einen Koppelmechanismus aufweist, mit dem die Feststellvorrichtung entriegelbar ist, wenn die Rückenlehne in Richtung auf die Sitzfläche vorgeklappt wird, läßt sich die Feststellvorrichtung nach einem Verschieben des Sitzes mit vorgeklappter Rückenlehne erst wieder arretieren, nachdem der Sitz in die mittels einer Memory-Einrichtung gespeicherte ursprüngliche Position zurückbewegt wurde. Dies bedeutet nicht nur eine Verminderung des Bedienkomforts, sondern kann darüber hinaus zu einer erheblichen Gefährdung einer auf dem Sitz befindlichen Person führen, wenn diese auf dem Sitz Platz nimmt, ohne daß dieser vollständig in seine Memory-Position bewegt worden ist, z.B. weil hinter dem Sitz abgelegtes Gepäck eine Verschiebung des Sitzes in die Memory-Position verhindert. Denn eine auf einem nicht verriegelten Fahrzeugsitz befindliche Person ist in einem Crash-Fall einem erheblichen Verletzungsrisiko ausgesetzt.

Aus der DE 196 47 447 A1 ist ein Fahrzeugsitz mit vorklappbarer Rückenlehne, Easy-Entry-Funktion bei vorgeklappter Rückenlehne und Memory-Funktion zum Wiederauffinden der ursprünglichen Sitzposition bekannt, der auch außerhalb der Memory-Position verriegelbar ist und somit in eine sichere Gebrauchslage gebracht werden kann. Bei diesem Sitz ist ein Getriebe vorgesehen, mit dem eine Längsbewegung des Fahrzeugsitzes in eine Drehbewegung einzelner Getriebeelemente umgesetzt werden kann. Die Memory-Funktion wird hierbei mit Hilfe von Anschlägen und Federelementen zur Verfügung gestellt, die mit den drehbaren Getriebeelementen zusammenwirken. Dieser bekannte Fahrzeugsitz hat den Nachteil, daß ein vergleichsweise hoher Montageaufwand erforderlich ist, um eine hinreichend präzise Abstimmung zwischen verschiedenen verschiebbaren, schwenkbaren sowie drehbaren Bauteilen herzustellen, die zur Schaffung einer kombinierten Easy-Entry- und Memory-Funktion vorgesehen sind.

Die FR 2 756 522 betrifft einen Fahrzeugsitz, der eine vorklappbare Rückenlehne aufweist. Diese ist über ein Kabel mit einem auf einer beweglichen Schiene befestigten Entriegelhebel derart gekoppelt, daß der Sitz beim Vorklappen der Lehne entlang einer festen Schiene horizontal verschoben werden kann. An der beweglichen Schiene ist weiter ein Auslöser mit einem Auslösefinger befestigt. Stößt dieser Auslösefinger an ein mit der festen Schiene fest verbundenes Widerlager, so wird die beweglich Schiene trotz vorgeklappter Lehne verriegelt.

Aus der FR 2 729 898 ist ebenfalls ein Fahrzeugsitz bekannt, der bei Vorklappen der Rückenlehne in Längsrichtung verschiebbar ist. Der Sitz ist dabei in jeder Längsstellung durch Hochklappen der Rückenlehne fest verrastbar. Die ursprüngliche Längsposition ist dabei in einem Memory-Element gespeichert. Dieses Memory-Element ist auf einer festen Schiene einer Sitzbefestigung angeordnet und kann bei Verschieben des Sitzes in Längsrichtung mit hochgeklappter Lehne eingestellt werden. Dazu greift ein auf einer beweglichen Schiene angeordnetes Schaltmittel in einen drehbar gelagerten Entriegelungshebel des Memoryelementes.

Der Erfindung liegt das Problem zugrunde, einen Kraftfahrzeugsitz der eingangs genannten Art zu schaffen, der sowohl einen einfachen Aufbau als auch eine hohe Funktionssicherheit aufweist.

Diese Aufgabe wird erfindungsgemäß durch die Schaffung eines Kraftfahrzeugsitzes mit den Merkmalen des Patentanspruchs 1 gelöst.

Danach ist vorgesehen, daß der Koppelmechanismus, der auf das Betätigungselement der Feststellvorrichtung einwirkt und diese entriegelt, wenn die Rückenlehne in Richtung auf die Sitzfläche vorgeklappt ist, nur so lange auf das Betätigungselement einwirkt, wie die Rückenlehne vorgeklappt ist. Somit ist das Sitzgestell jederzeit durch Verriegeln der Feststellvorrichtung arretierbar, wenn die Rückenlehne nicht mehr vorgeklappt ist, also wieder in ihre Funktionsposition zurückgeklappt wurde. Dies bedeutet insbesondere, daß bei hochgeklappter Rückenlehne die Arretierbarkeit des Sitzgestells in einer aktuellen Sitzlängsposition unabhängig davon ist, ob die jeweilige Sitzlängsposition der Memory-Position entspricht.

Weiter ist die Verriegelungsvorrichtung der Memory-Einrichtung mittels eines elastischen Elementes in Richtung auf ihre verriegelte Stellung elastisch vorgespannt und die Schaltmittel können in der Memory-Position bei nicht vorgeklappter Rückenlehne derart auf die Verriegelungsvorrichtung einwirken, daß diese entgegen der elastischen Vorspannung entriegelt wird.

Die erfindungsgemäße Lösung führt einerseits zu einer Erhöhung des Bedienkomforts, da die Variabilität hinsichtlich der nach Ausführung der Easy-Entry-Funktion einstell-und arretierbaren Sitzlängspositionen vergrößert wird. Gleichzeitig wird die Funktionssicherheit verbessert, da der Sitz auch dann arretierbar ist, wenn er sich nicht in der Memory-Position befindet, so daß kein Sicherheitsrisiko als Folge eines nicht hinreichend gesicherten Sitzes auftreten kann.

Unter dem Sitzgestell werden dabei vorliegend jeweils sämtliche in Sitzlängsrichtung bewegbare Bestandteile der tragenden Sitzkonstruktion verstanden, also insbesondere auch diejenigen Bestandteile der Sitzlängsführung, wie z.B. eine Sitzschiene (Oberschiene), die bei einer Einstellung der Sitzlängsposition in Längsrichtung bewegt werden.

In einer bevorzugten Ausführungsform der Erfindung sind weiterhin Sperrmittel vorgesehen, die mit der Rückenlehne gekoppelt sind und die bei vorgeklappter Rückenlehne derart auf die zur Entriegelung der verriegelungsvorrichtung der Memory-Einrichtung vorgesehenen Schaltmittel einwirken, daß bei vorgeklappter Rückenlehne eine Entriegelung der Verriegelungsvorrichtung verhindert wird. Dies bedeutet, daß bei vorgeklappter Rückenlehne die Verriegelungsvorrichtung der Memory-Einrichtung stets verriegelt ist, so daß keine Veränderung der Memory-Position erfolgen kann.

Die Sperrmittel können beispielsweise über ein Schubmittel oder ein Zugmittel, insbesondere in Form eines Seiles, mit der Rückenlehne gekoppelt sein. Zur Kopplung kann jedoch auch eine Hebelanordnung oder ein sonstiges Getriebe verwendet werden. Es ist lediglich erforderlich, daß die zur Kopplung verwendeten Mittel geeignet sind, eine Schwenkbewegung der Rückenlehne in eine Bewegung eines Sperrelementes umzusetzen und dieses in eine Position zu bringen, in der es eine Entriegelung der Verriegelungsvorrichtung der Memory-Einrichtung blockiert.

Die Sperrmittel können dabei mit der Rückenlehne über denselben Koppelmechanismus gekoppelt sein wie das Betätigungselement, das bei vorgeklappter Rückenlehne eine Entriegelung der Feststellvorrichtung der Sitzlängsführung bewirkt.

Um ein Sperrelement der Sperrmittel mit den Schaltmitteln in Eingriff zu bringen, kann z.B. vorgesehen sein, daß das Sperrelement beim Vorklappen der Rückenlehne in Sitzlängsrichtung verschoben wird. Alternativ kann eine Schwenkbewegung des Sperrelementes beim Vorklappen der Rückenlehne oder auch eine andere Form der Bewegung vorgesehen sein.

Das Sperrelement weist z.B. einen Anschlag auf, der beim Vorklappen der Rückenlehne mit den Schaltmitteln in Wirkverbindung tritt, um dadurch eine Entriegelung der Verriegelungsvorrichtung der Memory-Einrichtung zu blockieren. Alternativ kann das Sperrelement auch mit den Schaltmitteln verbunden sein und beim Vorklappen der Rückenlehne derart auf die Schaltmittel einwirken, daß hierdurch eine Entriegelung der Verriegelungsvorrichtung verhindert wird.

Die zum Entriegeln der Verriegelungsvorrichtung der Memory-Einrichtung vorgesehenen Schaltmittel können beispielsweise durch einen Schalthebel oder durch eine Schaltfeder gebildet werden, wobei ersterer zum Entriegeln der Verriegelungsvorrichtung verschwenkt und letzterer hierzu deformiert wird. Ebenso ist ein verschiebliches Schaltmittel verwendbar.

Die Schaltmittel werden vorzugsweise an dem Sitzgestell gelagert und sind derart angeordnet, daß sie nur dann zum Entriegeln auf die Verriegelungsvorrichtung einwirken können, wenn sich das Sitzgestell in der Memory-Position befindet. Dies bedeutet, daß eine Veränderung der Memory-Position, die ja eine Entriegelung der Verriegelungsvorrichtung voraussetzt, nur dann vorgenommen werden kann, wenn sich das Sitzgestell in der aktuellen Memory-Position befindet.

In einer vorteilhaften Weiterbildung sind die Schaltmittel in Richtung einer ersten Schaltposition elastisch vorgespannt und entgegen der Wirkung dieser Vorspannung in eine zweite Schaltposition schaltbar, wobei in einer der beiden Schaltpositionen die Verriegelungsvorrichtung verriegelt und in der anderen Schaltposition die Verriegelungsvorrichtung entriegelt ist.

In einer Ausführungsform der Erfindung sind die Schaltmittel mit der Feststellvorrichtung der Sitzlängsführung gekoppelt, wenn sich das Sitzgestell in der Memory-Position befindet, und können daher beim Betätigen der Feststellvorrichtung gleichzeitig geschaltet werden.

Nach einer Variante werden hierbei die Schaltmittel beim Entriegeln der Feststellvorrichtung derart geschaltet, daß die Verriegelungsvorrichtung entriegelt wird. Dies bedeutet, daß bei einem Entriegeln der Feststellvorrichtung der Sitzlängsführung in der Memory-Position gleichzeitig auch die Verriegelungsvorrichtung der Memory-Einrichtung entriegelt wird, so daß eine neue Memory-Position eingestellt werden kann. Hierbei kann jedoch durch die oben erwähnten Sperrmittel sichergestellt werden, daß dies nur dann möglich ist, wenn sich die Rückenlehne nicht in der vorgeklappten Position befindet. Denn bei einem Verschieben des Sitzes zum Zwecke eines erleichterten Einstiegs in das Kraftfahrzeug soll ja in der Regel keine Veränderung der Memory-Position vorgenommen werden.

Nach einer anderen Variante werden die Schaltmittel beim Verriegeln der Feststellvorrichtung der Sitzlängsführung derart geschaltet, daß die Verriegelungsvorrichtung der Memory-Einrichtung entriegelt wird. Bei dieser Variante werden also die zu einer Änderung der Memory-Position vorgesehenen Einstellmittel der Memory-Einrichtung bei einem Verriegeln der Feststellvorrichtung der Sitzlängsführung automatisch freigeschaltet. Wenn dann anschließend die Feststellvorrichtung wieder entriegelt wird, um das Sitzgestell in Sitzlängsrichtung verschieben zu können, kann hierbei zugleich auch eine Korrektur der Memory-Position stattfinden. Selbstverständlich kann auch hier mittels der oben erwähnten Sperrmittel bewirkt werden, daß die Freischaltung der Einstellmittel der Memory-Einrichtung nur bei nicht vorgeklappter Rückenlehne möglich ist.

Weiter kann vorgesehen sein, daß in der Memory-Position des Sitzgestells bei nicht vorgeklappter Rückenlehne und bei entriegelter Verriegelungsvorrichtung der Memory-Einrichtung die Schaltmittel derart abgestützt werden, daß bei einem Entriegeln der Feststellvorrichtung die Schaltmittel nicht geschaltet werden. Hierzu können sich die Schaltmittel beispielsweise an einer Stützfläche abstützen oder auch mittels eines elastischen Elementes in eine bestimmte Position vorgespannt werden.

Um zu verhindern, daß beim Anfahren der Memory-Position automatisch die Einstellmittel der Memory-Einrichtung freigeschaltet werden, mit der Folge, daß bei einer anschließenden Verstellung der Sitzlängsposition zugleich auch die Memory-Position verändert würde, kann vorgesehen sein, daß die Schaltmittel beim Anfahren der Memory-Position mit nicht vorgeklappter Rückenlehne zunächst deaktiviert werden und dadurch ein sofortiges Entriegeln der Verriegelungsvorrichtung der Memory-Einrichtung blockiert wird. Bei einem anschließenden Verriegeln der Feststellvorrichtung können die Schaltmittel dann derart betätigt werden, daß sie wieder zum Entriegeln auf die Verriegelungsvorrichtung der Memory-Einrichtung einwirken können. Dies kann insbesondere dadurch bewirkt werden, daß die Verriegelungsvorrichtung bei einem anschließenden Entriegeln der Feststellvorrichtung automatisch entriegelt wird.

Um die Schaltmittel beim Anfahren der Memory-Position mit nicht vorgeklappter Rückenlehne zu deaktivieren, kann vorgesehen sein, daß den Schaltmitteln eine Führungsfläche der Memory-Einrichtung zugeordnet ist und daß diese Führungsfläche derart ausgebildet ist, daß die Schaltmittel beim Anfahren der Memory-Position entlang der Führungsfläche geführt werden und dadurch nicht auf die Verriegelungsvorrichtung einwirken können. Bei einem anschließenden Verriegeln der Feststellvorrichtung können die Schaltmittel dann automatisch derart betätigt werden, daß sie wieder von der Führungsfläche abgehoben werden. Bei einer daran anschließenden erneuten Entriegelung der Feststellvorrichtung (mit nicht vorgeklappter Rückenlehne) können dann die Schaltmittel wieder auf die Verriegelungsvorrichtung der Memory-Einrichtung einwirken, um deren Einstellmittel freizuschalten.

In einer anderen Ausführungsform ist den Schaltmitteln eine Anschlagfläche der Memory-Einrichtung zugeordnet, die derart angeordnet ist, daß sie beim Anfahren der Memory-Position mit nicht vorgeklappter Rückenlehne auf die Schaltmittel einwirkt, um ein Entriegeln der Verriegelungsvorrichtung durch die Schaltmittel zu verhindern. Bei einem anschließenden Verriegeln der Feststellvorrichtung werden die Schaltmittel dabei derart betätigt, daß sie wieder von der Anschlagfläche abgehoben werden.

Die Verriegelungsvorrichtung der Memory-Einrichtung besteht vorzugsweise aus einer zusammen mit dem Gegenanschlag der Memory-Einrichtung in Sitzlängsrichtung verschiebbaren Verriegelungseinheit und einer der Verriegelungseinheit zugeordneten Rasteinrichtung, die in Sitzlängsrichtung hintereinander angeordnete Raststellen aufweist, an denen die Verriegelungseinheit bezüglich der Rasteinrichtung zur Fixierung der Memory-Position verriegelbar ist.

Die Verriegelungseinheit kann beispielsweise eine schwenkbar gelagerte Sperrklinke umfassen, die ein Rastelement aufweist, das in die Raststellen der Rasteinrichtung einrastbar ist, wobei die Sperrklinke mit einem Betätigungsabschnitt versehen ist, auf den die Schaltmittel einwirken können, um das Rastelement in die Rasteinrichtung einrasten bzw. aus dieser ausrasten zu lassen.

Um bei einer Einstellung der Sitzlängsposition zugleich auch eine Anpassung der Memory-Position vornehmen zu können, weist die Memory-Einrichtung einen Mitnehmer auf, der mit dem Sitzgestell in Eingriff bringbar ist, so daß der Gegenanschlag und die Verriegelungseinheit der Memory-Einrichtung zusammen mit dem Sitzgestell in Sitzlängsrichtung verschoben werden können. Dem Mitnehmer ist hierzu ein Eingriffsbereich des Sitzgestelles zugeordnet und der Mitnehmer ist mit dem Eingriffsbereich z.B. dadurch in Eingriff bringbar, daß Mitnehmer und Eingriffsbereich relativ zueinander verschwenkt werden.

Der Mitnehmer und der Eingriffsbereich sind vorzugsweise nur dann miteinander in Eingriff bringbar, wenn sich das Sitzgestell in der Memory-Position befindet und wenn die Verriegelungsvorrichtung der Memory-Einrichtung entriegelt ist. Der Mitnehmer selbst kann beispielsweise an der Sperrklinke angeordnet sein.

Die Einstellmittel, mit denen die Memory-Position einstellbar ist, können vorteilhaft durch einen Gleiter gebildet werden, der in Sitzlängsrichtung beweglich gelagert ist und an dem die Verriegelungseinheit sowie der Gegenanschlag der Memory-Einrichtung angeordnet sind.

Nach einer weiteren Variante der Erfindung ist vorgesehen, daß an der Memory-Einrichtung oder dem Sitzgestell mindestens ein elastisch vorgespannter Schieber beweglich gelagert ist, der sich in der Memory-Position entgegen der Vorspannung an einem Anschlagselement des Sitzgestells bzw. der Memory-Einrichtung abstützt und der sich bei einer Verschiebung des Sitzgestells aus der Memory-Position heraus (mit vorgeklappter Rückenlehne) aufgrund der genannten Vorspannung in eine derartige Position bewegt, daß er eine Entriegelung der Verriegelungseinheit verhindert. Hierdurch wird sichergestellt, daß außerhalb der Memory-Position keine Entriegelung der Verriegelungseinheit der Memory-Einrichtung erfolgen kann.

Gemäß einer Variante weist hierbei die Verriegelungseinheit selbst einen elastisch vorgespannten, beweglich gelagerten Schieber auf, der sich in der Memory-Position entgegen der Vorspannung an einem Anschlagselement des Sitzgestells abstützt und der sich bei einer Verschiebung des Sitzgestells aus der Memory-Position heraus aufgrund der Vorspannung in eine derartige Position bewegt, daß er eine Entriegelung der Verriegelungseinheit außerhalb der Memory-Position verhindert. So kann der Schieber beispielsweise bei einer Verschiebung des Sitzgestells aus der Memory-Position heraus aufgrund der Vorspannung in eine derartige Position bewegt werden, daß er an der Sperrklinke der Verriegelungseinheit angreift und dadurch eine Entriegelung der Sperrklinke verhindert.

Nach einer anderen bzw. ergänzenden Variante weist das Sitzgestell einen elastisch vorgespannten, beweglich gelagerten Schieber auf, der sich in der Memory-Position des Sitzgestelles entgegen der Vorspannung an einem Anschlagselement der Memory-Einrichtung abstützt und der sich bei einer Verschiebung des Sitzgestells aus der Memory-Position heraus mit vorgeklappter Rückenlehne aufgrund der Vorspannung in eine derartige Position bewegt, daß er ein Einwirken der Schaltmittel auf die Verriegelungsvorrichtung, das zu einer Entriegelung der Verriegelungsvorrichtung führen würde, blockiert. Dabei wird weiterhin sichergestellt, daß bei einem späteren Hochklappen der Rückenlehne außerhalb der Memory-Position aus der vorgeklappten Stellung die Position des Schiebers nicht beeinflußt wird. Hierdurch wird erreicht, daß ein Hochklappen der Rückenlehne außerhalb der Memory-Position nicht dazu führt, daß die Einstellmittel der Memory-Einrichtung freigegeben werden, was eine Änderung der Memory-Position zur Folge hätte.

Wenn das Sitzgestell anschließend wieder in die Memory-Position zurückbewegt wird, dann wirkt der Schieber derart mit einem Anschlagselement zusammen, daß der Schieber beim Erreichen der Memory-Position entgegen der Vorspannung bewegt wird und dadurch eine Entriegelung der Verriegelungsvorrichtung der Memory-Einrichtung nicht mehr blockiert.

Wenn in diesem Fall die Schaltmittel elastisch in Richtung auf eine Schaltposition vorgespannt sind, in der sie eine Entriegelung der Verriegelungsvorrichtung bewirken, dann erfolgt beim Erreichen der Memory-Position automatisch eine Entriegelung der Verriegelungsvorrichtung, so daß eine Neueinstellung der Memory-Position möglich ist.

In einer vorteilhaften Weiterbildung ist es hierbei möglich, die Feder mittels der der Schieber vorgespannt wird, derart auszulegen, daß der Schieber nur durch das Aufbringen vergleichsweise großer Kräfte entgegen der Vorspannung bewegbar ist. Der Schieber wird in diesem Fall nur dann in eine Position verschoben, in der er eine Entriegelung der Verriegelungsvorrichtung nicht mehr blockiert, wenn der Sitz von dem Benutzer mit einer hinreichend großen Kraft in die Memory-Position überführt wird. Daraufhin kann dann eine Neuprogrammierung der Memory-Position erfolgen.

Wird demgegenüber der Sitz nur mit einer vergleichsweise geringeren Kraft in die Memory-Position bewegt, so kann die auf den Schieber wirkende Vorspannung nicht überwunden werden und der Schieber blockiert weiterhin eine Entriegelung der Verriegelungsvorrichtung.

Weitere Merkmale und Vorteile der Erfindung werden bei der nachfolgenden Beschreibung von Ausführungsbeispielen anhand der Figuren deutlich werden.

Es zeigen:
- Fig. 1 -: eine perspektivische Darstellung eines Sitzgestells mit einer Sitzlängsführung, einer Feststellvorrichtung der Sitzlängsführung, einem Sitzseitenteil, an dem eine Rückenlehne schwenkbar gelagert ist, sowie mit einer programmierbaren Memory-Einrichtung zum automatischen Auffinden einer vorgebbaren Sitzlängsposition;
- Fig. 1a -: eine vergrößerte Darstellung eines Ausschnitts aus Fig. 1 in einem Zustand, in dem der Sitz mit hochgeklappter Rückenlehne in seiner Memory-Position verriegelt ist;
- Fig. 2 -: eine Darstellung gemäß Fig. 1a in einem Zustand, in dem die Rückenlehne vorgeklappt wurde, um den Sitz mit vorgeklappter Rückenlehne zu verschieben;
- Fig. 3 -: eine Darstellung gemäß Fig. 1a in einem Zustand, in dem sich der Sitz außerhalb seiner Memory-Position befindet und bei hochgeklappter Rückenlehne die Feststellvorrichtung der Sitzlängsführung betätigt wurde, um die Sitzlängsposition einstellen zu können;
- Fig. 4 -: eine Darstellung gemäß Fig. 1a in einem Zustand, in dem der Sitz mit hochgeklappter Rückenlehne seine Memory-Position erreicht;
- Fig. 5 -: eine vergrößerte Darstellung der Verriegelungsvorrichtung der Memory-Einrichtung, mit der die Memory-Einrichtung in einer zuvor angefahrenen Memory-Position verriegelbar ist;
- Fig. 5a -: eine Explosionsdarstellung eines Teils der Verriegelungsvorrichtung aus Fig. 5;
- Fig. 5b -: eine perspektivische Darstellung eines Teils der Verriegelungsvorrichtung aus Fig. 5;

- Fig. 6 -: eine perspektivische Darstellung einer ersten Abwandlung des Ausführungsbeispiels aus den Figuren 1 bis 5, in einem Zustand, in dem der Sitz mit hochgeklappter Rückenlehne in seiner Memory-Position verriegelt ist;
- Fig. 6a-: eine Rückansicht der Darstellung aus Fig. 6;
- Fig. 7 -: eine Darstellung gemäß Fig. 6 in einem Zustand, in dem die Rückenlehne nach vorne geklappt ist, um den Sitz mit vorgeklappter Rückenlehne verschieben zu können;
- Fig. 8 -: eine Darstellung gemäß Fig. 6 in einem Zustand, in dem bei hochgeklappter Rückenlehne in der Memory-Position ein Betätigungshebel betätigt wurde, um die Memory-Position neu einzustellen;
- Fig. 9 -: eine Darstellung gemäß Fig. 6 in einem Zustand, in dem die Memory-Position des Sitzes mit hochgeklappter Rückenlehne angefahren wird;
- Fig. 10 -: eine Darstellung gemäß Fig. 6 in einem Zustand, in dem die Memory-Position des Sitzes mit hochgeklappter Rückenlehne erreicht wird;
- Fig. 11a -: eine zweite Abwandlung des Ausführungsbeispiels aus den Figuren 1 bis 5 in einem Zustand, in dem der Sitz mit hochgeklappter Rückenlehne in der Memory-Position verriegelt ist;
- Fig. 11b -: eine Detailansicht der Darstellung aus Fig. 11a;
- Fig. 11c -: eine Rückansicht der Darstellung aus Fig. 11a ohne die Schienen der Sitzlängsführung;
- Fig. 11d -: eine Rückansicht der Darstellung aus Fig. 11a ohne die Schienen der Sitzlängsführung und ohne einen Gleiter der Memory-Vorrichtung;
- Fig. 12 -: eine Darstellung gemäß Fig. 11a in einem Zustand, in dem die Rückenlehne vorgeklappt ist, um den Sitz mit vorgeklappter Rückenlehne verschieben zu können;
- Fig. 13a -: eine Darstellung gemäß Fig. 11a in einem Zustand, in dem der Sitz mit vorgeklappter Rückenlehne aus der Memory-Position wegbewegt worden ist;
- Fig. 13b -: eine Detailansicht der Darstellung aus Fig. 13a ohne die Schienen der Sitzlängsführung;
- Fig. 13c -: eine Rückansicht der Darstellung aus Fig. 13a ohne die Schienen der Sitzlängsführung;
- Fig. 14 -: eine Darstellung gemäß Fig. 11a in einem Zustand, in dem die Feststellvorrichtung der Sitzlängsführung in der Memory-Position des Sitzes mittels eines Betätigungshebels entriegelt worden ist, um die Memory-Position neu einstellen zu können;
- Fig. 15a -: eine Darstellung gemäß Fig. 11a in einem Zustand, in dem die Memory-Position des Sitzes mit vorgeklappter Rückenlehne angefahren wird;
- Fig. 15b -: eine Detailansicht der Darstellung aus Fig. 15a ohne die Schienen der Sitzlängsführung;
- Fig. 15c -: eine Rückansicht der Darstellung aus Fig. 15a ohne die Schienen der Sitzlängsführung;
- Fig. 16 -: eine Darstellung gemäß Fig. 11a in einem Zustand, in dem der Sitz mit vorgeklappter Rückenlehne die Memory-Position erreicht;
- Fig. 17a -: eine Darstellung gemäß Fig. 11a in einem Zustand, in dem die Rückenlehne des Sitzes in einer Sitzlängsposition außerhalb der Memory-Position hochgeklappt worden ist;
- Fig. 17b -: eine Detailansicht der Darstellung aus Fig. 17a ohne die Schienen der Sitzlängsführung;
- Fig. 17c -: eine Rückansicht der Darstellung aus Fig. 17a ohne die Schienen der Sitzlängsführung;
- Fig. 18a -: eine Darstellung gemäß Fig. 11a in einem Zustand, in dem der Sitz mit hochgeklappter Rückenlehne die Memory-Position erreicht;
- Fig. 18b -: eine Detailansicht der Darstellung aus Fig. 18a;
- Fig. 18c -: eine Rückansicht der Darstellung aus Fig. 18a ohne die Schienen der Sitzlängsführung;
- Fig. 19 -: eine Darstellung gemäß Fig. 11a nach dem Erreichen der Sitzmemory-Position mit hochgeklappter Rückenlehne;
- Fig. 20 -: eine schematische Darstellung eines Sitzgestelles.

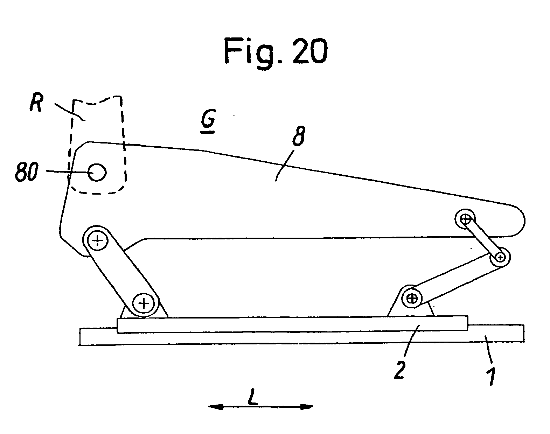

Das in Fig. 20 in einer Seitenansicht dargestellte Sitzgestell G (Sitzuntergestell) umfaßt eine Sitzschiene 2, die in Sitzlängsrichtung L beweglich auf einer an der Fahrzeugkarosserie zu befestigenden Unterschiene 1 lagert, und ein Sitzseitenteil 8, das über vordere und hintere Gelenkhebel höhenverstellbar an der Sitzschiene 2 angelenkt ist. Auf seiner anderen, in Fig. 20 nicht erkennbaren Längsseite weist das Sitzgestell G eine entsprechende Anordnung auf. Zwischen den beiden Sitzseitenteilen des Sitzgestelles G erstreckt sich eine Sitzfläche, die ein Sitzpolster aufnimmt, auf dem ein Fahrzeuginsasse Platz nehmen kann.

Ferner weisen die Seitenteile 8 des Sitzgestelles G jeweils eine Lagerstelle 80 zur schwenkbaren Lagerung einer in Fig. 20 gestrichelt angedeuteten Rückenlehne R auf.

In dieser Anmeldung werden als Teile des Sitzgestell jeweils alle diejenigen Bauteile verstanden, die auf der karosseriefesten Unterschiene 1 in Sitzlängsrichtung bewegbar sind, also insbesondere die Sitzschiene 2, das Sitzseitenteil 8 sowie die hiermit verbundenen weiteren Bauteile des Sitzes.

Wird ein derartiger in Längsrichtung L verstellbarer Fahrzeugsitz für ein zweitüriges Fahrzeug verwendet, so ist es bekannt, zur Erleichterung des Einstiegs in den Fond des Fahrzeugs die Lehne an die Sitzlängsverstellung zu koppeln und zwar derart, daß bei einem Vorklappen der Rückenlehne R in Richtung auf die sich zwischen den Sitzseitenteilen 8 erstreckende Sitzfläche eine der Sitzlängsführung 1, 2 zugeordnete Feststellvorrichtung entriegelt wird und der Sitz mit vorgeklappter Rückenlehne vorgeschoben werden kann. Es handelt sich hierbei um eine sogenannte Easy-Entry-Funktion.

Im folgenden wird eine erfindungsgemäße Ausgestaltung einer Easy-Entry-Funktion anhand dreier Ausführungsbeispiele erläutert, wobei zusätzlich eine Memory-Einrichtung vorgesehen ist, die nach dem Bewegen des Sitzes mit vorgeklappter Rückenlehne ein schnelles Wiederauffinden der vorherigen Sitzposition ermöglicht.

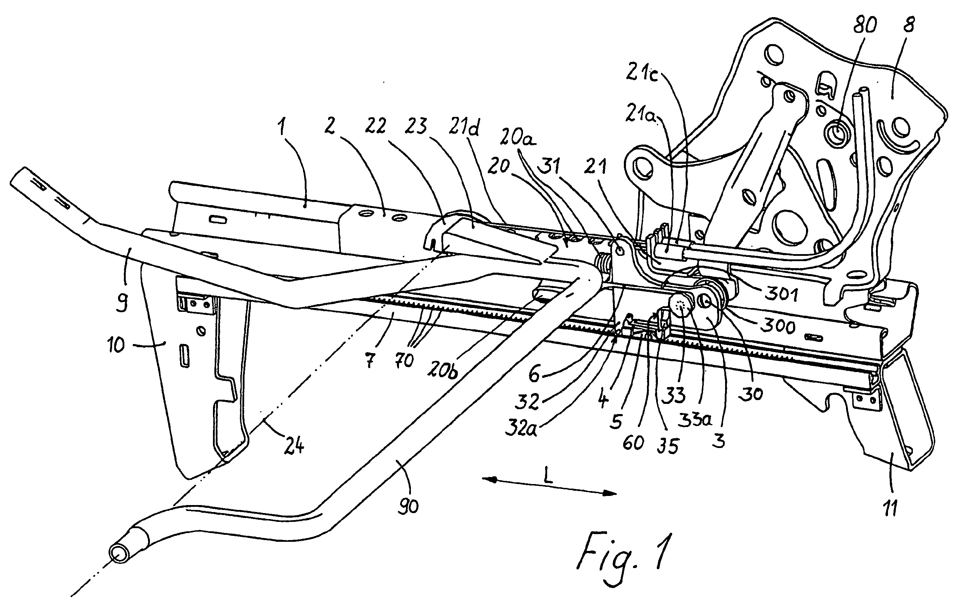

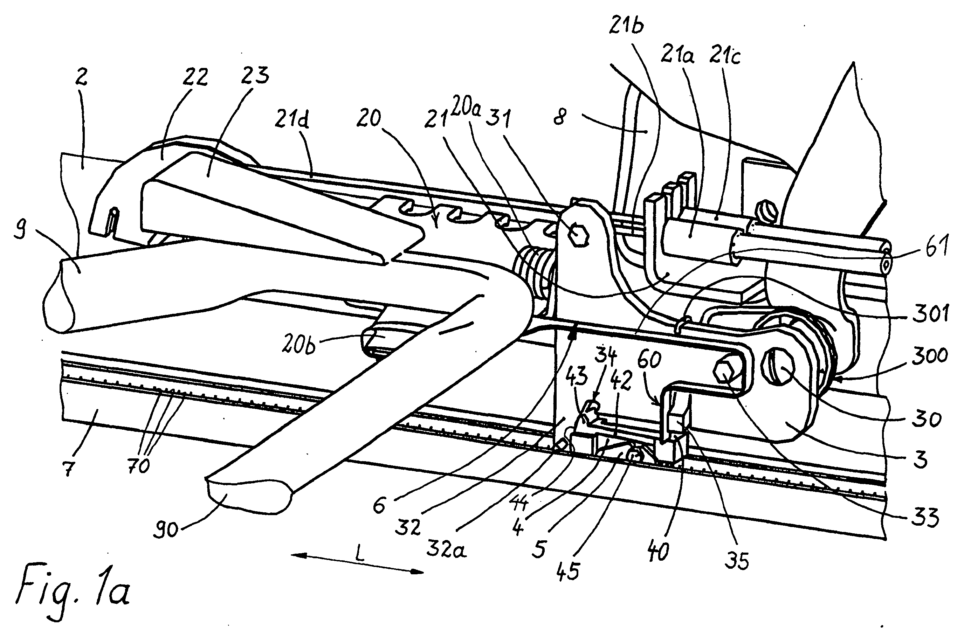

In den Figuren 1 und 1a ist ein Teil eines Sitzgestelles dargestellt, das über eine Sitzschiene 2 längsbeweglich auf einer Unterschiene 1 geführt ist, die wiederum über eine vordere Bodenbefestigung 10 und eine hintere Bodenbefestigung 11 an dem Boden einer Fahrzeugkarosserie befestigbar ist. Mit der Sitzschiene 2 ist ein Sitzseitenteil 8 verbunden, und zwar entweder direkt oder bei einem höhenverstellbaren Sitz über eine geeignete Gelenkhebelanordnung, das eine Lagerstelle 80 aufweist, an der eine Sitz- bzw. Rückenlehne schwenkbar gelagert werden kann, vergl. Fig. 20.

Durch eine Bewegung der Sitzschiene 2 bezüglich der karosserieseitigen Schiene 1 in Sitzlängsrichtung L kann die Lage des Sitzgestelles (von dem in den Figuren 1 und 1a neben der Sitzschiene 2 lediglich noch das Seitenteil 8 erkennbar ist) eingestellt werden (Einstellung der Sitzlängsposition) .

Zur Fixierung einer durch Verschiebung der Sitzschiene 2 bezüglich der karosserieseitigen Schiene 1 angefahrenen Sitzlängsposition dient eine Feststellvorrichtung 20, bei der es sich um eine übliche Feststellvorrichtung für eine Sitzlängsverstellung handeln kann. In den Figuren 1 und 1a sind das Gehäuse, ein schwenkbar gelagertes Betätigungselement 20b sowie eine auf das Betätigungselement 20b einwirkende Drehfeder einer bekannten Feststellvorrichtung 20 dargestellt, deren Gehäuse an der Sitzschiene 2 befestigt ist. Die Drehfeder dient u.a. der Herausnahme von Spiel aus der Anordnung, um Klappergeräusche zu verhindern.

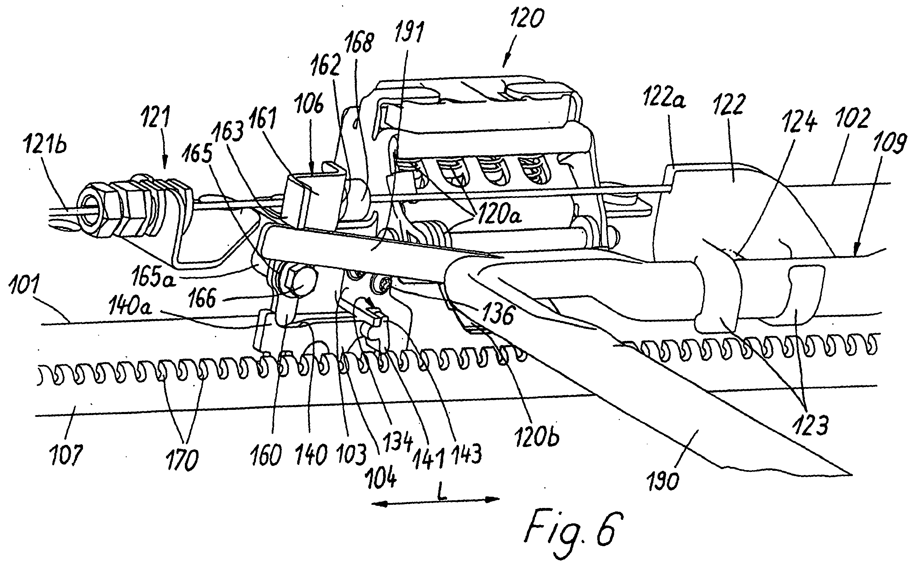

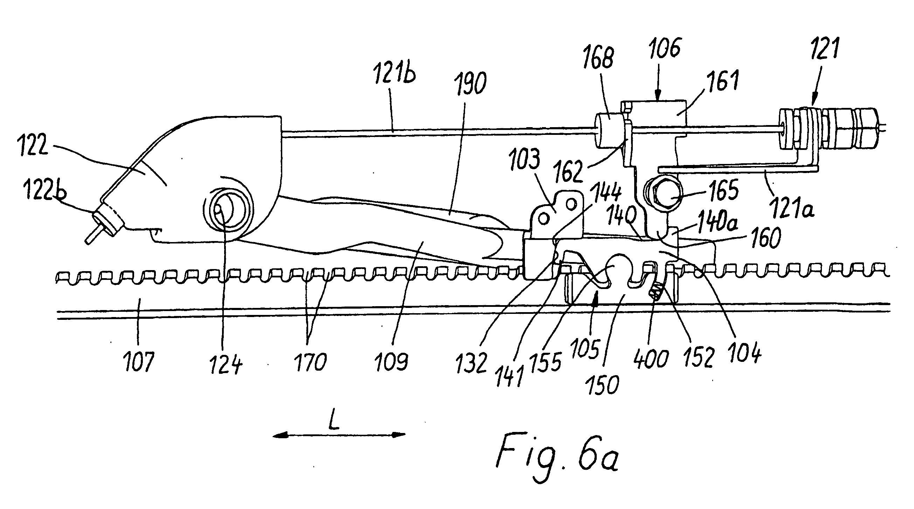

Diese Feststellvorrichtung 20 umfaßt beispielsweise gemäß der DE 299 10 720 U eine Mehrzahl innerhalb des Gehäuses angeordneter Sperrzähne (s. auch Fig. 6), die - mittels in dem Gehäuse gelagerter Federn in Form von Schraubenfedern - elastisch in Richtung auf eine an der karosserieseitigen Schiene 1 befestigte, in den Figuren 1 und 1a nicht erkennbare, Rasteinrichtung vorgespannt sind. Aufgrund der auf die Sperrzähne wirkenden Vorspannung rasten die der Sitzschiene 2 zugeordneten Sperrzähne automatisch in die karosseriefeste Rasteinrichtung ein, so daß die Sitzlängsverstellung arretiert ist, wenn nicht mittels des hierfür vorgesehenen Betätigungselementes 20b die Sperrzähne außer Eingriff mit der Rasteinrichtung gebracht sind.

Da das Betätigungselement 20b der Feststellvorrichtung 20 mittels der Federanordnung 20a, die aus den innerhalb des Gehäuses angeordneten, auf die Sperrzähne einwirkenden Federn sowie der außerhalb des Gehäuses angeordneten Drehfeder besteht, entgegen der Richtung vorgespannt ist, in die es zum Entriegeln der Feststellvorrichtung 20 verschwenkt werden muß, kann die Feststellvorrichtung 20 nur dann entriegelt werden, wenn auf deren Betätigungselement 20b eine Kraft entgegen der Wirkung der Federanordnung 20a ausgeübt wird. Hierzu ist in bekannter Weise ein schwenkbar gelagerter und ein Querrohr 90 aufweisender Betätigungshebel 9 vorgesehen, der von einem Sitzbenutzer mittels eines Griffes im Uhrzeigersinn verschwenkt werden kann und dabei derart auf das Betätigungselement 20b der Feststellvorrichtung 20 einwirkt, daß diese entriegelt wird.

In dem entriegelten Zustand der Feststellvorrichtung 20 kann die Sitzschiene 2 bezüglich der karosserieseitigen Schiene 1 verschoben werden. Sobald eine dem Sitzbenutzer angenehme Sitzlängsposition eingestellt ist, läßt dieser den Griff des Betätigungshebels 90 los und aufgrund der Vorspannkraft der Federanordnung 20a schwenken das Betätigungselement 20b der Feststellvorrichtung 20 sowie der Betätigungshebel 9 gemeinsam in eine Position zurück, in der die Feststellvorrichtung 20 verriegelt ist. Hierdurch wird die soeben eingestellte Sitzlängsposition sicher arretiert.

Gemäß den Figuren 1 und 1a kann das Betätigungselement 20b zum Entriegeln der Feststellvorrichtung 20 außerdem durch das Vorklappen der an dem Sitzseitenteil 8 schwenkbar gelagerten Rückenlehne in Richtung auf die Sitzfläche des Sitzes, vergl. Fig. 20, betätigt werden. Hierzu ist die in Fig. 1 nicht dargestellte Rückenlehne des Sitzes über einen Bowdenzug, dessen Bowden 21c sich an einer Bowdeneinhängung 21 abstützt und in dem ein Seil 21d geführt ist, mit einem Schwenkhebel 23 gekoppelt, der mit dem Betätigungshebel 9 verbunden ist. Hierzu ist ein Ende des in dem Bowden 21c geführten Seiles 21d in einem Getriebe 22 des Schwenkhebels 23 angeordnet, das eine auf das Seil 21b wirkende Zugkraft in eine Schwenkbewegung des Schwenkhebels 23 um eine Achse 24 umsetzt.

Der Bowdenzug 21c, 21d und das Getriebe 23 sind dabei derart ausgelegt, daß es bei einem Vorklappen der Rückenlehne zu einer Straffung des Seiles 21d kommt, die eine derartige Schwenkbewegung des Schwenkhebels 23 um seine Schwenkachse 24 verursacht, daß der Betätigungshebel 9 und hierüber das Betätigungselement 20b der Feststellvorrichtung 20 nach unten verschwenkt werden, wodurch die Feststellvorrichtung 20 entriegelt wird. Dies bedeutet, daß nach dem Vorklappen der Rückenlehne die Sitzschiene 2 bezüglich der karosserieseitigen Schiene 1 verschoben werden kann, um die Sitzlängsposition zu verändern. Hierdurch wird es insbesondere ermöglicht, das Einsteigen von Passagieren in den Fond eines zweitürigen Kraftfahrzeugs zu erleichtern, da bei einem Vorklappen der Rückenlehne eines Vordersitzes dieser zugleich auch nach vorne verschoben werden kann, so daß für einen einsteigenden Passagier hinter der Rückenlehne entsprechend mehr Raum zur Verfügung steht.

In dem in den Figuren 1 und 1a dargestellten Zustand ist jedoch weder das Seil 21d gespannt (also die Rückenlehne nicht vorgeklappt) noch der Betätigungshebel 9 mittels eines Griffes manuell betätigt worden, so daß die Feststellvorrichtung 20 verriegelt und die Sitzschiene 2 bezüglich der karosserieseitigen Schiene 1 fixiert ist.

Das in den Figuren 1 und 1a dargestellte Sitzgestell weist ferner eine Memory-Einrichtung 4, 5, 7 auf, mit der das Sitzgestell automatisch in einer vorgebbaren Sitzlängsposition (Memory-Position) angehalten werden kann, wenn es durch eine Verschiebung der Sitzschiene 2 bezüglich der karosserieseitigen Schiene 1 in Sitzlängsrichtung L nach hinten (in Richtung auf des hintere, rückenlehnenseitige Sitzende) bewegt wird. Die Memory-Einrichtung dient vorliegend vor allem dazu, nach dem Vorschieben des Sitzes mit vorgeklappter Rückenlehne zum Zwecke der Erleichterung des Einstiegs möglichst schnell wieder diejenige Sitzlängsposition auffinden zu können, in der sich der Sitz befand, bevor dessen Rückenlehne vorgeklappt und er nach vorne geschoben wurde.

Die Memory-Einrichtung umfaßt als wesentliche Bestandteile eine Verriegelungseinheit in Form einer Rastwippe bzw. Sperrklinke 4, einen Gleiter 5, an dem die Sperrklinke 4 schwenkbar gelagert ist, sowie eine Rastschiene 7, die mit der Sperrklinke 4 zusammenwirkt.

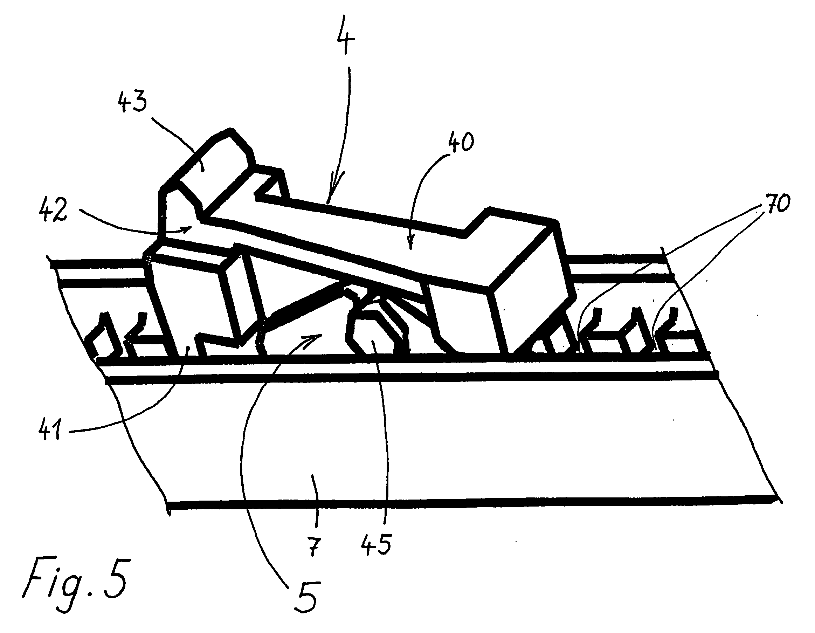

Die Rastschiene 7 ist an der karosserieseitigen Schiene 1 befestigt, erstreckt sich wie diese in Sitzlängsrichtung L und weist eine Vielzahl in dieser Richtung hintereinander angeordneter Rastöffnungen 70 auf. Neben den Rastöffnungen 70 ist der Gleiter 5 in Sitzlängsrichtung L beweglich geführt. Der Gleiter 5 weist gemäß Fig. 5a einen Grund-oder Führungskörper 50 auf, über den der Gleiter 5 längsbeweglich in einer Gleitbahn lagert, sowie einen an dem Grundkörper 50 angeformten Lagerbereich 51, der mit einer Lageröffnung 510 zur Aufnahme eines Lagerbolzens 45 der Sperrklinke 4 versehen ist, vergl. auch die Detaildarstellung in Fig . 5.

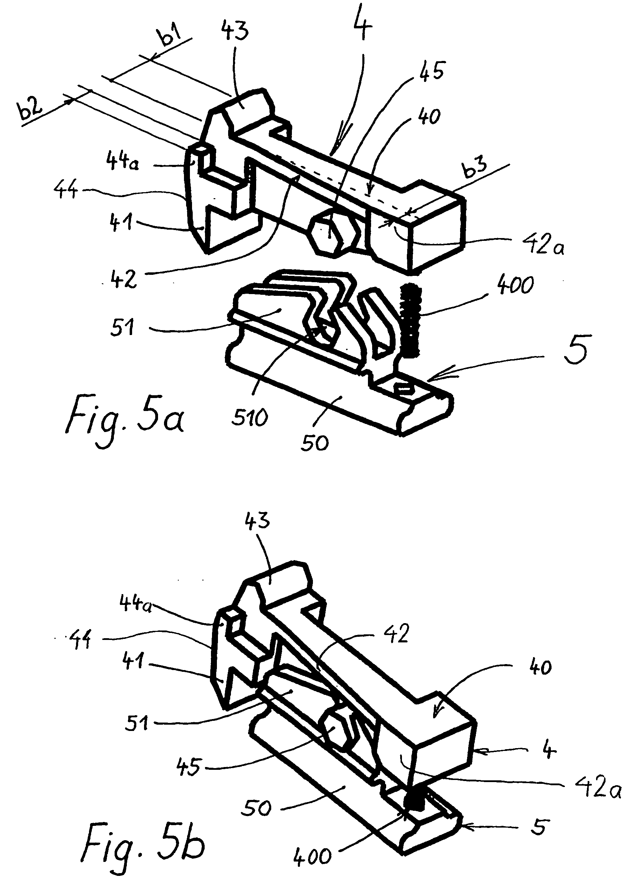

Die Sperrklinke 4 weist gemäß den Figuren 5a und 5b an einem Ende ein Rastelement in Form einer Rastnase bzw. eines Rasthakens 41 auf, der in die Rastöffnungen 70 der Rastschiene 7 eingreifen kann. An den Rasthaken 41 schließt sich nach oben hin ein Gegenanschlag 44 an, der mit einem sitzgestellseitigen Anschlagselement 3 (vgl. Fig. 1 und 1a) in Eingriff treten kann, um das Sitzgestell bei einer Sitzlängsverstellung mittels der Memory-Einrichtung in einer vorgebbaren Sitzlängsposition (Memory-Position) anzuhalten.

Zwischen dem Gleiter 5 und der Sperrklinke 4 ist an dem dem Rasthaken 41 abgewandten Ende der Sperrklinke 4 eine Druckfeder 400 angeordnet, mittels der die Sperrklinke 4 derart elastisch vorbelastet ist, daß deren Rasthaken 41 die Tendenz hat, in eine Rastöffnung 70 der Rastschiene 7 einzugreifen.

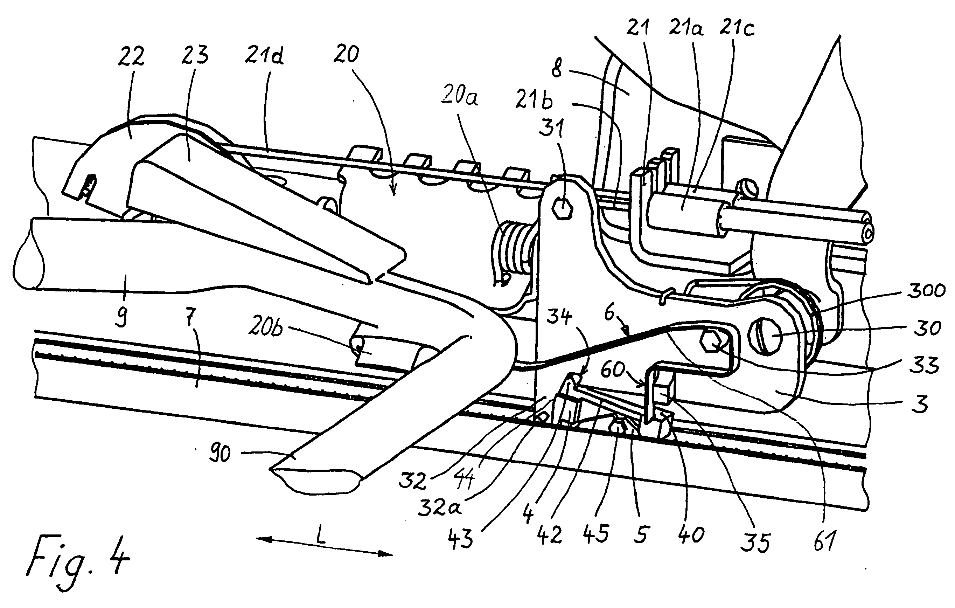

Die weiteren in den Figuren 5a und 5b erkennbaren Bestandteile der Sperrklinke 4 werden weiter unten im Zusammenhang mit den Figuren 1 bis 4 erläutert werden.

Das dem Gegenanschlag 44 der Memory-Einrichtung zugeordnete sitzgestellseitige Anschlagselement 3 ist an der Sitzschiene 2 um eine Achse 30 verschwenkbar angelenkt und mittels einer auf der Schwenkachse 30 gelagerten Drehfeder 300, deren eines Ende 301 einen Abschnitt des Anschlagselementes 3 übergreift, in Richtung auf die Sperrklinke 4 der Memory-Einrichtung vorgespannt. Das Anschlagselement 3 liegt dann mit einem Gleitanschlag 32a auf einer Gleitfläche der Rastschiene 7 auf.

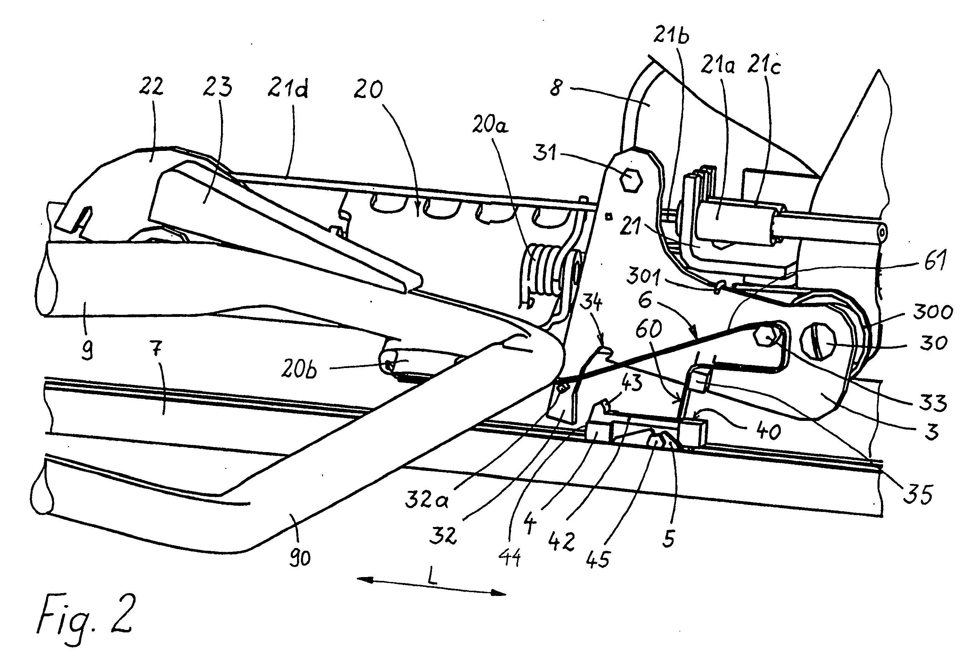

Andererseits ist das Anschlagselement 3 über einen Bowdenzug 21a, 21b, dessen Bowden 21a sich an der Bowdeneinhängung 21 abstützt und ein Seil 21b führt, mit der Rückenlehne des Sitzes gekoppelt. Das dem Anschlagselement 3 zugeordnete Ende des Seiles 21b ist dabei an einer von der Schwenkachse 30 beabstandeten Seileinhängung 31 des Anschlagselementes 3 befestigt. Bei einem Vorklappen der Rückenlehne wird das Seil 21b derart gestrafft, daß das Anschlagselement 3 im Uhrzeigersinn um die Achse 30 schwenkt, und zwar derart, daß es mit seinem unteren Ende von der Sperrklinke 4 wegbewegt wird, vergl. Fig. 2.

Der am unteren Ende des Anschlagselementes 3 vorgesehene Anschlag 32 ist jedoch derart ausgebildet, daß er sowohl bei hochgeklappter Rückenlehne (vergl. Figuren 1 und 1a) als auch bei vorgeklappter Rückenlehne (vergl. Fig. 2) mit dem Gegenanschlag 44 der Memory-Vorrichtung 4 in Eingriff treten kann, wodurch eine Bewegung der Sitzschiene 2 bezüglich der karosserieseitigen Schiene 1 angehalten wird. Die Kopplung des als Anschlaghaken ausgebildeten Anschlagselementes 3 mit der Rückenlehne über den Bowdenzug 21a, 21b ist daher nicht für die Memory-Funktion als solche von Bedeutung, sondern vielmehr hinsichtlich der Möglichkeit, die Memory-Position durch ein Verschieben der Sperrklinke 4 und insbesondere des an der Sperrklinke ausgebildeten Gegenanschlages 44 zu verstellen.

In dieser Hinsicht ist zum einen zu beachten, daß ein an der Sperrklinke 4 angeformter, nach oben abstehender Mitnehmer 43 in Form eines Vorsprunges nur dann mit einem zugeordneten Eingriffsbereich 34 in Form einer Ausnehmung des Anschlagselementes 3 in Eingriff steht, wenn die Rückenlehne hochgeklappt ist, also das Anschlagselement nicht mittels des Bowdenzuges 21a, 21b aus seiner durch die Vorspannung der Drehfeder 300 eingestellten Normalposition verschwenkt ist. Nur in diesem Zustand kann daher die Sperrklinke 4 bei einer Bewegung der Sitzschiene 2 entlang beider Richtungen in Sitzlängsrichtung L mitgenommen werden, da dann das Sitzgestell über den Eingriffsbereich 34 des Anschlagselementes 3 und den Mitnehmer 43 mit der Sperrklinke 4 formschlüssig in Verbindung steht.

Zum anderen kann eine zum Schalten der Sperrklinke 4 vorgesehene Schaltfeder 6 in Form einer Formfeder nur dann über einen Betätigungsabschnitt in Form Betätigungsfläche 40 der Sperrklinke 4 auf diese einwirken, wenn die Rückenlehne nicht vorgeklappt ist, sich das Anschlagselement 3 also in seiner Normalposition gemäß Fig. 1a befindet.

Wesentliche Bestandteile der Schaltfeder 6 sind deren oberer Schenkel 61, der im wesentlichen parallel zu der Sitzlängsführung 1, 2 verläuft und den Betätigungshebel 9 untergreift, sowie ein im wesentlichen senkrecht zu dem oberen Schenkel 61 verlaufendes freies Ende 60 der Schaltfeder 6, das auf die Betätigungsfläche 40 der Rastwippe 4 einwirken kann.

Das Schalten mittels der Schaltfeder 6 erfolgt durch Verschwenken des Betätigungshebels 9 im Uhrzeigersinn nach unten (und zwar entweder manuell über einen Betätigungsgriff oder durch Vorklappen der Rückenlehne über den Bowdenzug 21c, 21d und den Schwenkhebel 23), wodurch der Betätigungshebel 9 derart auf den oberen Schenkel 61 der Schaltfeder 6 einwirkt, daß das freie Ende 60 der Schaltfeder 6 gegen die Betätigungsfläche 40 der Sperrklinke 4 drückt. Da die Betätigungsfläche 40 an dem dem Rasthaken 41 (vergl. Figuren 5a und 5b) gegenüberliegenden Ende der Sperrklinke 4 ausgebildet ist, wird hierdurch der Rasthaken entgegen der Vorspannung der Druckfeder 400 aus den Rastöffnungen 70 der Rastschiene 7 ausgehoben. (Hierzu ist es erforderlich, daß das durch das freie Ende 60 auf die Betätigungsfläche 40 ausgeübte Moment größer ist als das durch die Vorspannung der Druckfeder 400 hervorgerufene Drehmoment.) Die Sperrklinke 4 kann dann auf dem Gleiter 5 in Sitzlängsrichtung L bewegt werden, insbesondere gemeinsam mit dem Sitzuntergestell verstellt werden, wenn der Mitnehmer 43 der Sperrklinke 4 in den Eingriffsbereich 34 des Anschlagselementes 3 eingreift.

Die Umsetzung der Einwirkung des Betätigungshebels 9 auf den oberen Schenkel 61 der Schaltfeder 6 in eine Bewegung des unteren freien Endes 60 der Schaltfeder 6 in Richtung auf die Betätigungsfläche 40 der Sperrklinke 4 wird durch zwei Anschlagszapfen 33, 35 des Anschlagselementes 3 ermöglicht, die in geeigneter Weise mit der Schaltfeder 6 zusammenwirken, so daß diese in dem von dem oberen Schenkel 61 abgewinkelten Endabschnitt teilweise gekrümmt (annähernd Z-förmig) verläuft und dabei in das untere freie Ende 60 übergeht.

Als Verbindung zwischen dem Betätigungshebel 9 und der Schaltfeder 6 bzw. deren oberem Schenkel 61 kann eine direkte Verbindung in Form einer Schraub-, Niet-, Schweiß-oder Klebeverbindung vorgesehen sein. Alternativ kann aber auch eine indirekte Verbindung über weitere dem Sitzgestell zugeordnete Teile vorgesehen sein.

In Fig. 1 ist zusätzlich noch eine Positioniersicherung 33a erkennbar, die auf einem Anschlagszapfen 33 des Anschlagselementes 3 angeordnet ist und die ein seitliches Herunterrutschen der Schaltfeder 6 von den Anschlagszapfen 33, 35 verhindern soll.

In einer Abwandlung des in den Figuren 1 und 1a dargestellten Ausführungsbeispiels könnten die Anschlagszapfen 33, 35 in jeweils einer Kulisse verschieblich gelagert sein und von dem Bowdenzug 21a, 21b unmittelbar bewegt werden.

Abschließend sei noch einmal darauf hingewiesen, daß sich das Sitzgestell in dem in den Figuren 1 und 1a dargestellten Zustand in seiner üblichen Funktionsposition befindet, in der ein Passagier auf dem Fahrzeugsitz Platz nehmen kann. Dabei ist die Rückenlehne hochgeklappt bzw. zumindest nicht in Richtung auf die Sitzfläche vorgeklappt, so daß weder das Anschlagselement 3 noch der Betätigungshebel 9 durch eine Straffung der Bowdenzüge 21a, 21b bzw. 21c, 21d verschwenkt wurden. Das Sitzgestell befindet sich zudem in seiner Memory-Position, so daß das Anschlagselement 3 mit der Sperrklinke 4 einerseits über den Anschlag 32 und den zugeordneten Gegenanschlag 44 und andererseits über den Eingriffsbereich 34 und den zugeordneten Mitnehmer 43 in Verbindung steht. Da zudem der Betätigungshebel 9 auch nicht über seinen Betätigungsgriff manuell betätigt worden ist, sind sowohl die Feststellvorrichtung 20 der Sitzlängsführung 1, 2 als auch die Sperrklinke 4 jeweils verriegelt, so daß keine Bewegung des Sitzgestelles oder der sperrklinke erfolgen kann.

Wird nun in diesem Zustand, in dem das Sitzgestell in der Memory-Position arretiert ist, die Rückenlehne des Sitzes nach vorne in Richtung auf dessen Sitzfläche geklappt, so werden die Seile 21b, 21d der beiden Bowdenzüge 21a, 21b bzw. 21c, 21d gestrafft, so daß sowohl das Anschlagselement 3 als auch der Schwenkhebel 23 jeweils im Uhrzeigersinn um ihre jeweilige Schwenkachse 24 (vergl. Fig. 1a) verschwenkt werden.

Die Schwenkbewegung des Anschlagselementes 3 hat dabei zum einen zur Folge, daß der Eingriffsbereich 34 des Anschlagselementes 3 von dem Mitnehmer 43 der Sperrklinke 4 abgehoben wird. Zum anderen werden die beiden Anschlagszapfen 33, 35 des Anschlagselementes 3 nach oben bewegt, so daß sie in vertikaler Richtung auf den oberen Schenkel 61 bzw. auf einen an das freie Ende 60 angrenzenden Federabschnitt einwirken. Die Anschlagszapfen 33, 35 dienen als Sperrmittel, die derart auf die Schaltfeder 6 einwirken, daß deren freies Ende 60 daran gehindert wird, einen Druck in vertikaler Richtung nach unten auf die zugeordnete Betätigungsfläche 40 der Sperrklinke 4 auszuüben, um deren Rasthaken 41 aus der Rastschiene 7 auszuheben. Diese Sperrwirkung tritt nicht auf, wenn sich die Rückenlehne in ihrer Funktionsposition befindet (also nicht vorgeklappt ist), da dann beide Anschlagszapfen 33, 35 in vertikaler Richtung hinreichend von der Schaltfeder 6 beabstandet sind.

Die Schwenkbewegung des Schwenkhebels 23 im Uhrzeigersinn bewirkt eine entsprechende Schwenkbewegung des Betätigungshebels 9, der wiederum einerseits auf das Betätigungselement 20b der Feststellvorrichtung 20 und andererseits auf den oberen Schenkel 61 der Schaltfeder 6 einwirkt. Die Betätigung der Schaltfeder 6 bleibt dabei ohne Wirkung, da deren freies Ende 60 durch die Anschlagszapfen 33, 35 daran gehindert ist, auf die Betätigungsfläche 40 der Sperrklinke 4 zu drücken.

Die Einwirkung des Betätigungshebels 9 auf das Betätigungselement 20b der Feststellvorrichtung 20 bewirkt demgegenüber, daß diese entriegelt wird und nunmehr das Sitzgestell auf der karosseriefesten Schiene 1 nach vorne (d.h. in Richtung auf die vordere Bodenbefestigung 10) verschoben werden kann. Eine Verschiebung des Sitzgestells in die entgegengesetzte Richtung, nach hinten, ist demgegenüber nicht möglich, da eine solche Bewegung durch den Anschlag 32 des Anschlagselementes 3 und den zugeordneten Gegenanschlag 44 der Sperrklinke 4 blockiert würde.

Die vorbeschriebene und in Fig. 2 dargestellte Kopplung zwischen der Rückenlehne und der Feststellvorrichtung 20, die bei einem Vorklappen der Rückenlehne zu einer Entriegelung der Feststellvorrichtung 20 führt, ist die Grundlage der sogenannten Easy-Entry-Funktion, die ein einfaches Verschieben eines Sitzes nach vorne bei vorgeklappter Rückenlehne gestattet, um den Einstieg eines Passagiers in den Fond eines Kraftfahrzeugs zu erleichtern. Hierbei wird die durch die Position der Sperrklinke 4 definierte Memory-Position nicht verändert, da der Rasthaken der Sperrklinke 4 nach wie vor in die Rastschiene 2 eingreift und zudem der Mitnehmer 43 der Sperrklinke 4 nicht mit dem zugeordneten Eingriffsbereich 34 des Anschlagselementes 3 in Verbindung steht.

Wird der Sitz nach dem Einsteigen des Passagiers oder der Passiere in den Fond des Kraftfahrzeugs mit vorgeklappter Lehne (oder auch mit hochgeklappter Lehne) wieder nach hinten verschoben, so wird das Sitzgestell automatisch in der Memory-Position wieder angehalten, da das Zusammenwirken des Anschlags 32 des Anschlagselementes 3 mit dem zugeordneten Gegenanschlag 44 der Sperrklinke 4 eine weitere Bewegung des Sitzuntergestelles relativ zu der karosseriefesten Schiene 1 (an der die Sperrklinke 4 über die Rastschiene 7 verriegelt ist) verhindert. Auf diese Weise kann also nach dem Ausüben der Easy-Entry-Funktion sehr schnell wieder die vorherige Sitzposition aufgefunden und eingestellt werden.

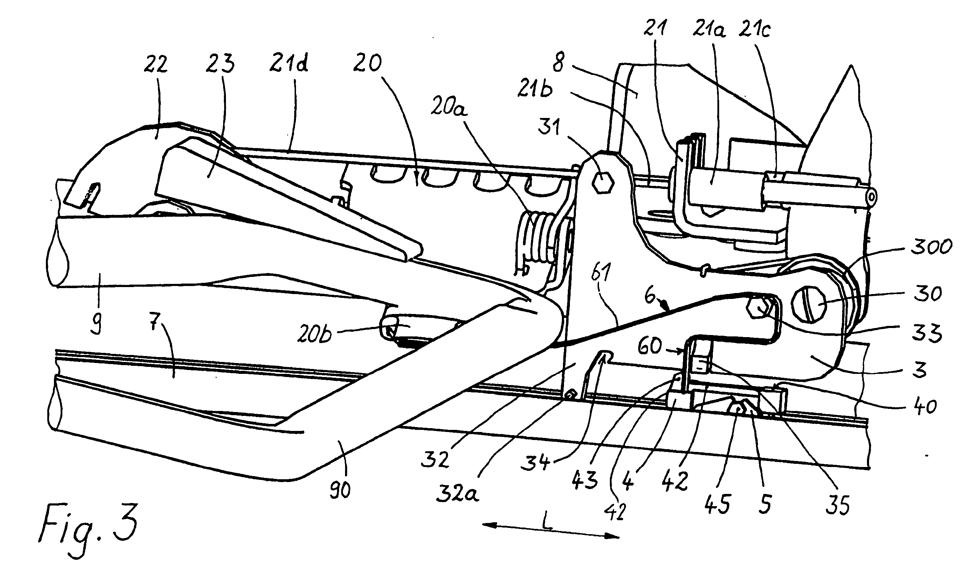

Fig. 3 zeigt das Sitzgestell in einem Zustand, in dem es bezüglich der karosseriefesten Schiene in Sitzlängsrichtung L nach vorne (d.h. in Richtung auf die vordere Bodenbefestigung 10 gemäß Fig. 1) verschoben ist. Die Lehne ist hierbei nicht vorgeklappt, sondern befindet sich in ihrer Funktionsposition, so daß das Anschlagselement 3 nicht verschwenkt ist.

Gleichzeitig ist jedoch der Betätigungshebel 9 über einen Betätigungsgriff manuell betätigt, so daß er sowohl auf das Betätigungselement 20b der Feststellvorrichtung 20 einwirkt als auch auf den oberen Schenkel 61 der Schaltfeder 6. Hierdurch ist die Feststellvorrichtung 20 entriegelt, wohingegen die Schaltfeder 6 (deren freies Ende 60 aufgrund der Einwirkung des Betätigungshebels 9 auf den oberen Federschenkel 61 vertikal nach unten verschoben ist) den Zustand der Sperrklinke 4 der Memory-Einrichtung nicht beeinflußt. Denn da sich das Sitzgestell nicht in seiner Memory-Position befindet, kann das freie Ende 60 der Schaltfeder 6 nicht auf die zugeordnete Betätigungsfläche 40 der Sperrklinke 4 einwirken.

In diesem Zustand, in dem die Feststellvorrichtung 20 entriegelt ist, kann das Sitzgestell nun wahlweise nach vorne oder nach hinten verschoben werden, wobei die Memory-Position wiederum nicht beeinflußt wird. Die mögliche Verschiebung des Sitzgestells nach hinten (d.h., in Richtung auf die hintere Bodenbefestigung 11 gemäß Fig. 1) ist dabei dadurch begrenzt, daß der Anschlag 32 des Anschlagselementes 3 schließlich mit dem Gegenanschlag 44 der Sperrklinke 4 in Kontakt tritt. Hierdurch wird eine weitere Bewegung des Sitzgestelles nach hinten blockiert.

Wird in dem in Fig. 3 gezeigten Zustand, in dem sich der Sitz mit hochgeklappter Rückenlehne außerhalb der Memory-Position befindet (nämlich nach vorne verschoben worden ist), der Betätigungshebel 9 losgelassen, so schwenken aufgrund der Wirkung der Federanordnung 20a der Feststellvorrichtung 20 deren Betätigungselement 20b sowie der Betätigungshebel 9 wieder in ihre Ausgangsstellung. Hierbei wird die Feststellvorrichtung 20 verriegelt, so daß das Sitzgestell in der entsprechenden Sitzlängsposition bezüglich der karosserieseitigen Schiene arretiert ist. Diese Möglichkeit, das Sitzgestell außerhalb der Memory-Position zu arretieren, besteht deshalb, weil bei hochgeklappter Rückenlehne die Kopplungsmittel (Bowdenzug 21c, 21d), über die die Feststellvorrichtung 20 an die Rückenlehne gekoppelt ist, in einen Zustand gebracht sind (Das Seil 21d des Bowdenzuges 21c, 21d ist nicht mehr gestrafft.), in dem sie einer Verriegelung der Feststellvorrichtung 20 nicht entgegenstehen.

Auf dem letzten Teilstück des Verstellweges des Sitzgestelles nach hinten wird das freie Ende 60 der Schaltfeder 6 an einer im spitzen Winkel zur Sitzlängrichtung L verlaufenden Schrägführung 42 der Sperrklinke 4 derart geführt, daß es nicht auf die Betätigungsfläche 40 der Sperrklinke 4 einwirken kann. Diese Schrägführung 42 der Sperrklinke 4 ist anhand der Detaildarstellung in Fig. 5a genau erkennbar. Selbstverständlich kann die Schrägführung 42 auch durch andere, z.B. verschieb- oder verschwenkbare Mittel ersetzt werden, die die Einwirkung des freien Endes 60 der Schaltfeder 6 auf die Betätigungsfläche 40 der Sperrklinke 4 verhindern sollen.

Damit das freie Ende 60 der Schaltfeder 6 (vergl. Fig. 3) entlang der Schrägführung 42 geführt werden kann, wenn sich das Sitzgestell nach hinten in Richtung auf die Memory-Position bewegt, muß das freie Ende 60 der Schaltfeder 6 derart ausgebildet sein, daß es nur einen Teil der gesamten Breite b1 + b2 (Ausdehnung quer zur Sitzlängsrichtung) der Sperrklinke 4 überdeckt, und zwar maximal nur einen solchen Teil der Breite b1 + b2, der der Breite b2 eines Freischnittes am vorderen Ende der Sperrklinke 4 entspricht. An diesen Freischnitt der Breite b2 am vorderen Ende der Sperrklinke 4 schließt sich die Schrägführung 42 an, die derart schräg zur Sitzlängsrichtung verläuft, daß die Breite der Sperrklinke 4 im Bereich der Schrägführung 42 nach hinten hin zunimmt, und zwar um einen Wert b3, der in etwa der Breite b2 des Freischnittes am vorderen (rasthaken- bzw. anschlagsseitigen) Ende entspricht.

In einer bevorzugten Ausführungsform ragt in den Freischnitt der Sperrklinke 4 oberhalb des Rasthakens 41 ein Anschlag 44a hinein, der mit dem freien Ende 60 der Schaltfeder 6 in Eingriff treten kann, wenn die Sperrklinke 4 wegen des Aufliegens des Rasthakens 41 zwischen zwei Rastöffnungen 70 der Rastschiene 7 nicht vollständig in ihre Rastposition schwenken konnte und der Sitz mit vorgklappter Rückenlehne nach vorne verschoben wird.

Bei Erreichen der Memory-Position stützt sich das freie Ende 60 der Schaltfeder 6 dann seitlich (d.h. horizontal und quer zur Sitzlängsrichtung) an einem an die Schrägführung 42 anschließenden Endabschnitt 42a der Sperrklinke 4 ab. Hierdurch gerät das freie Ende 60 der Schaltfeder 6 auch bei Erreichen der Memory-Position des Sitzgestells nicht in Kontakt mit der Betätigungsfläche 40 am hinteren Ende der Sperrklinke 4, sondern liegt zunächst weiterhin an dem daran anschließenden seitlichen Abschnitt 42a der Sperrklinke 4 an und stützt sich an diesem ab. Das freie Ende 60 der Schaltfeder 6 kann dabei deswegen nicht auf die Betätigungsfläche 40 der Sperrklinke 4 springen, da das freie Ende 60 nach unten vorbelastet ist, solange der Betätigungshebel 9 auf den oberen Schenkel 61 der Schaltfeder 6 einwirkt, d.h. solange der Betätigungshebel 6 manuell im Uhrzeigersinn verschwenkt ist.

Wird nach Erreichen der Memory-Position von dem Sitzbenutzer der Betätigungshebel 9 wieder losgelassen, so schwenken aufgrund der Wirkung der Federanordnung 20a der Feststellvorrichtung 20 deren Betätigungselement 20b sowie der Betätigungshebel 9 wieder in ihre Ausgangsstellung. Hierbei wird zum einen die Feststellvorrichtung 20 verriegelt, und zum anderen das freie Ende 60 der Schaltfeder 6 freigegeben, so daß es auf die Betätigungsfläche 40 der Rastwippe 4 springt.

Wird nun in der Memory-Position des Sitzgestelles der Betätigungshebel 9 erneut mittels eines Betätigungsgriffes manuell (im Uhrzeigersinn) verschwenkt, so wird nicht nur die Feststellvorrichtung 20 entriegelt, sondern gleichzeitig drückt auch das freie Ende 60 der Schaltfeder 6 vertikal auf die Betätigungsfläche 40 der Sperrklinke 4. Dies bewirkt, daß der Rasthaken 41 der Sperrklinke 4 (vergl. Fig. 5) aus den Rastöffnungen 70 der Rastschiene 7 ausgehoben wird und die Sperrklinke 4 nicht mehr bezüglich der Rastschiene 7 verriegelt ist und daß der Mitnehmer 43 in den Eingriffsbereich 34 des Anschlagselementes 3 eingreift.

Wird dann bei entriegelter Feststellvorrichtung 20 das Sitzgestell bezüglich der karosseriebodenfesten Schiene 1 in Sitzlängsrichtung nach vorne oder nach hinten - bewegt, so wird hierbei die Sperrklinke 4 automatisch mitgenommen. Die Kraftübertragung von dem Sitzuntergestell auf die Sperrklinke 4 erfolgt dabei über den Eingriffsbereich 34 des Anschlagselementes 3, in den der Mitnehmer 43 der Sperrklinke 4 eingreift. Der Formschluß zwischen dem Mitnehmer 43 und dem Eingriffsbereich 34 wurde dabei hergestellt durch das Verschwenken der Sperrklinke 4 unter der Wirkung des freien Endes 60 der Schaltfeder 6.

Ist die Verstellbewegung des Sitzgestelles beendet und wird daher der Betätigungsgriff des Betätigungshebels 9 losgelassen, so schwenken das Betätigungselement 20b und der Betätigungshebel 9 unter der Wirkung der Federanordnung 20a der Feststellvorrichtung 2 wieder in ihre Ausgangsstellung zurück. Hierdurch wird zum einen die Feststellvorrichtung 20 wieder verriegelt, so daß die Sitzlängsführung arretiert ist, und zum anderen drückt das freie Ende 60 der Schaltfeder 6 nicht mehr auf den Betätigungsabschnitt 40 der Sperrklinke 4. Diese geht daher unter der Wirkung der Druckfeder 400 wieder in ihre verriegelte Position über, in der der Rasthaken 41 (vergl. Fig. 5) in eine Rastöffnung 70 der Rastschiene 7 eingreift.

Somit befindet sich der Sitz dann wieder in der in Fig. 1 sowie Fig. 1a dargestellten Funktionsposition mit verriegelter Feststellvorrichtung und verriegelter Memory-Vorrichtung in der Memory-Position.

Es wird nun anhand der Figuren 6 bis 10 ein weiteres Ausführungsbeispiel der Erfindung beschrieben, wobei solche Funktionsgruppen des Sitzgestelles, die mit den anhand der Fig. 1 bis 5 Erläuterten übereinstimmen, nicht näher diskutiert werden. Die Zuordnung zwischen einander entsprechenden Funktionsgruppen der Figuren 1 bis 5 einerseits und der Figuren 6 bis 10 andererseits soll hierbei dadurch erleichtert werden, daß in den Figuren 6 bis 10 jeweils die entsprechenden Bezugszeichen aus den Figuren 1 bis 5 erhöht um die Zahl 100 verwendet werden.

Ein erwähnenswerter Unterschied zwischen den Figuren 1 bis 5 einerseits und den Figuren 6 bis 10 andererseits besteht zunächst darin, daß in den Figuren 1 bis 5 ein Fahrersitz dargestellt ist, während es sich bei den Figuren 6 bis 10 um Darstellungen von Teilen eines Beifahrersitzes handelt. Dementsprechend entspricht in den Vorderansichten gemäß den Figuren 6 bis 10 der rechte Seitenrand des Blattes jeweils dem vorderen Teil des Sitzes und der linke Seitenrand des Blattes dem hinteren Teil des Sitzes.

In der perspektivischen Vorderansicht gemäß Fig. 6 sowie der zugehörigen Rückansicht gemäß Fig. 6a sind eine karosseriefeste Schiene 101 und eine daran in Sitzlängsrichtung L beweglich geführte Sitzschiene 102 dargestellt, wobei an der karosseriefesten Schiene 101 eine Rastschiene 107 mit einer Vielzahl in Sitzlängsrichtung L hintereinander angeordneter Rastöffnungen 170 befestigt ist. Die Sitzschiene 102 trägt die übrigen Komponenten des Sitzgestelles, vergl. Fig. 20.

Die Sitzschiene 102 ist bezüglich der karosseriefesten Schiene 101 mittels einer Feststellvorrichtung 120 arretierbar, die in ihrem Aufbau der anhand Figur 1 erläuterten Feststellvorrichtung 20 entspricht. Diese ist über ein schwenkbares Betätigungselement 120b entriegelbar, das durch eine Federanordnung 120a entgegen der Richtung federnd vorbelastet ist, entlang der es zum Entriegeln der Feststellvorrichtung 120 verschwenkt werden muß.

Zum Entriegeln der Feststellvorrichtung 120 kann das Betätigungselement 120b einerseits von einem Sitzbenutzer unmittelbar dadurch betätigt werden, daß dieser einen am Sitzgestell schwenkbar angelenkten, ein Querrohr 190 aufweisenden Betätigungshebel 109 an einem hierfür vorgesehenen (in den Figuren 6 und 6a nicht erkennbaren) Betätigungsgriff 190 ergreift und diesen entgegen dem Uhrzeigersinn verschwenkt, wodurch sich das Betätigungselement 120b entgegen der Vorspannung der Federanordnung 120a nach unten bewegt. Zum anderen kann die Feststellvorrichtung 120 auch durch Vorklappen der Sitzlehne entriegelt werden, wozu die Sitzlehne über einen Bowdenzug, der ein Seil 121b aufweist und dessen (nicht dargestellter) Bowden sich an einer Bowdenabstützung 121 abstützt, mit dem Betätigungshebel 109 gekoppelt ist. Ferner ist auf der Schwenkachse des Betätigungshebels 109 mittels eines Achsstummels 124 ein Getriebeteil 122 gelagert, das eine Führung 122a sowie eine Einhängung 122b für das Seil 121b des Bowdenzugs aufweist. Dieses Getriebeteil 122 setzt eine Straffung des Seiles 121b bei einem Vorklappen der Rückenlehne in eine Schwenkbewegung um, die wiederum durch zwei Arme 123 des Getriebes, welche den Betätigungshebel 109 umgreifen, auf diesen übertragen wird. Hierdurch verschwenkt der Betätigungshebel 109 bei einem Vorklappen der Rückenlehne im Uhrzeigersinn und entriegelt über das Betätigungselement 120b die Feststellvorrichtung 120.

Auf dem Seil 121b des Bowdenzugs ist zudem zwischen der Bowdenabstützung 121, die mittels eines Befestigungsbleches 121a an der Sitzschiene befestigt ist, und dem Getriebe 122 ein Seilnippel 168 befestigt, z.B. durch Verquetschen. Dem Seilnippel 168 ist ein Schaltelement in Form eines Schalthebels 106 zugeordnet, das mittels einer Lagerbuchse 165, eines Stufenbolzens 165a sowie einer Schraube 166 um eine durch die Längsachse des Stufenbolzens 165a gebildete Achse verschwenkbar gelagert und gleichzeitig an dem Sitzgestell bzw. dessen Sitzschiene 102 befestigt ist. Der Schalthebel 106 weist in einem oberen Abschnitt 161 einen Anschlag 162 auf, der unmittelbar neben dem Seilnippel 168 angeordnet ist und auf den der Seilnippel 168 in Sitzlängsrichtung einwirken kann, wodurch der Schalthebel 106 verschwenkt wird.

Der unterhalb der Lagerbuchse 165 sowie des Stufenbolzens 165a angeordnete zweite Endabschnitt des Schalthebels 106 bildet einen Betätigungsabschnitt 160, dem ein Betätigungsabschnitt einer Sperrklinke 104 der Memory-Einrichtung zugeordnet ist. Der Betätigungsabschnitt der Sperrklinke 104 wird dabei durch eine Betätigungsfläche 140 auf der Oberseite der Sperrklinke gebildet.

Der Schalthebel 106 ist vorliegend durch einen Fortsatz 191 des Betätigungshebels 109, auf dem sich der obere Abschnitt 161 des Schalthebels 106 mit einem Anschlag 163 vertikal (quer zur Sitzlängsrichtung L) abstützt, in der in den Figuren 6 und 6a gezeigten Position arretiert, in der dessen Betätigungsabschnitt 160 auf die Betätigungsfläche 140 der Sperrklinke 104 einwirkt. Das hierfür erforderliche Moment wird durch die Federanordnung 120a der Feststellvorrichtung 120 aufgebracht, die über das Betätigungselement 120b sowie den Betätigungshebel 109 auf den Hebelfortsatz 191 wirkt.

Alternativ oder zusätzlich kann die senkrechte Stellung des Schalthebels 106 auch durch eine unmittelbar dem Schalthebel 106 angeordnete Feder oder dadurch unterstützt werden, daß der Schalthebel 106 mit hinreichend Reibung gelagert ist, die durch die Wirkung der Druckfeder 400 der Sperrklinke 104 nicht überwunden werden kann.

Die Sperrklinke 104 selbst ist, wie insbesondere anhand Fig. 6a erkennbar, schwenkbar auf einem Lagerzapfen 155 eines Gleiters 105 gelagert, der mit einem Grundkörper 150 in Sitzlängsrichtung L beweglich neben den Rastöffnungen 170 der Rastschiene 107 geführt ist. Der Gleiter weist in seinem Grundkörper 150 eine Ausnehmung 152 auf, in der eine Druckfeder 400 angeordnet ist, die unterhalb des Betätigungsabschnittes 140 der Sperrklinke 104 auf diese einwirkt und dadurch die Sperrklinke 104 derart vorspannt, daß ein am anderen Ende der Sperrklinke 104 angeordneter Rasthaken 141 die Tendenz hat, in die Rastschiene 107 einzugreifen. Hieran wird in dem in den Figuren 6 und 6a dargestellten Zustand, in dem der Sitz mit nicht vorgeklappter Rückenlehne in der Memory-Position verriegelt ist, die Sperrklinke dadurch gehindert, daß der Betätigungsabschnitt 160 des Schalthebels 106 sich auf der Betätigungsfläche 140 der Sperrklinke 104 abstützt, so daß diese nicht um den Lagerzapfen 155 verschwenken kann, um den Rasthaken 141 mit der Rastschiene 107 in Eingriff zu bringen.

In dem in den Figuren 6 und 6a dargestellten Zustand befindet sich ferner ein Gegenanschlag 144 der Sperrklinke 104 in Kontakt mit einem Anschlag 132 eines Anschlagselementes 103, das mit Befestigungsschrauben 136 an der Sitzschiene 102 befestigt ist. Ferner befindet sich ein Mitnehmer 143 der Sperrklinke 104, der sich nach oben hin an den Anschlag 144 anschließt, in Eingriff mit einem Eingriffsbereich 134 des Anschlagselementes 103.

Zusammenfassend bestehen einige wesentliche Unterschiede zwischen dem Ausführungsbeispiel gemäß den Figuren 1 und 1a sowie dem Ausführungsbeispiel gemäß den Figuren 6 und 6a darin, daß
a) bei dem vorliegenden Ausführungsbeispiel nur ein Bowdenzug vorhanden ist, der beim Vorklappen der Rückenlehne sowohl zum Betätigen der Feststellvorrichtung als auch zum Einwirken auf die Memory-Einrichtung dient;
b) bei dem vorliegenden Ausführungsbeispiel als Schaltmittel, das zum Entriegeln oder Verriegeln auf die Memory-Einrichtung einwirken kann, keine Schaltfeder, sondern ein Schalthebel vorgesehen ist und
c) bei dem vorliegenden Ausführungsbeispiel bei der Verriegelung des Sitzes in der Memory-Position mit hochgeklappter Rückenlehne die Memory-Einrichtung nicht verriegelt, sondern vielmehr entriegelt ist.

Wird in dem in den Fig. 6 und 6a dargestellten Zustand des Sitzes, in dem dieser in der Memory-Position verriegelt ist, die Rückenlehne nach vorne geklappt, so spannt sich das Seil 121b des Bowdenzuges und bewegt sich in Richtung auf das hintere (rückenlehnenseitige) Sitzende.

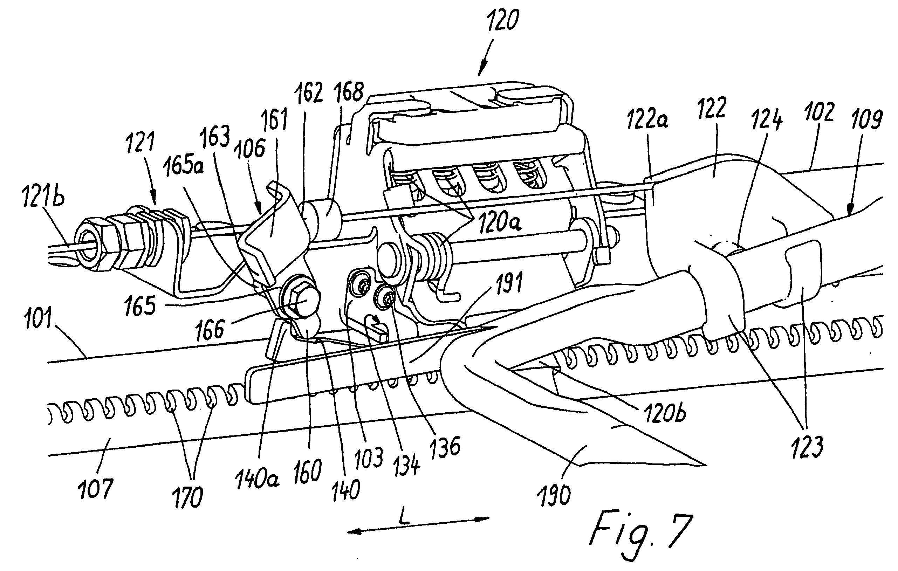

Hierdurch wird gemäß Fig. 7 zum einen der Betätigungshebel 109 über das Getriebeteil 122 sowie die Arme 123 entgegen dem Uhrzeigersinn verschwenkt, wobei er auf das Betätigungselement 120b einwirkt und die Feststellvorrichtung 120 entriegelt. Zum anderen bewegt sich der mit dem Seil 121b verquetschte Seilnippel 168 in Richtung des hinteren Sitzendes und wirkt dabei auf den Anschlag 162 im oberen Abschnitt 161 des Schalthebels 106 ein. Dabei wird der Schalthebel 106 entgegen dem Uhrzeigersinn verschwenkt, wobei dessen Betätigungsabschnitt 160 von der zugeordneten Betätigungsfläche 140 der Sperrklinke 104 abgehoben wird.

Diese Schwenkbewegung des Schalthebels 106 ist möglich, da dieser nicht mehr durch den Hebelfortsatz 191 blockiert wird, der ja gemeinsam mit dem Betätigungshebel 109 nach unten verschwenkt wurde. Dadurch, daß der Schalthebel 106 die Sperrklinke 104 freigegeben hat, verschwenkt diese nun aufgrund der Wirkung der Druckfeder 400 (vergl. Fig. 6a) um den Lagerzapfen 155 des Gleiters 105, bis der Rasthaken 141 in eine Öffnung 170 der Rastschiene 107 eingreift. Hierbei wird die Sperrklinke 104 und somit insgesamt die Memory-Einrichtung verriegelt.

Die Schwenkbewegung der Sperrklinke 104 hat zudem die Folge, daß der Mitnehmer 143 der Sperrklinke 104 sowie der Eingriffsbereich 134 des Anschlagselementes 103 außer Eingriff geraten. Dies ist erforderlich, um das Sitzgestell verschieben zu können, da anderenfalls eine Bewegung des Sitzes durch die verriegelte Memory-Einrichtung blockiert würde.

Der Seilnippel 168 dient dabei hier als Sperrmittel, welches bei vorgeklappter Rückenlehne derart auf den Schalthebel 106 einwirkt, daß die Sperrklinke 104 nicht mittels des Schalthebels 106 entriegelt werden kann.

Die Anordnung ist derart ausgelegt, daß beim Vorklappen der Rückenlehne der Rasthaken 141 unter der Wirkung der Druckfeder 400 bereits in eine Rastöffnung 170 eingreifen kann, bevor die Feststellvorrichtung 120 soweit entriegelt ist, daß die Sitzschiene 102 bezüglich der karosseriefesten Schiene 101 verschiebbar ist. Hierdurch wird eine zuverlässige Speicherung der aktuellen Sitzlängsposition als Memory-Position gewährleistet. Sofern allerdings der Rasthaken 141 nicht unmittelbar in eine Rastöffnung 170 eingreifen kann, weil der Sitz derart positioniert ist, daß der Rasthaken 141 unter der Wirkung der Druckfeder 400 auf einem Steg zwischen zwei Rastöffnungen 170 aufschlägt, dann rastet der Rasthaken 141 erst nach einer geringfügigen Verschiebung des Sitzgestells in Sitzlängsrichtung L in die nächste Rastöffnung 170 ein, die er passiert. In einem solchen Fall ergibt sich also eine geringfügige Abweichung zwischen der Sitzlängsposition beim Vorklappen der Rückenlehne und der anschließend gespeicherten Memory-Position.

In dem in Fig. 7 gezeigten Zustand, der durch das Vorklappen der Rückenlehne erreicht wurde, kann das Sitzgestell nun mit vorgeklappter Rückenlehne in Sitzlängsrichtung L nach vorne verschoben werden, um den Einstieg eines Passagiers oder das Einschieben eines Gegenstandes in den Fond eines Kraftfahrzeugs zu erleichtern.

Wird der Sitz dann mit vorgeklappter Rückenlehne wieder nach hinten bewegt, so wird er spätestens in der durch die Sperrklinke 104 definierten Memory-Position automatisch angehalten. Denn beim Erreichen der Memory-Position gerät der Anschlag 132 des Sitzgestells mit dem Anschlag 144 der Memory-Einrichtung in Kontakt, wodurch eine weitere Bewegung des Sitzgestelles nach hinten verhindert wird.

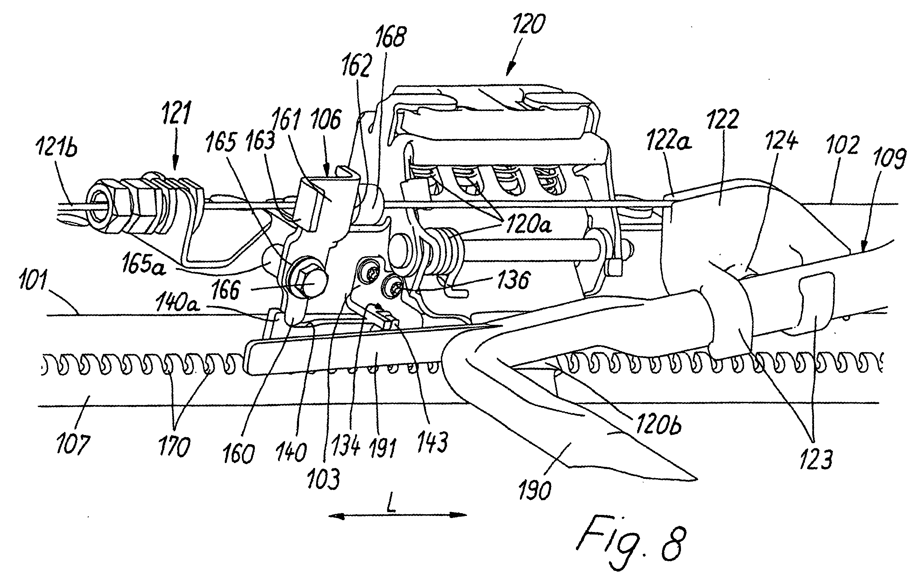

Wird sodann die Rückenlehne wieder in ihre Funktionsposition geklappt, dann löst sich die Spannung des Seiles 121b, und der Schalthebel 106 sowie der Betätigungshebel 109 mit dem daran befestigten Fortsatz 191 kehren zurück in die in den Fig. 6 und 6a dargestellte Lage. Wird sodann der Betätigungshebel 109 entgegen dem Uhrzeigersinn verschwenkt, um die Feststellvorrichtung 120 zu entriegeln, so stellt sich der in Fig. 8 gezeigte Zustand ein.

Beim manuellen Verschwenken des Betätigungshebels 109 mittels eines hierfür vorgesehenen Betätigungsgriffes wird zwar die Feststellvorrichtung 120 über das Betätigungselement 120b entriegelt, so daß das Sitzgestell in Sitzlängsrichtung L auf der karosseriefesten Schiene 101 bewegt werden kann; jedoch bleibt hierbei - im Unterschied zu einem Vorklappen der Rückenlehne - der Schalthebel 106 in seiner senkrechten Position, in der dessen Betätigungsabschnitt 160 vertikal auf die Betätigungsfläche 140 einwirkt. Hierdurch wird verhindert, daß die Sperrklinke 104 unter der Wirkung der Druckfeder 400 verriegelt wird.

Wegen des gemäß Fig. 8 nach unten verschwenkten Hebelfortsatzes 191, der dementsprechend nicht an dem zugeordneten Anschlag 163 des Schalthebels 106 anliegt, muß die vertikale Stellung des Schalthebels 106 beispielsweise durch eine geeignete Ausbildung der Betätigungsfläche 140 der Sperrklinke 104 gesichert werden. Die Betätigungsfläche 140 kann hierzu derart gekrümmt sein, daß sie unter der Wirkung der Druckfeder 400 der Sperrklinke 104 auf den Betätigungsabschnitt 160 des Schalthebels 106 kein Moment ausübt, das eine Schwenkbewegung des Schalthebels 106 entgegen dem Uhrzeigersinn zur Folge hätte. Mit anderen Worten ausgedrückt, muß das Zusammenspiel der Betätigungsfläche 140 der Sperrklinke 104 mit dem Betätigungsabschnitt 160 des Schalthebels 106 derart ausgelegt sein, daß durch die mittels der Druckfeder 400 von der Sperrklinke 104 her eingeleiteten Kräfte keine Schwenkbewegung des Schalthebels 106 entgegen dem Uhrzeigersinn ausgelöst wird. Eine Schwenkbewegung des Schalthebels 106 im Uhrzeigersinn wird demgegenüber durch den Seilnippel 168 blockiert.

Alternativ kann die senkrechte Stellung des Schalthebels 106 - wie bereits oben erwähnt - auch mittels eines geeigneten Federelementes oder durch hinreichend große Reibungskräfte gesichert werden.

Zusammenfassend führt, die Betätigung des Betätigungshebels 109 in der Memory-Position des Sitzes (bei nicht vorgeklappter Rückenlehne) dazu, daß einerseits die Feststellvorrichtung 120 entriegelt wird, während gleichzeitig die Sperrklinke 104 und somit die Memory-Einrichtung insgesamt in dem entriegelten Zustand verbleibt, der bereits vor dem Verschwenken des Betätigungshebels 109 bestand, vergl. Figuren 6 und 6a. Außerdem greift der Mitnehmer 143 der Memory-Einrichtung in den Eingriffsbereich 134 des sitzschienenseitigen Anschlagselementes 103 ein.

In diesem Zustand führt eine Bewegung des Sitzgestelles in Sitzlängsrichtung L dazu, daß gleichzeitig die Sperrklinke 140 mitgenommen wird, so daß beim Verschieben des Sitzes zugleich auch eine neue Memory-Position eingestellt wird. Die neu eingestellte Memory-Position, die der durch Verschiebung des Sitzgestelles neu eingestellten Sitzlängsposition entspricht, wird jedoch nicht schon dann verriegelt, wenn schließlich der Betätigungshebel 109 losgelassen wird. Denn dies hat gemäß den Figuren 6 und 6a zunächst nur zur Folge, daß die Feststellvorrichtung 120 verriegelt wird und somit die Sitzschiene 102 bezüglich der karosseriefesten Schiene 101 arretiert ist. Eine Verriegelung der Memory-Einrichtung erfolgt demgegenüber gemäß Fig. 7 erst dann, wenn in der neuen Sitzlängsposition die Sitzlehne vorgeklappt wird. Sonach wird bei dem vorliegenden Ausführungsbeispiel die Memory-Einrichtung immer nur dann verriegelt, wenn der Sitz mit vorgeklappter Rückenlehne im Rahmen der Easy-Entry-Funktion nach vorne bewegt wird.

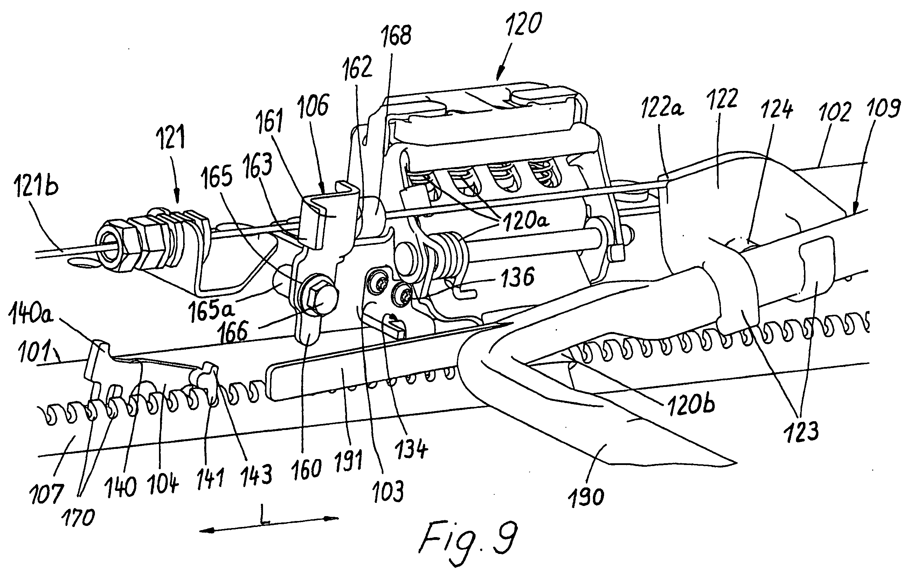

In Fig. 9 ist das Sitzgestell gezeigt, nachdem es zunächst mit vorgeklappter Rückenlehne in Sitzlängsrichtung L nach vorne verschoben wurde, wobei die Sperrklinke 104 verriegelt in der ursprünglichen Sitzposition zurückgelassen worden ist, und nachdem anschließend die Rückenlehne wieder in ihre Funktionsposition geklappt wurde. Außerdem ist der Betätigungshebel 109 derart verschwenkt, daß die Feststellvorrichtung 120 entriegelt ist und das Sitzgestell in Sitzlängsrichtung wahlweise nach vorne oder nach hinten verstellt werden kann. In jeder Sitzlängsposition, die hierbei erreicht wird, kann das Sitzgestell mittels der Feststellvorrichtung 120 bezüglich der karosseriefesten Schiene 1 arretiert werden, indem der Betätigungshebel 109 losgelassen wird.

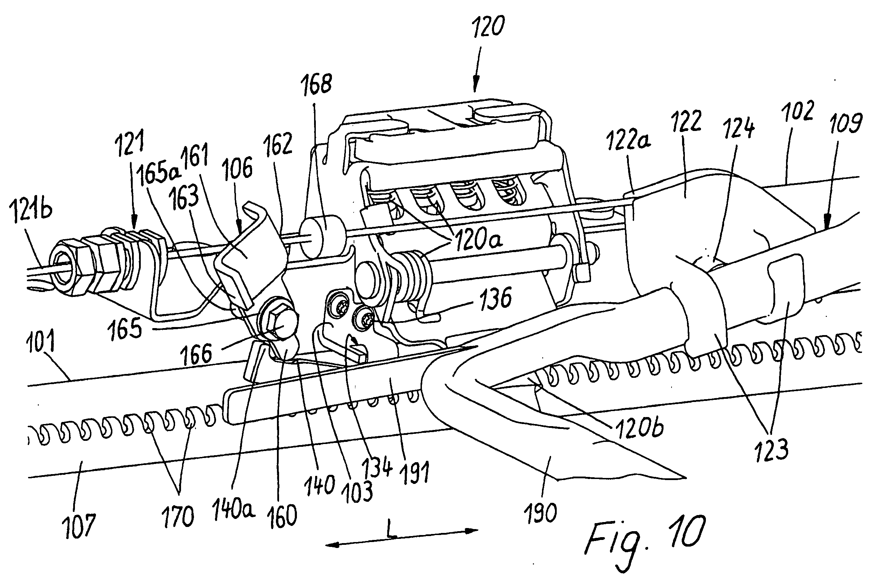

Fig. 10 zeigt schließlich den Zustand des Sitzgestells, wenn dieses mit aufgerichteter Rückenlehne bis in die Memory-Position zurückgefahren wird. Hierbei schlägt der Schalthebel 106 mit seinem Betätigungsabschnitt 160 an einem Vorsprung 140a an, der von der Betätigungsfläche 140 der Sperrklinke 104 vertikal nach oben absteht. Dies ist darauf zurückzuführen, daß sich die Sperrklinke 104 in dem verriegelten Zustand befindet, in dem sie mit ihrem Rasthaken 141 (vergl. Fig. 6a) in eine Rastöffnung 170 der Rastschiene 107 eingreift. Durch die hiermit verbundene Schrägstellung der Betätigungsfläche 140 der Sperrklinke 104 übt diese auf den Betätigungsabschnitt 160 des Schalthebels 106 ein Drehmoment mit einer Komponente parallel zur Sitzlängsrichtung L aus. Als Folge davon wird der Schalthebel 106 entgegen dem Uhrzeigersinn verschwenkt und dessen Betätigungsabschnitt 160 gerät in Anschlag mit dem Vorsprung 140a der Sperrklinke 104. Dies bewirkt, daß die Sperrklinke 104 weiterhin verriegelt bleibt, wenn das Sitzuntergestell die in Fig. 10 gezeigte Memory-Position erreicht.

Zusammenfassend wirkt demnach die Betätigungsfläche 140 im verriegelten Zustand der Sperrklinke 104 derart mit dem Betätigungsabschnitt 160 des Schalthebels 106 zusammen, daß dieser verschwenkt wird, wenn der Sitz mit aufgerichteter Rückenlehne in die Memory-Position geschoben wird, wodurch eine Entriegelung der Sperrklinke 104 verhindert wird. (Wenn der Sitz mit vorgeklappter Rückenlehne nach hinten in die Memory-Position geschoben wird, dann ist der Schalthebel 106 aufgrund der Wirkung des Seilnippels 168 ohnehin verschwenkt, vergl. Fig. 7, so daß auch in diesem Fall keine Entriegelung der Memory-Einrichtung erfolgen kann.) Andererseits wirken die Betätigungsfläche 140 der Sperrklinke 104 und der Betätigungsabschnitt 160 des Schalthebels 106 im entriegelten Zustand der Sperrklinke 104, vergl. Fig. 6, derart zusammen, daß die Sperrklinke 104 entriegelt bleibt, wie weiter oben anhand Fig. 6 näher ausgeführt wurde.

Wegen des verriegelten Zustandes der Sperrklinke 104 wird das Sitzgestell beim Erreichen der Memory-Position automatisch angehalten, wenn der Anschlag 132 des sitzgestellseitigen Anschlagselementes 103 mit dem Gegenanschlag 144 der Memory-Einrichtung (vergl. Fig. 6a) auf Block fährt.

Wird dann in der Memory-Position der Betätigungshebel 109 losgelassen, so wird dieser unter der Wirkung der Federanordnung 120a der Feststellvorrichtung 120 im Uhrzeigersinn verschwenkt, bis die Feststellvorrichtung 120 wieder verriegelt ist. Gleichzeitig wird durch den Fortsatz 191 des Betätigungshebels 109, der auf den abgewinkelten Anschlag 163 im oberen Abschnitt 161 des Schalthebels 106 einwirkt, der Schalthebel 106 im Uhrzeigersinn in seine senkrechte Stellung verschwenkt, wobei der Schalthebel 106 mit seinem Betätigungsabschnitt 160 auf die Betätigungsfläche 140 der Sperrklinke 104 einwirkt und diese (entgegen der Wirkung der Druckfeder 400) entriegelt (was eine entsprechende Auslegung der Federanordnung 120a erfordert). Der Sitz befindet sich dann wieder in dem anhand der Figuren 6 und 6a erläuterten Zustand mit hochgeklappter Rückenlehne in der Memory-Position.

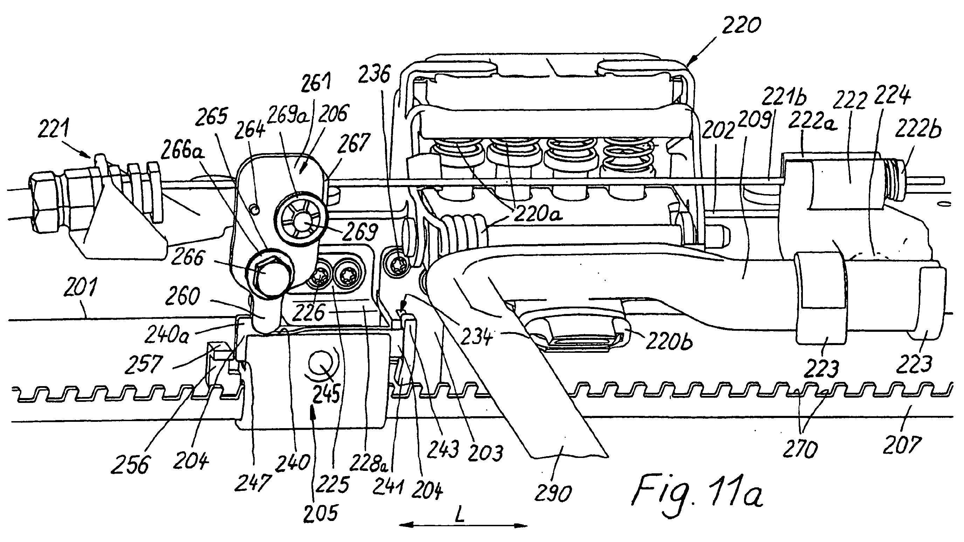

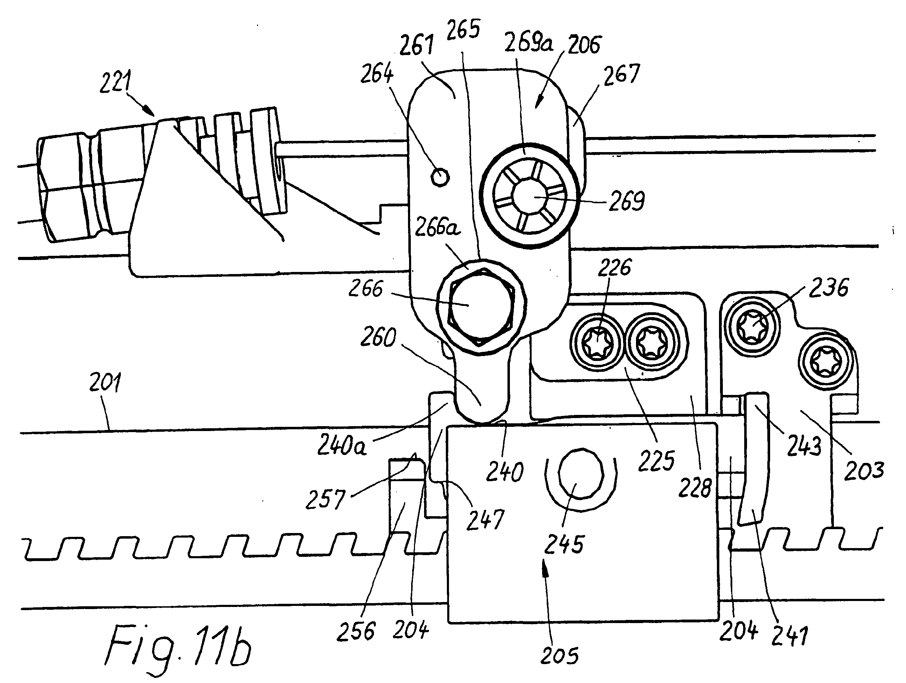

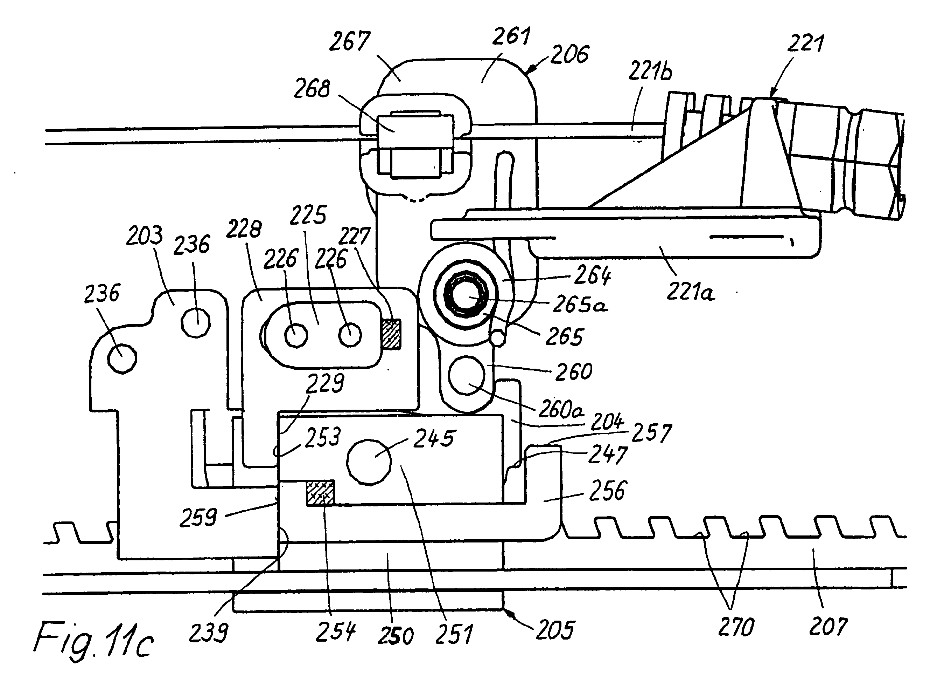

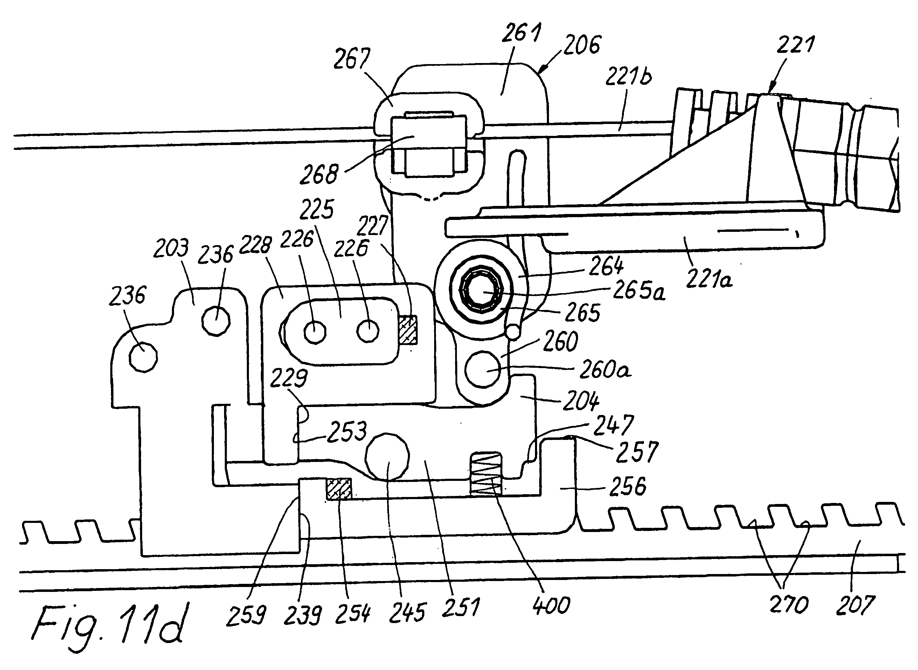

Nachfolgend wird nunmehr ein drittes Ausführungsbeispiel der Erfindung anhand der Figuren 11 bis 19 beschrieben, wobei lediglich diejenigen Funktionsgruppen näher erläutert werden, in denen dieses Ausführungsbeispiel von dem anhand der Figuren 6 bis 10 Dargestellten abweicht. Um die Zuordnung vergleichbarer Funktionsgruppen zu erleichtern, werden für einander entsprechende Baugruppen jeweils Bezugszeichen verwendet, die in der zweiten und dritten Stelle übereinstimmen, wobei in den Figuren 11 bis 19 in der ersten Stelle stets die Ziffer "2" verwendet wird.

Die Figuren 11a bis 11d zeigen einen Ausschnitt eines Sitzgestells eines Kraftfahrzeugsitzes, der in seiner Memory-Position mit hochgeklappter Rückenlehne verriegelt ist. Entsprechend der Darstellung in den Figuren 6 und 6a umfaßt das Sitzgestell einer auf einer karosseriefesten Schiene 201 in Sitzlängsrichtung L bewegbare Sitzschiene 202 und eine Feststellvorrichtung 220, mit der die Sitzschiene 202 bezüglich der karosseriefesten Schiene 201 arretierbar ist.

Zum Entriegeln der Feststellvorrichtung 220 ist ein Betätigungshebel 209 vorgesehen, der ein Querrohr 290 aufweist und der entgegen der Wirkung einer Federanordnung 220a auf einen Betätigungsabschnitt 220b der Feststellvorrichtung 220 einwirken kann, um diese zu entriegeln. Hierzu muß der Betätigungshebel 209 entgegen dem Uhrzeigersinn verschwenkt werden, was z.B. durch einen Sitzbenutzer mittels eines hierfür vorgesehenen Betätigungsgriffes am Betätigungshebel 209 erfolgen kann.

Andererseits ist der Betätigungshebel 209 auch über einen Bowdenzug, von dem in den Figuren 11a bis 11d eine Bowdeneinhängung und -abstützung 221, deren Befestigungsblech 221a und ein Seil 221b erkennbar sind, mit der Rückenlehne gekoppelt. Das Seil 221b des Bowdenzuges ist mit einem Ende an der Rückenlehne des Sitzes befestigt und mit seinem anderen Ende mittels einer Seileinhängung 222b an einem Getriebeteil 222 festgelegt, das eine Führung 222a für das Seil 221b aufweist. Das Getriebeteil 222 ist mittels eines Achsstummels 224 um dieselbe Achse verschwenkbar gelagert wie der Betätigungshebel 209 und umgreift diesen mittels zweier Arme 223. Das Getriebeteil 222 setzt eine Längsbewegung des Seils 221b, die bei einem Vorklappen der Rückenlehne auftritt, in eine Schwenkbewegung um, durch die der Betätigungshebel 209 auf den Betätigungsabschnitt 220b der Feststellvorrichtung 220 einwirkt und diese entriegelt.

Das Seil 221b ist ferner mit dem oberen Abschnitt 261 eines Schalthebels 206 verbunden, und zwar über einen mit dem Seil verquetschen Seilnippel 268, der in einer Nippelaufnahme 267 (Nippelkammper) im oberen Abschnitt 261 des Schalthebels 206 angeordnet ist. Die Nippelaufnahme 267 ist mittels eines Stiftes 269 und eines dem Stift zugeordneten Clipselementes 269a ("Springfix") an dem Schalthebel 206 befestigt.

Der Schalthebel 206 selbst ist mittels einer Lagerbuchse 265, eines Stufenbolzens 265a, einer Befestigungsschraube 266 sowie einer zugeordneten Unterlegscheibe 266a schwenkbar an der Sitzschiene 202 angelenkt. Bei einer Straffung des Seiles 221b als Folge eines Vorklappens der Rückenlehne wird der Schalthebel 206 ebenso wie das oben erwähnte Getriebeteil 222 entgegen dem Uhrzeigersinn verschwenkt, und zwar entgegen der Wirkung einer auf der Schwenkachse des Schalthebels gelagerten Drehfeder 264.

Ein unterer Betätigungsabschnitt 260 des Schalthebels 206 ist einem als Betätigungsfläche 240 ausgebildeten Betätigungsabschnitt einer Sperrklinke 204 angeordnet, die die Verriegelungseinheit einer Memory-Einrichtung bildet. Die Sperrklinke 204 ist über einen Lagerbolzen 245 schwenkbar auf einem Gleiter 205 gelagert, der mit seinem Grundkörper 250 in Sitzlängsrichtung L verschieblich gelagert ist. An den Grundkörper 250 des Gleiters 205 schließt sich nach oben ein Lagerabschnitt 251 an, in dem der sich quer zur Sitzlängsrichtung L erstreckende Lagerbolzen 245 zur schwenkbaren Lagerung der Sperrklinke 204 aufgenommen ist.

An dem Gleiter 205 ist ferner längsverschieblich ein Schieber 256 gelagert, der mittels eines elastischen Elementes 254 in Richtung auf das vordere Sitzende vorgespannt ist und der einen in Richtung auf das vordere Sitzende weisenden Gegenanschlag 259 aufweist, an welchem sich in der Memory-Position des Sitzgestells ein Anschlag 239 eines über Befestigungsschrauben 236 an der Sitzschiene 202 befestigten Anschlagselementes 203 abstützt. Der Gleiter 205 selbst weist zudem einen dem vorderen Sitzende zugewandten Anschlag 253 auf, der in der Memory-Position des Sitzgestells an einem Anschlag 229 eines Schiebers 228 anliegt, der längsbeweglich an einem über Schrauben 226 mit der Sitzschiene 202 verbundenen Befestigungsblech 225 geführt ist und der mittels eines elastischen Elementes 227 in Richtung auf das hintere Sitzende vorgespannt ist.

Die verschwenkbar auf dem Gleiter 205 gelagerte Sperrklinke 204 weist an einem Ende einen Rasthaken 241 auf, der in Rastöffnungen 270 einer Rastschiene 207 einrastbar ist und mittels eines elastischen Elementes in Form einer Druckfeder 400 in Richtung auf die Rastschiene 207 vorgespannt ist. Trotzdem ist die Memory-Einrichtung in der in den Figuren 11a bis 11d gezeigten Memory-Position mit hochgeklappter Rückenlehne entriegelt, da der Betätigungsabschnitt 260 des Schalthebels 206 derart vertikal nach unten auf die Betätigungsfläche 240 der Sperrklinke 204 einwirkt, daß ein Verschwenken der Sperrklinke 204, welche zu einem Eingriff des Rasthakens 241 in die Rastschiene 207 führen würde, verhindert wird. Von der Betätigungsfläche 240 steht zudem senkrecht ein Vorsprung 240a ab, an dem sich der Betätigungsabschnitt 260 des Schalthebels 206 zusätzlich in Sitzlängsrichtung abstützen kann.

Die Sperrklinke 204 weist ferner einen Mitnehmer 243 in Form eines Vorsprungs auf, der in der Memory-Position des Sitzgestells bei entriegelter Sperrklinke in einen Eingriffsbereich 234 des sitzgestellseitigen Anschlagselementes 203 eingreift, so daß bei einer Verschiebung des Sitzgestells in Sitzlängsrichtung L die Sperrklinke 204 sowie der Gleiter 205 mitgenommen würden.

Schließlich weist die Sperrklinke 204 noch einen weiteren Anschlag 247 auf, der mit einem oberen Anschlag 257 des an dem Gleiter 205 angeordneten Schiebers 256 zusammenwirken kann, um die Sperrklinke 204 in der Stellung zu arretieren, in der deren Rasthaken 241 in die Rastschiene 207 eingreift.

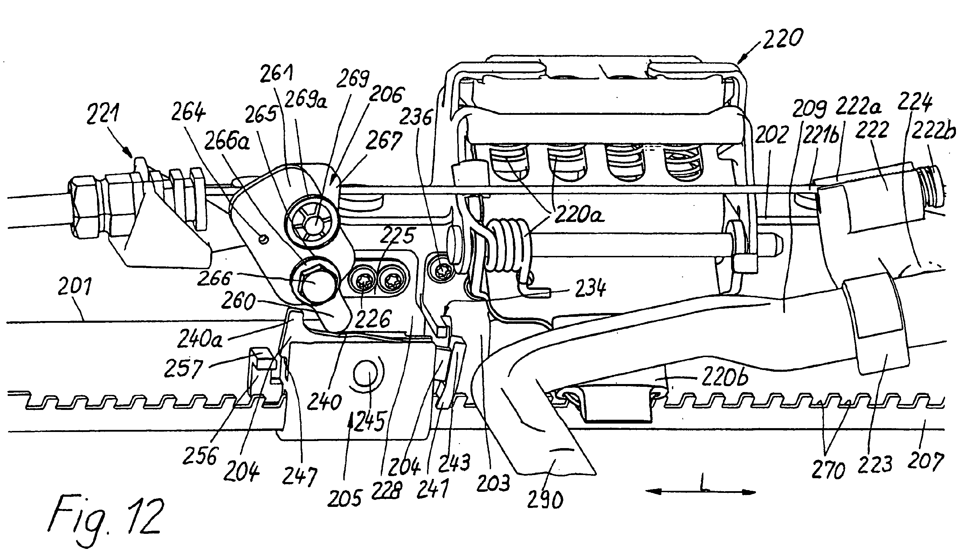

Fig. 12 zeigt den anhand der Figuren 11a bis 11d erläuterten Ausschnitt des Sitzgestells nach dem Vorklappen der Rückenlehne. Hierbei werden durch die Straffung des Seiles 221b des Bowdenzugs das Getriebeteil 222 sowie der Schalthebel 206 entgegen dem Uhrzeigersinn verschwenkt. Dies führt zum einen zu einer Entriegelung der Feststellvorrichtung 220 über den mit dem Getriebeteil 222 verbundenen Betätigungshebel 209 sowie über das Betätigungselement 220b der Feststellvorrichtung 220. Zum anderen wird durch die Schwenkbewegung des Schalthebels 206 dessen Betätigungsabschnitt 260 von der Betätigungsfläche 240 der Sperrklinke 204 abgehoben, so daß die Sperrklinke 204 unter der Wirkung der Druckfeder 400 verschwenkt, bis deren Rasthaken 241 in eine Rastöffnung 270 der Rastschiene 207 eingreift. Die Memory-Einrichtung ist dann in einer Memory-Position verriegelt, die der Sitzlängsposition vor dem Vorklappen der Rückenlehne entspricht.

Durch das Verschwenken der Sperrklinke 204 tritt außerdem deren Mitnehmer 243. außer Eingriff mit dem Eingriffsbereich 234 des Anschlagselementes 203, so daß nun das Sitzgestell in Sitzlängsrichtung verschoben werden kann, ohne hierbei auf die Memory-Einrichtung einzuwirken.

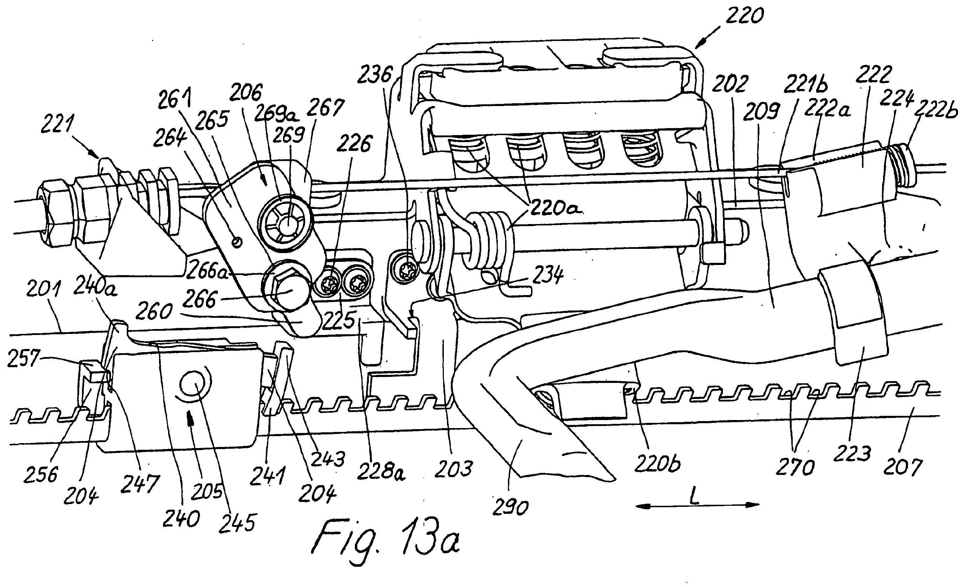

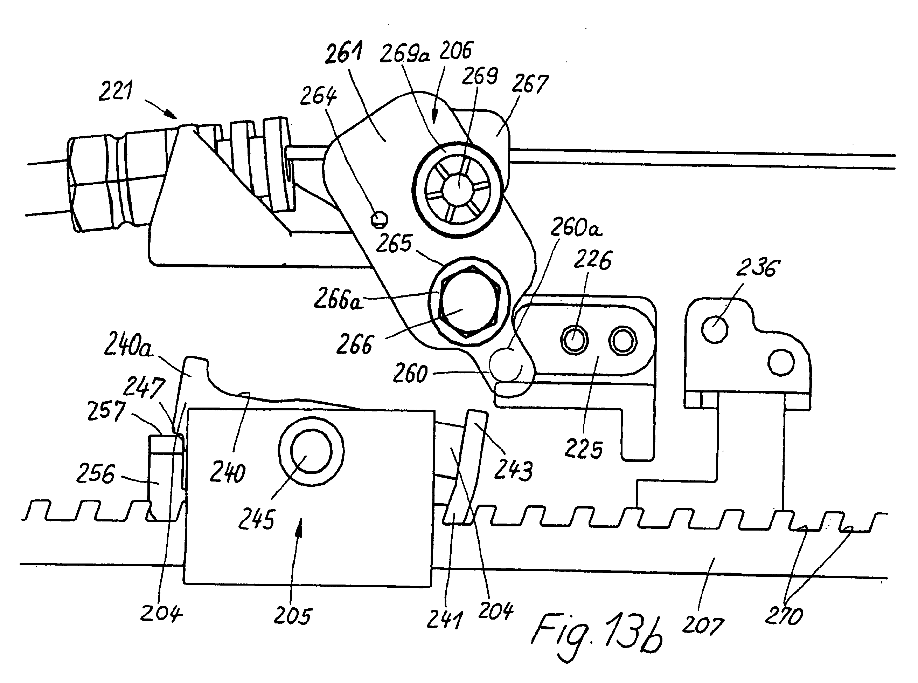

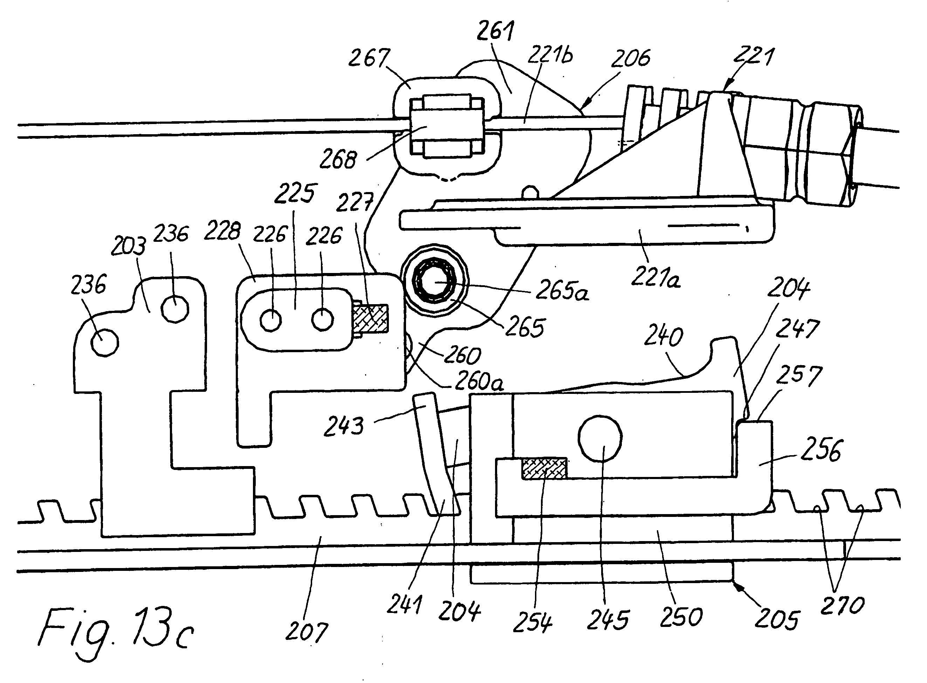

Wird nun der Sitz mit vorgeklappter Rückenlehne und entriegelter Feststellvorrichtung 220 nach vorne verschoben, so stellt sich der in den Figuren 13a bis 13c gezeigte Zustand ein, indem sich das Sitzgestell mitsamt dem Anschlagselement 203 sowie dem am Sitzgestell gelagerten Schieber 228 von der Memory-Einrichtung entfernt hat. Hierdurch entspannen die beiden elastischen Elemente 227 und 254, die in der Memory-Position gemäß den Figuren 11a bis 11d noch aufgrund des Zusammenwirkens der Anschläge 229, 253 sowie 239, 259 komprimiert waren.

Die Entspannung des einen elastischen Elementes 227 führt dazu, daß sich der sitzgestellseitige Schieber 228 in Sitzlängsrichtung L nach hinter bewegt, wodurch eine Stützfläche 228a dieses Schiebers 228 ein Stützelement 260a des Schalthebels 206 untergreift, so daß sich der Schalthebel 206 über sein Stützelement 260a an dieser Stützfläche 228a abstützt und in seiner verschwenkten Position blockiert wird.

Die Entspannung des anderen elastischen Elementes 254 bewirkt, daß sich der an dem Gleiter 205 gelagerter Schieber 256 in Sitzlängsrichtung L nach vorne bewegt und dabei mit einem oberen Anschlag 257 einen durch eine Aussparung gebildeten Anschlag 247 der Sperrklinke 204 untergreift, wodurch diese in ihrer verriegelten Position blockiert wird.

Durch die vorstehend beschriebene Wirkung der beiden elastischen Elemente 227, 254 wird sichergestellt, daß nach dem Vorklappen der Rückenlehne der Schalthebel 206 in seiner verschwenkten Position verbleibt und außerdem die Memory-Einrichtung arretiert bleibt. Wird der Sitz anschließend mit vorgeklappter Rückenlehne wieder nach hinten verschoben, so werden bei Erreichen der Memory-Position die beiden elastischen Elemente 227, 254 wieder komprimiert, und zwar durch das Zusammenwirken der entsprechenden Anschläge, wie in den Figuren 11a bis 11d dargestellt, so daß die Schieber wieder in den anhand der letztgenannten Figuren erläuterten Zustand zurückkehrt.

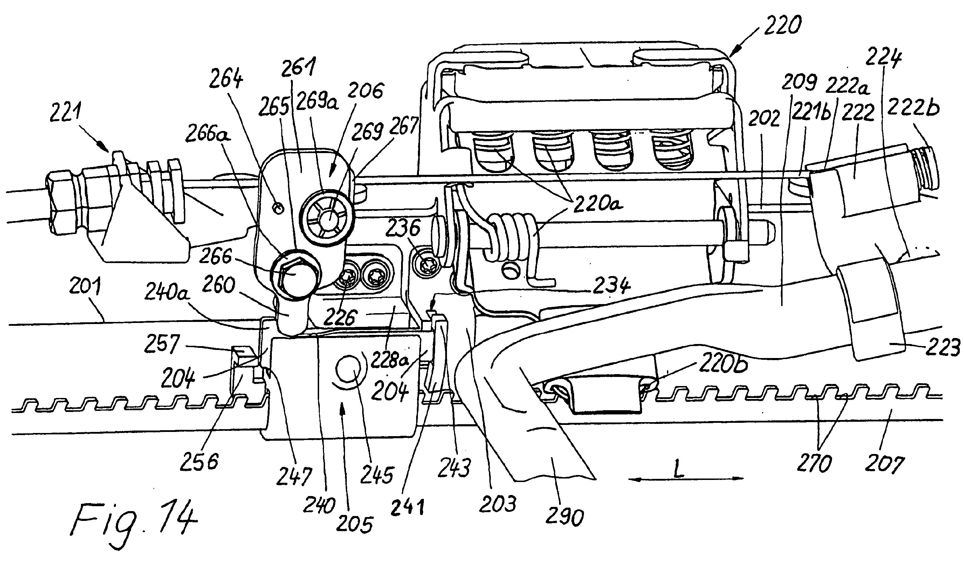

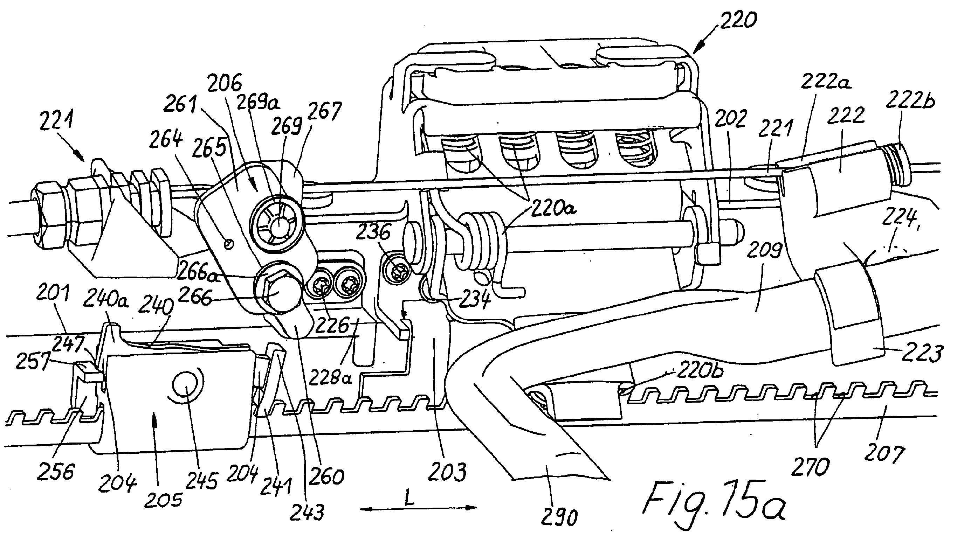

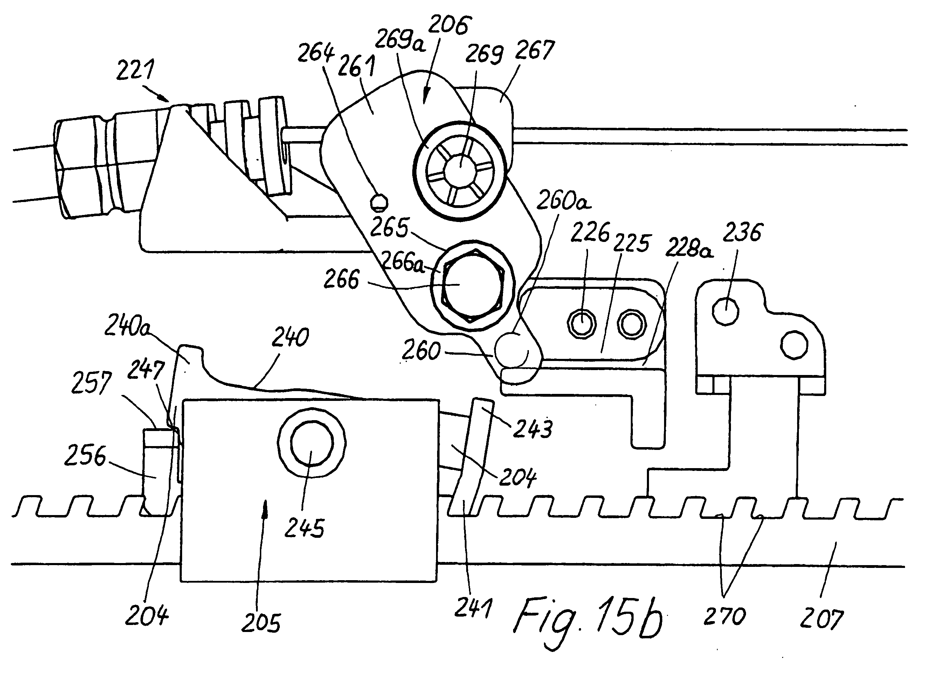

Figur 14 zeigt das Sitzgestell erneut in seiner Memory-Position, wobei jedoch manuell mittels eines hierfür vorgesehenen Betätigungsgriffes der Betätigungshebel 209 verschwenkt wurde, um die Feststellvorrichtung 220 zu entriegeln. Der Sitz befindet sich demnach mit hochgeklappter Rückenlehne und entriegelter Feststellvorrichtung 220 in seiner Memory-Position. In diesem Zustand ist die Sperrklinke 204 außer Eingriff mit der Rastschiene 207, da der Schalthebel 206 über seinen Betätigungsabschnitt 260 auf die Betätigungsfläche 240 der Sperrklinke einwirkt und dadurch verhindert, daß die Sperrklinke 204 mittels der Druckfeder 400 in Richtung auf die Rastschiene 207 verschwenkt wird.

Da sich die Sperrklinke 204 unter der Wirkung des Schalthebels 206 in ihrem entriegelten Zustand befindet und dabei außerdem deren Mitnehmer 243 in den sitzgestellseitigen Eingriffsbereich 234 eingreift, führt eine Verschiebung des Sitzgestells in Sitzlängsrichtung, ausgehend von der in Figur 14 dargestellten Position, dazu, daß die Sperrklinke 204 mitgenommen wird. Die neu eingestellte Sitzlängsposition, die durch Loslassen des Betätigungshebels 209 mittels der Feststellvorrichtung 220 arretiert werden kann, entspricht dann zugleich auch der neuen Memory-Position.

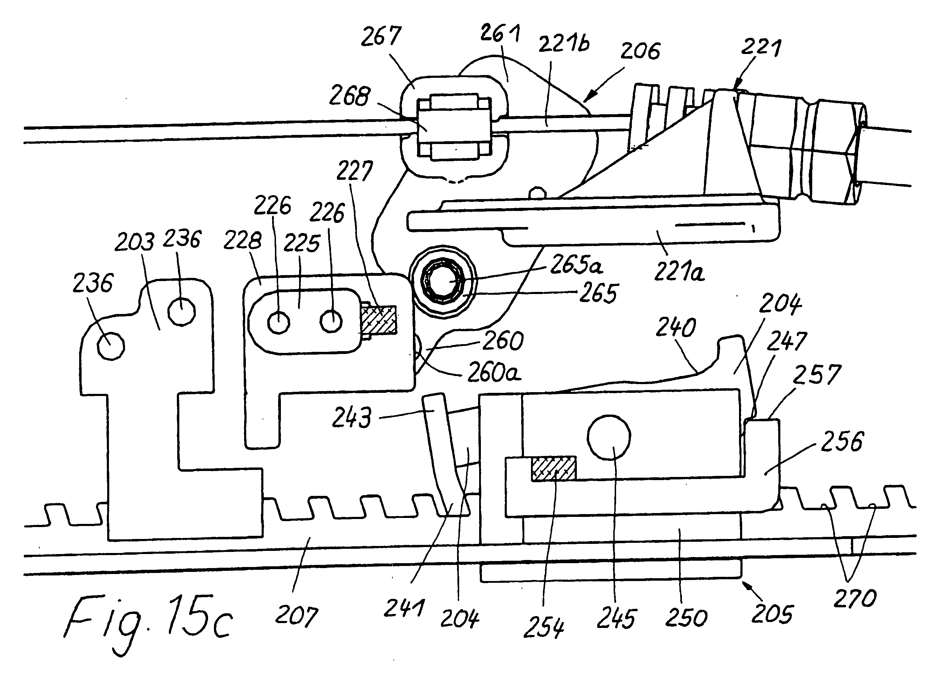

Ausgehend von der Darstellung gemäß den Figuren 15a bis 15c, die den Figuren 13a bis 13c entspricht, soll nun das Anfahren der Memory-Position mit vorgeklappter Rückenlehne beschrieben werden. In dem anhand der Figuren 15a bis 15c dargestellten zustand, in dem sich der Sitz mit vorgeklappter Rückenlehne außerhalb der Memory-Position befindet, ist die Feststellvorrichtung 220 entriegelt und die Sperrklinke 204 verriegelt. Außerdem ist der Schalthebel 206 unter der Wirkung des Seilnippels 267 entgegen dem Uhrzeigersinn verschwenkt, wobei der Seilnippel 267 über die Nippelaufnahme 268 bei vorgeklappter Rückenlehne kontinuierlich auf den Schalthebel 206 einwirkt und diesen in der verschwenkten Position sperrt. Der Seilnippel 267 bildet also ein Sperrmittel, das bei vorgeklappter Rückenlehne ein Verschwenken des Schalthebels 206 unter der Wirkung der Drehfeder 264 verhindert. Zusätzlich wird der Schalthebel 206 - und zwar unabhängig davon, ob die Lehne nach wie vor vorgeklappt ist - in seiner verschwenkten Position dadurch gehalten, daß er sich über das Stützelement 260a an einer Stützfläche 228a des sitzgestellseitigen Schiebers 228 abstützt.

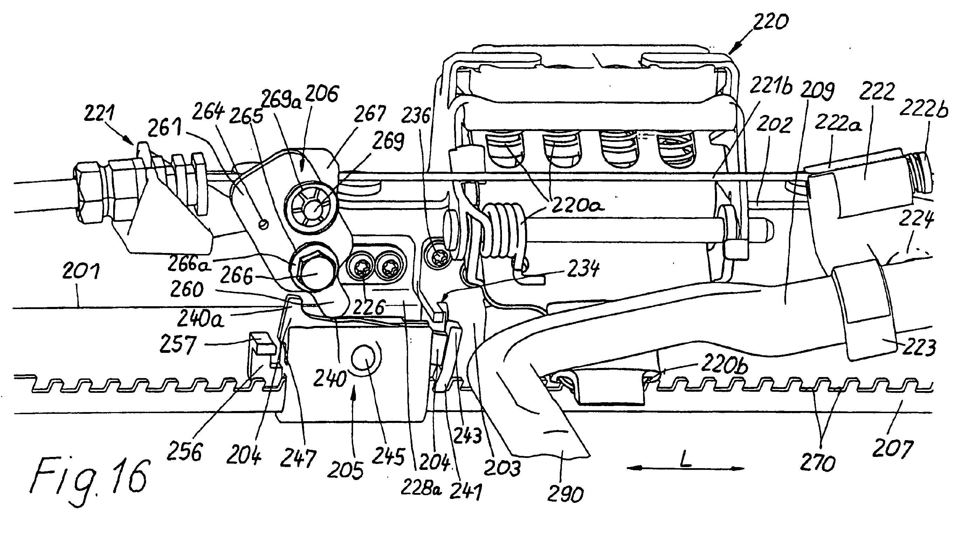

Figur 16 zeigt das Erreichen der Memory-Position bei einer Verschiebung des Sitzgestells nach hinten mit vorgeklappter Rückenlehne. Hierbei werden die beiden elastischen Elemente 227, 254 wieder komprimiert, und zwar durch das Zusammenwirken der entsprechenden Anschläge, wie in den Figuren 11a bis 11d dargestellt, so daß die Schieber 228, 256 wieder in den anhand der letztgenannten Figuren erläuterten Zustand zurückkehren.

Sobald sich das Stützelement 260a des Schalthebels 206 nicht mehr auf der Stützfläche 228a des sitzgestellseitigen Schiebers 228 abstützt, wird der Schalthebel 206 nur noch durch die Wirkung des Seilnippels 267 in seiner verschwenkten Position gehalten. Wird nun nach Erreichen der Memory-Position mit vorgeklappter Rückenlehne diese wieder hochgeklappt, so entspannt sich das Seil 221b des Bowdenzuges, wodurch sowohl der Schalthebel 206 als auch der Betätigungshebel 209 unter der Wirkung der Federelemente 264 bzw. 220a im Uhrzeigersinn verschwenken. Das Verschwenken des Schalthebels 206 bewirkt dabei, daß die Sperrklinke 204 durch vertikale Einwirkung des Betätigungsabschnittes 260 des Schalthebels 206 auf die Betätigungsfläche 240 der Sperrklinke 204 (entgegen der Wirkung der Druckfeder 400, vergl. Fig. 11d) entriegelt wird. Das Verschwenken des Betätigungshebels 209 bewirkt demgegenüber eine Entriegelung der Feststellvorrichtung 220. Der Sitz befindet sich dann wieder in dem anhand der Figuren 11a bis 11d dargestellten Zustand.

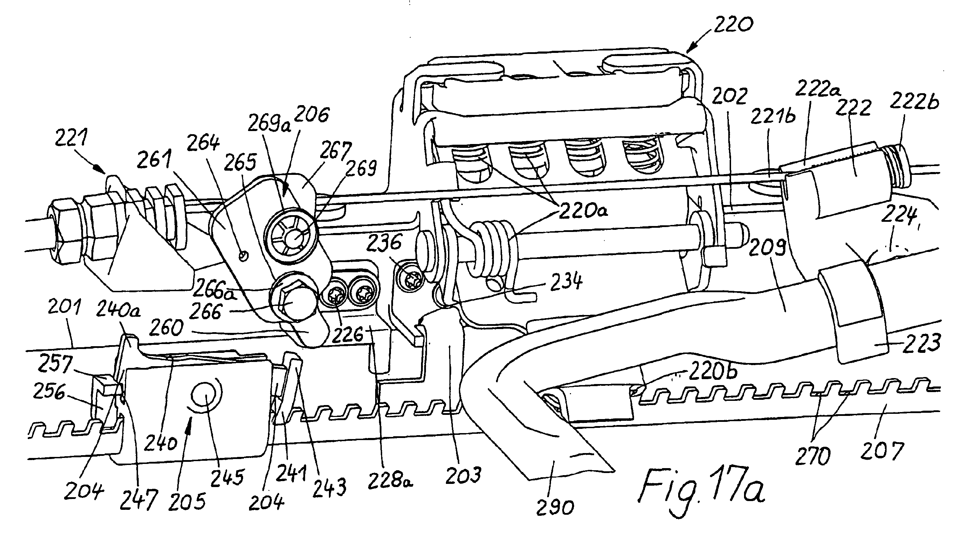

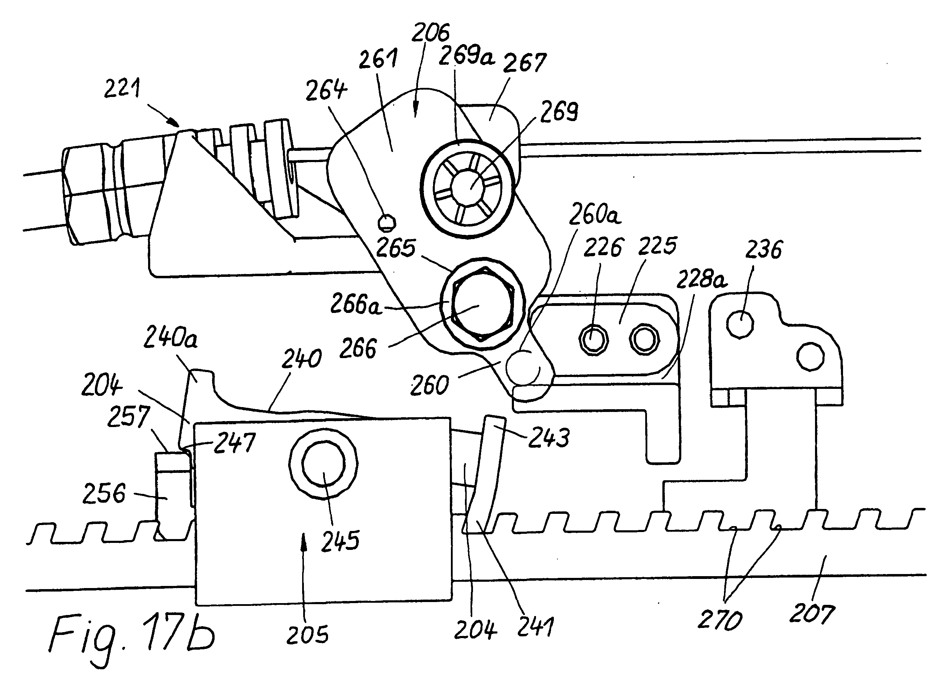

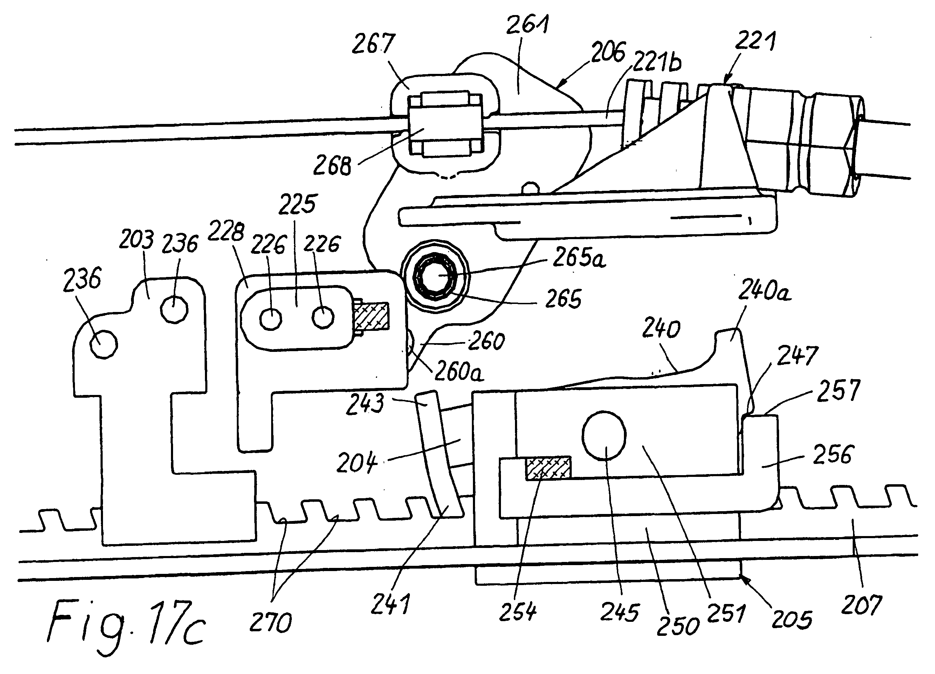

Die Figuren 17a bis 17c zeigen einen Ausschnitt des Sitzgestells nach dem Verschieben des Sitzgestells mit vorgeklappter Rückenlehne nach vorne aus der Memory-Position heraus und einem anschließenden Hochklappen der Rückenlehne, wobei außerdem der Betätigungshebel 209 manuell verschwenkt wurde, um die Feststellvorrichtung 220 zu entriegeln und das Sitzgestell in Sitzlängsrichtung L verschieben zu können. (In dieser Sitzlängsposition wäre das Sitzgestell durch Loslassen des Betätigungshebels 209 und eine daraus folgende Verriegelung der Feststellvorrichtung 200 arretierbar.)

In den Figuren 17a bis 17c fällt auf, daß trotz des Hochklappens der Rückenlehne der Schalthebel 206 nach wie vor entgegen der Wirkung der Drehfeder 264 verschwenkt ist. Dies ist darauf zurückzuführen, daß sich der Schalthebel 206 über das Stützelement 260a in Form eines Stützbolzens an der Stützfläche 228a des sitzgestellseitigen Schiebers 228 abstützt. Hierdurch wird die verschwenkte Stellung des Schalthebels 206, die beim Vorklappen der Rückenlehne erzeugt wurde, vergleiche Figuren 12 und 13a bis 13c, konserviert. Nach dem Hochklappen der Rückenlehne wirkt also jetzt noch die Stützfläche 228 des sitzgestellseitigen Schiebers 228 als ein Sperrmittel, das ein Zurückschwenken des Schalthebels 206 in seine vertikale Stellung verhindert. Mit anderen Worten ausgedrückt, wird die Sperrwirkung des Seilnippels 267, der den Schalthebel 206 bei vorgeklappter Rückenlehne in seiner verschwenkten Stellung sperrt, bei einem anschließenden Hochklappen der Rückenlehne außerhalb der Memory-Position durch die Stützfläche 228a des sitzgestellseitigen Schiebers 228 fortgeschrieben.

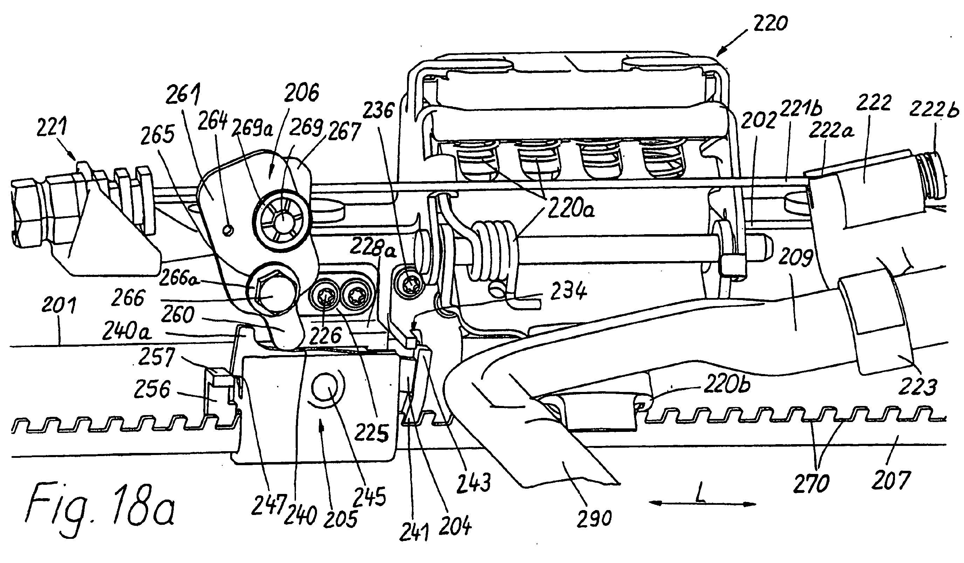

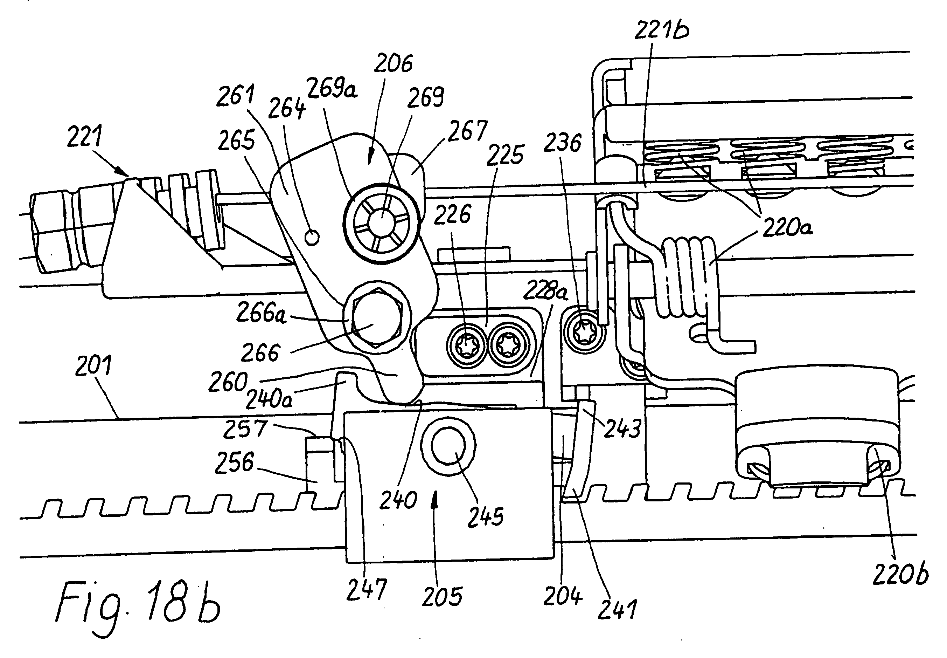

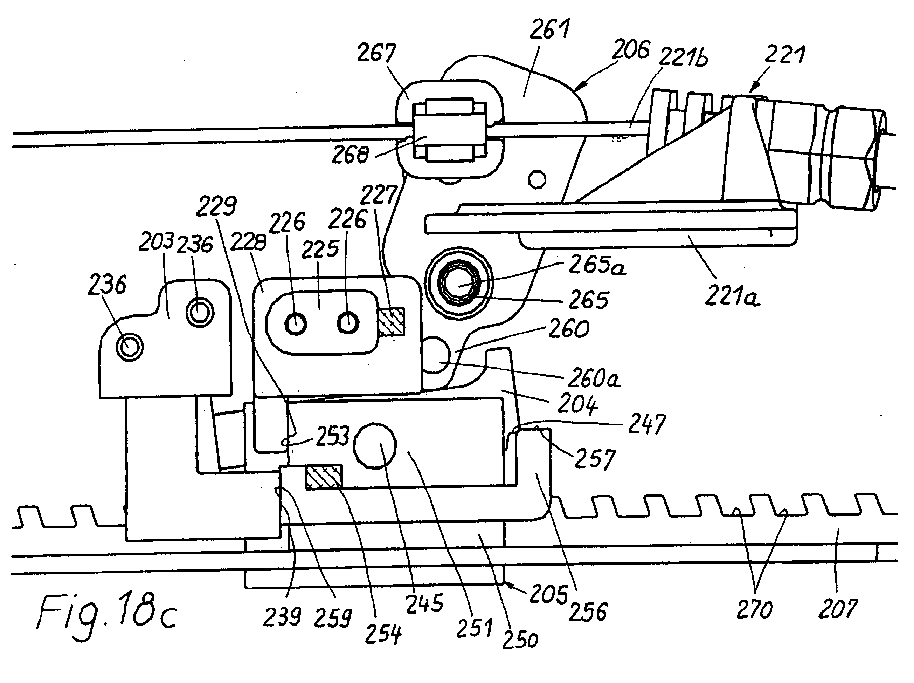

Wird nun gemäß den Figuren 18a bis 18c die Memory-Position durch Verschieben des Sitzgestells nach hinten mit hochgeklappter Rückenlehne erreicht, wobei der Betätigungsabschnitt 260 des Schalthebels 206 auf die Betätigungsfläche 240 der Sperrklinke 204 gleitet, so schlägt einerseits der Gleiter 205 über einen Anschlag 253 an einem Anschlag 229 des sitzgestellseitigen Schiebers 228 an und andererseits der am Gleiter 205 angeordnete Schieber 256 über einen Anschlag 259 an einem Anschlag 239 des sitzgestellseitigen Anschlagselementes 203. Hierdurch werden die beiden elastischen Elemente 227 und 254, die den beiden Schiebern 228, 256 zugeordnet sind, wieder komprimiert. Dadurch bewegt sich der sitzgestellseitige Schieber 228 in Sitzlängsrichtung L nach vorne, so daß dessen Stützfläche 228 das Stütz- element 260a des Schalthebels 206 freigibt. Andererseits bewegt sich der an dem Gleiter 205 angeordnete Schieber 256 in Sitzlängsrichtung L nach hinten, so daß dessen oberer Anschlag 257 die Sperrklinke 204 nicht mehr im Bereich der Aussparung 247 untergreift. Hierdurch sind sowohl der Schalthebel 206 als auch die Sperrklinke 204 nicht mehr in dem durch Vorklappen der Rückenlehne eingenommenen Zustand arretiert.

Der Schalthebel 206 kann nun unter der Wirkung der Drehfeder 264 wieder in seine vertikale Position verschwenken, wobei die Sperrklinke 204 (entgegen der Wirkung der Druckfeder 400, vergl. Fig. 11d) mit ihrem Rasthaken 241 aus der Rastschiene 207 ausgehoben, also entriegelt wird. Hierzu muß die Rückstellkraft der auf der Schwenkachse des Schalthebels 206 gelagerten Drehfeder 264 groß genug sein, um die Rückstellkraft der Druckfeder 400 der Sperrklinke 204 zu überwinden.

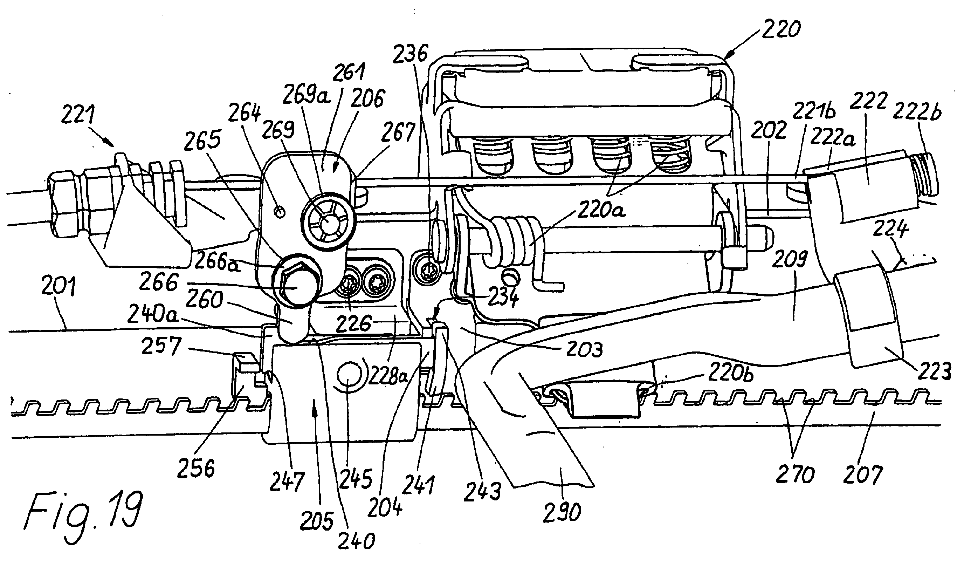

Der Schalthebel 206 steht dann gemäß Fig. 19 vertikal und wirkt dadurch in vertikaler Richtung über seinen Betätigungsabschnitt 260 auf die Betätigungsfläche 240 der Sperrklinke 204 ein, wodurch diese entriegelt ist und außerdem mit ihrem Mitnehmer 243 in den zugeordneten Eingriffsbereich 234 des Anschlagselementes 203 eingreift. Wird anschließend noch der Betätigungshebel 209 wieder losgelassen, so kehrt die Feststellvorrichtung 220 unter der Wirkung der Federanordnung 220a wieder in ihren verriegelten Zustand zurück, so daß die beiden Schienen 201, 202 der Schienenlängsführung zueinander arretiert sind. Dies entspricht den in den Figuren 11a bis 11d ausführlich erläuterten Ausgangszustand, in dem der Sitz in seine Memory-Position mit hochgeklappter Rückenlehne verriegelt ist.

Hinsichtlich der Anschläge 229, 253 bzw. 239, 259 und der zugehörigen elastischen Elemente 227 bzw. 254, die beim Erreichen der Sitzmemory-Position wirksam werden, sind verschiedene Abwandlungen des dargestellten Ausführungsbeispieles denkbar. So können beispielsweise die einzelnen Anschläge 229, 239, 253 und 259 derart angeordnet werden, daß die beiden Anschlagspaare 229, 253 und 239, 259 nicht gleichzeitig, sondern nacheinander miteinander in Kontakt geraten. Hierbei können die elastischen Elemente 225, 254, die jeweils einem der Anschlagspaare zugeordnet sind, eine unterschiedliche Deformierbarkeit aufweisen. So kann beispielsweise vorgesehen sein, daß das elastische Element desjenigen Anschlagspaares, das beim Erreichen der Sitzmemory-Position zuerst in Anschlag gerät, eine vergleichsweise große Federkonstante aufweist, also nur sehr schwer deformierbar ist. In diesem Fall wird der zugehörige Schieber 228 oder 256 beim Erreichen der Sitzmemory-Position nur dann durch Komprimieren des zugehörigen elastischen Elementes verschoben, wenn beim Verschieben des Sitzgestells in die Sitzmemory-Position eine hinreichend große Kraft aufgewandt wird und nur dann tritt nachfolgend auch das zweite Anschlagspaar in Eingriff, so daß schließlich die Sperrklinke entriegelt wird.

Durch die möglichen Variationen hinsichtlich der Anordnung der Anschläge sowie hinsichtlich der Deformierbarkeit der zugehörigen elastischen Elemente läßt sich z.B. erreichen, daß es nur dann zu einer Entriegelung der Sperrklinke kommt, wenn beim Anfahren der Memory-Position eine hinreichend große Kraft aufgewandt wird. Anderenfalls kann die Vorspannkraft der elastischen Elemente (oder zumindest eines der elastischen Elemente, welches eine besonders große Federkonstante aufweist) nicht überwunden werden, so daß die Sperrklinke und damit die Memory-Einrichtung insgesamt verriegelt bleibt.

Unabhängig von der konkreten Ausgestaltung liegt eine wesentliche Funktion der beiden Schieber 228, 256 sowie der zugehörigen elastischen Elemente 227, 254 darin, daß diese eine dauerhafte Arretierung des Schalthebels 206 sowie der Sperrklinke 204 in der durch das Vorklappen der Rückenlehne eingestellten Position bewirken, wenn der Sitz mit vorgeklappter Rückenlehne aus der Memory-Position heraus verschoben wird, und zwar auch nach einem anschließenden Hochklappen der Rückenlehne außerhalb der Memory-Position. Andererseits ermöglichen es die Schieber 228, 256 und die zugeordneten elastischen Elemente 227, 254, daß bei einem späteren Zurückschieben des Sitzes nach hinten in die Memory-Position die Blockierung des Schalthebels 206 sowie der Sperrklinke 204 aufgehoben wird, so daß die Sperrklinke 204 wieder entriegelt werden kann.

Allen vorbeschriebenen Ausführungsbeispielen ist gemeinsam, daß eine Neueinstellung der Memory-Position automatisch erfolgt, wenn der Sitz nach einem Entriegeln der Feststellvorrichtung in der Memory-Position mit vorgeklappter Rückenlehne aus der Memory-Position heraus verschoben wird. In diesem Zustand ist die Verriegelungseinheit (Sperrklinke) der Memory-Einrichtung entriegelt und der Mitnehmer der Memory-Einrichtung befindet sich in Eingriff mit einem sitzgestellseitigen Eingriffsbereich, so daß die verschieblich (auf einem Gleiter) gelagerte Verriegelungseinheit der Memory-Einrichtung (gemeinsam mit dem an der Memory-Vorrichtung ausgebildeten Gegenanschlag) bei einer Einstellung der Sitzlängsposition mitgenommen wird. Wenn nun in der neueingestellten Sitzlängsposition die Rückenlehne vorgeklappt wird, um die Easy-Entry-Funktion auszuüben, dann ist die Memory-Einrichtung mittels ihrer Verriegelungseinheit in dieser Sitzlängsposition verriegelt, die somit der neuen Memory-Position entspricht. Ein Sitzbenutzer braucht also die Bedienung der Memory-Einrichtung nicht erst zu erlernen, sondern die Memory-Funktion wird automatisch im Rahmen der üblichen Verstellung der Sitzlängsposition gewährleistet.

## Patentansprüche

1. Kraftfahrzeugsitz mit
- einem Sitzgestell (G),
- einer Rückenlehne (R), die schwenkbar an dem Sitzgestell (G) gelagert ist und die in Richtung auf eine Sitzfläche des Sitzgestelles (G) vorklappbar ist,
- einer Längsführung (1, 2; 101, 102; 201, 202), mit der das Sitzgestell (G) zur Einstellung der Sitzlängsposition in Sitzlängsrichtung (L) bewegbar ist,
- einer Feststellvorrichtung (20, 120, 220) zum Arretieren des Sitzgestelles (G) in einer zuvor eingestellten Sitzlängsposition,
- einem Betätigungselement (20b, 120b, 220b) zum Entriegeln der Feststellvorrichtung (20, 120, 220), so daß das Sitzgestell (G) in Sitzlängsrichtung (L) bewegt werden kann,
- einem Koppelmechanismus (9, 21, 21a, 21b; 109, 121, 121b; 209, 221, 221b), der auf das Betätigungselement (20b, 120b, 220b) einwirkt und die Feststellvorrichtung (20, 120, 220) entriegelt, wenn die Rückenlehne (R) in Richtung auf die Sitzfläche vorgeklappt ist,
- einer Memory-Einrichtung (4, 5, 7; 104, 105, 107; 204, 205, 207), mittels der das Sitzgestell (G) bei einer Bewegung in Sitzlängsrichtung automatisch in einer vorgebbaren, als Memory-Position definierten Sitzlängsposition angehalten werden kann, wobei ein dem Sitzgestell (G) zugeordneter, in Sitzlängsrichtung (L) bewegbarer Anschlag (3, 103, 203) mit einem Gegenanschlag (44, 144, 254) der Memory-Einrichtung (4, 5, 7; 104, 105, 107; 204, 205, 207) in Eingriff tritt,
- Einstellmitteln (5, 105, 205) der Memory-Einrichtung (4, 5, 7; 104, 105, 107; 204, 205, 207), mit denen die Memory-Position in Sitzlängsrichtung (L) einstellbar ist,
- einer verriegelungsvorrichtung (4, 7; 104, 107; 204, 207) der Memory-Einrichtung (4, 5, 7; 104, 105, 107; 204, 205, 207) zum Verriegeln einer eingestellten Memory-Position und
- Schaltmitteln (6, 102, 206), mit denen die Verriegelungsvorrichtung (4, 7; 104, 107; 204, 207) entriegelbar ist, um die Memory-Position einstellen zu können,
wobei der Koppelmechanismus (9, 21, 21a, 21b; 109, 121, 121b; 209, 221, 221b) nur solange zur Entriegelung der Feststellvorrichtung (20, 120, 220) auf das Betätigungselement (20, 120b, 220b) einwirkt, wie die Rückenlehne (R) vorgeklappt ist, und das Sitzgestell (G) durch die Feststellvorrichtung (20, 120, 220) arretierbar ist, wenn die Rückenlehne (R) nicht vorgeklappt ist,
**dadurch gekennzeichnet,**
**daß** die Verriegelungsvorrichtung (4, 7; 104, 107; 204, 207) der Memory-Einrichtung (4, 5, 7; 104, 105, 107; 204, 205, 207) mittels eines elastischen Elementes (400) in Richtung auf ihre verriegelte Stellung elastisch vorgespannt ist.

2. Kraftfahrzeugsitz nach Anspruch 1, **gekennzeichnet durch** Sperrmittel (33, 35; 168, 268), die mit der Rückenlehne (R) gekoppelt sind und die bei vorgeklappter Rückenlehne (R) mit den Schaltmitteln (6, 106, 206) in Wirkverbindung stehen, um ein Entriegeln der Verriegelungsvorrichtung (4, 7; 104, 107; 204, 207) zu verhindern.

3. Kraftfahrzeugsitz nach Anspruch 2, **dadurch gekennzeichnet, daß** die Sperrmittel (33, 35; 168; 268) über ein Zug- oder ein Schubmittel (21a, 21b; 121b; 221b) mit der Rückenlehne (R) gekoppelt sind.

4. Kraftfahrzeugsitz nach Anspruch 2 oder 3, **dadurch gekennzeichnet, daß** die Sperrmittel (168, 268) mit der Rückenlehne (R) über denselben Koppelmechanismus (121, 121b; 221, 221b) wie das Betätigungselement (120b, 220b) gekoppelt sind.

5. Kraftfahrzeugsitz nach einem der Ansprüche 2 bis 4, **dadurch gekennzeichnet, daß** die Sperrmittel mindestens ein Sperrelement (33, 35; 168; 268) umfassen, das beim Vorklappen der Rückenlehne (R) verschoben wird, so daß es mit den Schaltmitteln (6, 106, 206) in Wirkverbindung tritt und eine Entriegelung der Verriegelungsvorrichtung (4, 7; 104, 107; 204, 207) blockiert.

6. Kraftfahrzeugsitz nach Anspruch 5, **dadurch gekennzeichnet, daß** das Sperrelement (168; 268) beim Vorklappen der Rückenlehne (R) in Sitzlängsrichtung (L) verschoben wird.

7. Kraftfahrzeugsitz nach Anspruch 5, **dadurch gekennzeichnet, daß** das Sperrelement (33, 35) beim Vorklappen der Rückenlehne (R) verschwenkt wird.

8. Kraftfahrzeugsitz nach einem der Ansprüche 5 bis 7, **dadurch gekennzeichnet, daß** das Sperrelement (33, 35; 168) mindestens einen Anschlag aufweist, der beim Vorklappen der Rückenlehne (R) mit den Schaltmitteln (6, 106) in Wirkverbindung tritt und **dadurch** eine Entriegelung der verriegelungsvorrichtung (4, 104) blockiert.

9. Kraftfahrzeugsitz nach einem der Ansprüche 5 bis 7, **dadurch gekennzeichnet, daß** das Sperrelement (268) mit den Schaltmitteln (206) verbunden ist und beim Vorklappen der Rückenlehne (R) derart auf die Schaltmittel (206) einwirkt, daß eine Entriegelung der-Verriegelungsvorrichtung (204) blockiert wird.

10. Kraftfahrzeugsitz nach einem der vorhergehenden Ansprüche, **dadurch gekennzeichnet, daß** die Schaltmittel (106, 206) einen Schalthebel aufweisen, der zum Entriegeln der Verriegelungsvorrichtung (104, 204) verschwenkbar ist.

11. Kraftfahrzeugsitz nach einem der Ansprüche 1 bis 9, **dadurch gekennzeichnet, daß** die Schaltmittel (6) eine Schaltfeder aufweisen, die zum Entriegeln der Verriegelungsvorrichtung (104, 204) verformbar ist.

12. Kraftfahrzeugsitz nach einem der vorhergehenden Ansprüche, **dadurch gekennzeichnet, daß** die Schaltmittel (6, 106, 206) an dem Sitzgestell (G) gelagert sind.

13. Kraftfahrzeugsitz nach einem der vorhergehenden Ansprüche, **gekennzeichnet durch** eine derartige Anordnung der Schaltmittel (6, 106, 206), daß sie nur dann zum Entriegeln auf die Verriegelungsvorrichtung (4, 7; 104, 107; 204, 207) einwirken können, wenn sich das Sitzgestell (G) in der Memory-Position befindet.

14. Kraftfahrzeugsitz nach einem der vorhergehenden Ansprüche, **dadurch gekennzeichnet, daß** die Schaltmittel (6, 106, 206) in Richtung einer ersten Schaltposition vorgespannt sind und daß die Schaltmittel (6, 106, 206) eine zweite Schaltposition schaltbar sind, wobei in einer der beiden Schaltpositionen die Verriegelungsvorrichtung (4, 7; 104, 107; 204, 207) verriegelt und in der anderen Schaltposition die Verriegelungsvorrichtung (4, 7; 104, 107; 204, 207) entriegelt ist.

15. Kraftfahrzeugsitz nach einem der vorhergehenden Ansprüche, **dadurch gekennzeichnet, daß** die Schaltmittel (6, 106, 206) mit der Feststellvorrichtung (20, 120, 220) gekoppelt sind, wenn sich das Sitzgestell (G) in der Memory-Position befindet.

16. Kraftfahrzeugsitz nach Anspruch 15, **dadurch gekennzeichnet, daß** die Schaltmittel (6, 106) beim Betätigen der Feststellvorrichtung (20, 120) schaltbar sind, wenn sich das Sitzgestell (G) in der Memory-Position befindet.

17. Kraftfahrzeugsitz nach Anspruch 16, **dadurch gekennzeichnet, daß** die Schaltmittel (6) beim Entriegeln der Feststellvorrichtung (20) derart geschaltet werden, daß die Verriegelungsvorrichtung (4) entriegelt wird.

18. Kraftfahrzeugsitz nach Anspruch 16, **dadurch gekennzeichnet, daß** die Schaltmittel (106) beim Verriegeln der Feststellvorrichtung (120) derart geschaltet werden, daß die Verriegelungsvorrichtung (104) entriegelt wird.

19. Kraftfahrzeugsitz nach einem der vorhergehenden Ansprüche, **dadurch gekennzeichnet, daß** in der Memory-Position des Sitzgestells (G) bei nicht vorgeklappter Rückenlehne (R) und bei entriegelter Verriegelungsvorrichtung (104, 204) die Schaltmittel (106, 206) derart abgestützt werden, daß bei einem Entriegeln der Feststellvorrichtung (120, 220) die Schaltmittel (106, 206) nicht geschaltet werden.

20. Kraftfahrzeugsitz nach Anspruch 19, **dadurch gekennzeichnet, daß** die Schaltmittel (106, 206) an einer der Verriegelungsvorrichtung (120, 220) zugeordneten Fläche (140, 240) abgestützt werden.

21. Kraftfahrzeugsitz nach Anspruch 19, **dadurch gekennzeichnet, daß** die Schaltmittel (206) mittels eines elastischen Elementes (264) abgestützt werden.

22. Kraftfahrzeugsitz nach einem der vorhergehenden Ansprüche, **dadurch gekennzeichnet, daß** die Schaltmittel (6, 106) beim Anfahren der Memory-Position mit nicht vorgeklappter Rückenlehne (R) zunächst deaktiviert werden und **dadurch** ein Entriegeln der Verriegelungsvorrichtung (4, 104) verhindert wird.

23. Kraftfahrzeugsitz nach Anspruch 15 und 22, **dadurch gekennzeichnet, daß** die Schaltmittel (6, 106) bei einem anschließenden Verriegeln der Feststellvorrichtung (20, 120) derart betätigt werden, daß sie wieder zum Entriegeln auf die Verriegelungsvorrichtung (4, 104) einwirken können.

24. Kraftfahrzeugsitz nach Anspruch 23, **dadurch gekennzeichnet, daß**,die Verriegelungsvorrichtung (4) durch Entriegeln der Feststellvorrichtung (20) entriegelbar ist.

25. Kraftfahrzeugsitz nach einem der Ansprüche 22 bis 24, **dadurch gekennzeichnet, daß** den Schaltmitteln (6) eine Führungsfläche (42) der Memory-Einrichtung (4, 5, 7) zugeordnet ist und daß die Führungsfläche (42) derart ausgebildet ist, daß die Schaltmittel (6) beim Anfahren der Memory-Position mit nicht vorgeklappter Rückenlehne (R) entlang der Führungsfläche (42) geführt werden, um eine Entriegeln der Verriegelungsvorrichtung (4) durch die Schaltmittel (6) zu verhindern.

26. Kraftfahrzeugsitz nach Anspruch 23 und 25, **dadurch gekennzeichnet, daß** die Schaltmittel (6) beim Verriegeln der Feststellvorrichtung (20) derart betätigt werden, daß sie von der Führungsfläche (42) abgehoben werden.

27. Kraftfahrzeugsitz nach einem der Ansprüche 22 bis 24, **dadurch gekennzeichnet, daß** den Schaltmitteln (106) eine Anschlagfläche (140a) der Memory-Einrichtung (104, 105, 107) zugeordnet ist und daß die Anschlagfläche (104, 140a) derart angeordnet ist, daß die Anschlagfläche (140, 140a) beim Anfahren der Memory-Position mit nicht vorgeklappter Rückenlehne (R) auf die Schaltmittel (106) einwirkt, um ein Entriegeln der Verriegelungsvorrichtung (104) durch die Schaltmittel (106) zu verhindern.

28. Kraftfahrzeugsitz nach Anspruch 23 und 27, **dadurch gekennzeichnet, daß** die Schaltmittel (106) beim Verriegeln der Feststellvorrichtung (120) derart betätigt werden, daß sie von der Anschlagfläche (140, 140a) abgehoben werden.

29. Kraftfahrzeugsitz nach Anspruch 28, **dadurch gekennzeichnet, daß** die Schaltmittel (106, 206) in der Memory-Position bei nicht vorgeklappter Rückenlehne (R) derart auf die Verriegelungsvorrichtung (4, 7; 104, 107; 204, 207) einwirken, daß diese entgegen der elastischen Vorspannung entriegelt ist.

30. Kraftfahrzeugsitz nach einem der vorhergehenden Ansprüche, **dadurch gekennzeichnet, daß** die Verriegelungsvorrichtung (4, 7; 104, 107; 204, 207) eine zusammen mit dem Gegenanschlag (44, 144, 254) der Memory-Einrichtung (4, 5, 7; 104, 105, 107; 204, 205, 207) in Sitzlängsrichtung (L) verschiebbare Verriegelungseinheit (4, 104, 204) aufweist.

31. Kraftfahrzeugsitz nach Anspruch 30, **dadurch gekennzeichnet, daß** der Verriegelungseinheit (4, 104, 204) eine Rasteinrichtung (7, 107, 207) zugeordnet ist, die in Sitzlängsrichtung (L) hintereinander angeordnete Raststellen (70, 170, 270) aufweist, an denen die Verriegelungseinheit (4, 104, 204) bezüglich der Rasteinrichtung (7, 107, 207) verriegelbar ist.

32. Kraftfahrzeugsitz nach Anspruch 33, **dadurch gekennzeichnet, daß** die Verriegelungseinheit eine schwenkbar gelagerte Sperrklinke (4, 104, 204) umfaßt, die ein Rastelement (41, 141, 241) aufweist, das an den Raststellen (70, 170, 270) in die Rasteinrichtung (7, 107, 207) einrasten kann, und die einen Betätigungsab- schnitt (40, 140, 240) aufweist, auf den die Schaltmittel (6, 106, 206) einwirken können, um das Rastelement (41, 141, 241) in die Rasteinrichtung (7, 107, 207) einrasten zu lassen.

33. Kraftfahrzeugsitz nach einem der Ansprüche 30 bis 32, **dadurch gekennzeichnet, daß** die Memory-Einrichtung (4, 5, 7; 104, 105, 107; 204, 205, 207) einen Mitnehmer (43, 143, 243) aufweist, der mit dem Sitzgestell (G) in Eingriff bringbar ist, um den Gegenanschlag (44, 144, 254) und die Verriegelungseinheit (4, 104, 204) der Memory-Einrichtung (4, 5, 7; 104, 105, 107; 204, 205, 207) zusammen mit dem Sitzgestell (G) in Sitzlängsrichtung (L) verschieben zu können.

34. Kraftfahrzeugsitz nach Anspruch 33, **dadurch gekennzeichnet, daß** dem Mitnehmer (43, 143, 243) ein Eingriffsbereich (34, 134, 234) des Sitzgestells (G) zugeordnet ist und daß der Mitnehmer (43, 143, 243) mit dem Eingriffsbereich (34, 134, 234) **dadurch** in Eingriff bringbar ist, daß der Mitnehmer (43, 143, 243) und der Eingriffsbereich (34, 134, 234) relativ zueinander verschwenkt werden.

35. Kraftfahrzeugsitz nach Anspruch 33 oder 34, **dadurch gekennzeichnet, daß** der Mitnehmer (43, 143, 243) und der Eingriffsbereich (43, 143, 243) nur dann miteinander in Eingriff bringbar sind, wenn sich das Sitzgestell (G) in der Memory-Position befindet.

36. Kraftfahrzeugsitz nach einem der Ansprüche 33 bis 35, **dadurch gekennzeichnet, daß** der Mitnehmer (43, 143, 243) derart mit der Verriegelungsvorrichtung (4, 7; 104, 107; 204, 207) der Memory-Einrichtung (4, 5, 7; 104, 105, 107; 204, 205, 207) verbunden ist, daß er nur dann mit dem Eingriffsbereich (34, 134, 234) des Sitzgestells (G) in Eingriff bringbar sind, wenn die Verriegelungsvorrichtung (4, 7; 104, 107; 204, 207) der Memory-Einrichtung (4, 5, 7; 104, 105, 107; 204, 205, 207) entriegelt ist.

37. Kraftfahrzeugsitz nach Anspruch 32 und 36, **dadurch gekennzeichnet, daß** der Mitnehmer (43, 143, 243) an der Sperrklinke (4, 104, 204) angeordnet ist.

38. Kraftfahrzeugsitz nach einem der Ansprüche 30 bis 37, **dadurch gekennzeichnet, daß** die Memory-Einrichtung (4, 5, 7; 104, 105, 107; 204, 205, 207) einen Gleiter (5, 105, 205) aufweist, der in Sitzlängsrichtung (L) beweglich gelagert ist und an dem die Verriegelungseinheit (4, 7; 104, 107) und der Gegenanschlag (44, 144, 254) angeordnet sind.

39. Kraftfahrzeugsitz nach Anspruch 32 und Anspruch 38, **dadurch gekennzeichnet, daß** die Sperrklinke (4, 104, 204) schwenkbar an dem Gleiter (5, 105, 205) gelagert ist.

40. Kraftfahrzeugsitz nach einem der Ansprüche 30 bis 39, **dadurch gekennzeichnet, daß** an der Memory-Einrichtung (204, 205, 207) oder dem Sitzgestell (G) mindestens ein elastisch vorgespannter Schieber (228, 256) beweglich gelagert ist, der sich in der Memory-Position entgegen der Vorspannung an einem Anschlagsteil (253, 203) des Sitzgestells (G) oder der Memory-Einrichtung (204, 205, 207) abstützt und der sich bei einer Verschiebung des Sitzgestells (G) aus der Memory-Position heraus aufgrund der Vorspannung in eine derartige Position bewegt, daß er eine Entriegelung der Verriegelungseinheit (204) verhindert.

41. Kraftfahrzeugsitz nach Anspruch 40, **dadurch gekennzeichnet, daß** die Verriegelungseinheit (204) einen elastisch vorgespannten, beweglich gelagerten Schieber (256) aufweist, der sich in der Memory-Position entgegen der Vorspannung an einem Anschlagselement (203) des Sitzgestells (G) abstützt und der sich bei einer Verschiebung des Sitzgestells (G) aus der Memory-Position heraus aufgrund der Vorspannung in eine derartige Position bewegt, daß er eine Entriegelung der Verriegelungseinheit (204) verhindert.

42. Kraftfahrzeugsitz nach Anspruch 32 und 41, **dadurch gekennzeichnet, daß** der Schieber (256) sich bei einer Verschiebung des Sitzgestells (G) aus der Memory-Position heraus aufgrund der Vorspannung in eine derartige Position bewegt, daß er an der Sperrklinke (204) angreift und **dadurch** eine Entriegelung der Sperrklinke (204) verhindert.

43. Kraftfahrzeugsitz nach einem der Ansprüche 40 bis 42, **dadurch gekennzeichnet, daß** das Sitzgestell (G) einen elastisch vorgespannten, beweglich gelagerten Schieber (228) aufweist, der sich in der Memory-Position entgegen der Vorspannung an einem Anschlag (253) der Memory-Einrichtung (204, 205, 207) abstützt und der sich bei einer Verschiebung des Sitzgestells (G) aus der Memory-Position heraus mit vorgeklappter Rückenlehne (R) aufgrund der Vorspannung in eine derartige Position bewegt, daß er ein Einwirken der Schaltmittel (206) auf die Verriegelungsvorrichtung (204, 207), das zum Entriegeln der Verriegelungsvorrichtung (204, 207) führt, blockiert, und daß bei einem Hochklappen Rückenlehne (R) aus der vorgeklappten Stellung die Position des Schiebers (228) nicht beeinflußt wird.

44. Kraftfahrzeugsitz nach Anspruch 43, **dadurch gekennzeichnet, daß** der Schieber (228) einen Stützabschnitt (228a) aufweist, an dem sich die Schaltmittel (206) derart abstützen, daß ein Einwirken der Schaltmittel (206) auf die Verriegelungsvorrichtung (204), das zum Entriegeln der Verriegelungsvorrichtung (204) führt, blockiert wird.

45. Kraftfahrzeugsitz nach einem der Ansprüche 40 bis 44, **dadurch gekennzeichnet, daß** der mindestens eine Schieber (228, 256) durch Einwirkung des Anschlagselementes (253, 203) entgegen der Vorspannung bewegt wird, wenn das Sitzgestell (G) die Memory-Position erreicht, und daß durch den Schieber (228, 256) eine Entriegelung der Verriegelungsvorrichtung (204) nicht mehr blockiert wird.

46. Kraftfahrzeugsitz nach Anspruch 45, **dadurch gekennzeichnet, daß** die Schaltmittel (206) elastisch in Richtung auf eine Schaltposition vorgespannt sind, in der sie eine Entriegelung der Verriegelungsvorrichtung (204) bewirken.

47. Kraftfahrzeugsitz nach einem der vorhergehenden Ansprüche, **dadurch gekennzeichnet, daß** das Betätigungselement (20b, 120b, 220b) zum Entriegeln der Feststellvorrichtung (20, 120, 220) auch unabhängig von der Stellung der Rückenlehne (R) betätigbar ist, z.B. mittels eines Betätigungshebels (9, 109, 209).

48. Kraftfahrzeugsitz nach einem der vorhergehenden Ansprüche, **dadurch gekennzeichnet, daß** das Betätigungselement (20b, 120b, 220b) entgegen der zum Entriegeln der Feststellvorrichtung (20, 120, 220) einzunehmenden Position federnd vorgespannt ist.

## Claims

1. Automobile seat with
- a seat frame (G)
- a backrest (R) which is mounted for swivel mounted on the seat frame (G) and which can be folded forwards towards a seat surface of the seat frame,
- a longitudinal guide (1, 2; 101, 102; 201, 202) with which the seat frame (G) can be moved in the longitudinal direction (L) of the seat in order to regulate the longitudinal position of the seat;
- a fixing device (20, 120, 220) for locking the seat frame (G) in a previously regulated seat longitudinal position;
- an operating element (20b, 120b, 220b) for unlocking the fixing device (20, 120, 220) so that the seat frame (G) can be moved in the longitudinal direction (L) of the seat;
- a coupling mechanism (9, 21, 21a, 21b; 109, 121, 121b; 209, 221, 221b) which acts on the operating element (20b, 120b, 220b) and unlocks the fixing device (20, 120, 220) when the back rest (R) is folded forwards towards the seat surface;
- a memory device (4, 5, 7; 104, 105, 107; 204, 205, 207) by means of which the seat frame (G) can during movement in the longitudinal direction of the seat automatically be stopped in a predeterminable seat longitudinal position defined as the memory position, wherein a stop (3, 103, 203) associated with the seat frame (G) and movable in the longitudinal direction (L) of the seat can engage with a counter stop (44, 144, 254) of the memory device (4, 5, 7; 104, 105, 107; 204, 205, 207);
- regulating means (5, 105, 205) of the memory device (4, 5, 7; 104, 105, 107; 204, 205, 207) with which the memory position can be regulated in the longitudinal direction (L) of the seat;
- a locking device (4, 7; 104, 107; 204, 207) of the memory device (4, 5, 7; 104, 105, 107; 204, 205, 207) for locking a regulated memory position and
- switching means (6, 102, 206) with which the locking device (4, 7; 104, 107; 204, 207) can be unlocked in order to be able to adjust the memory position,
wherein the coupling mechanism (9, 21, 21a, 21b; 109, 121, 121b; 209, 221, 221b) only acts on the operating element (20, 120b, 220b) to unlock the fixing device (20, 120, 220) for as long as the backrest (R) is folded forwards , and the seat frame (G) can be locked by the fixing device (20, 120, 22) when the backrest (R) is not folded forwards
**characterised in that**
the locking device (4, 7; 104, 107; 204, 207) of the memory device (4, 5, 7; 104, 105, 107; 204, 205, 207) is elastically pretensioned towards its locked position by means of an elastic element (400).

2. Automobile seat according to claim 1 **characterised by** locking means (33, 35; 168, 268) which are coupled to the backrest (R) and which when the backrest (R) is folded forwards are in active connection with the switching means (6, 106, 206) in order to prevent unlocking of the locking device (4, 7; 104, 107; 204, 207).

3. Automobile seat according to claim 2 **characterised in that** the locking means (33, 35; 168; 268) are coupled to the backrest (R) through a pull or push means (21a, 21b; 121b; 221b).

4. Automobile seat according to claim 2 or 3 **characterised in that** the locking means (168, 268) are coupled to the backrest (R) through the same coupling mechanism (121, 121b; 221, 221b) as the operating element (120b, 220b).

5. Automobile seat according to one of claims 2 to 4 **characterised in that** the locking means comprise at least one locking element (33, 35; 168; 268) which is displaced when the backrest (R) is folded forwards so that it comes into active connection with the switching means (6, 106, 206) and blocks unlocking of the locking device (4, 7; 104, 107; 204, 207).

6. Automobile seat according to claim 5 **characterised in that** the locking element (168; 268) is moved in the longitudinal direction (L) of the seat when the backrest (R) is folded forwards.

7. Automobile seat according to claim 5 **characterised in that** the locking element (33, 35) is swivelled when the backrest (R) is folded forwards.

8. Automobile seat according to one of claims 5 to 7 **characterised in that** the locking element (33, 35; 168) has at least one stop which when the backrest (R) is folded forwards comes into active connection with the switching means (6, 106) and thereby blocks unlocking of the locking device (4, 104).

9. Automobile seat according to one of claims 5 to 7 **characterised in that** the locking element (268) is connected to the switching means (206) and when the backrest (R) is folded forwards acts on the switching means (206) so that unlocking of the locking device (204) is blocked.

10. Automobile seat according to one of the preceding claims **characterised in that** the switching means (106, 206) have a switching lever which can be swivelled in order to unlock the locking device (104, 204).

11. Automobile seat according to one of claims 1 to 9 **characterised in that** the switching means (6) have a switching spring which can be deformed in order to unlock the locking device (104, 204).

12. Automobile seat according to one of the preceding claims **characterised in that** the switching means (6, 106, 206) are mounted on the seat frame (G).

13. Automobile seat according to one of the preceding claims **characterised by** an arrangement of the switching means (6, 106, 206) such that they can only then act on the locking device (4, 7; 104, 107; 204, 207) for unlocking when the seat frame (G) is in the memory position.

14. Automobile seat according to one of the preceding claims **characterised in that** the switching means (6, 106, 206) are pretensioned towards a first switching position and that the switching means (6, 106, 206) can be switched into a second switching position wherein in one of the two switching positions the locking device (4, 7; 104, 107; 204, 207) is locked and in the other switching position the locking device (4, 7; 104, 107; 204, 207) is unlocked.

15. Automobile seat according to one of the preceding claims **characterised in that** the switching means (6, 106, 206) are coupled with the fixing device (20, 120, 220) when the seat frame (G) is located in the memory position.

16. Automobile seat according to claim 15 **characterised in that** the switching means (6, 106) can be switched during operation of the fixing device (20, 120) when the seat frame (G) is located in the memory position.

17. Automobile seat according to claim 16 **characterised in that** the switching means (6) during unlocking of the fixing device (20) are switched so that the locking device (4) is unlocked.

18. Automobile seat according to claim 16 **characterised in that** the switching means (106) during locking of the fixing device (120) are switched so that the locking device (104) is unlocked.

19. Automobile seat according to one of the preceding claims **characterised in that** in the memory position of the seat frame (G) when the backrest (R) is not folded forwards and when the locking device (104, 204) is unlocked the switching means (106, 206) are supported so that during unlocking of the fixing device (120, 220) the switching means (106, 206) are not switched.

20. Automobile seat according to claim 19 **characterised in that** the switching means (106, 206) are supported on one of the faces (140, 240) associated with the locking device (120, 240).

21. Automobile seat according to claim 19 **characterised in that** the switching means (206) are supported by means of an elastic element (264).

22. Automobile seat according to one of the preceding claims **characterised in that** the switching means (6, 106) on approaching the memory position with the backrest (R) not folded forwards are at first deactivated and unlocking of the locking device (4, 104) is thereby prevented.

23. Automobile seat according to claims 15 and 22 **characterised in that** the switching means (6, 106) during subsequent unlocking of the fixing device (20, 120) are actuated so that they can again act on the locking device (4, 104) for the purpose of unlocking.

24. Automobile seat according to claim 23 **characterised in that** the locking device (4) can be unlocked by unlocking the fixing device (20).

25. Automobile seat according to one of claims 22 to 24 **characterised in that** the switching means (6) are associated with a guide face (42) of the memory device (4, 5, 7) and that the guide face (42) is formed so that the switching means (6) when approaching the memory position with the backrest (R) not folded forwards are guided along the guide face (42) in order to prevent unlocking of the locking device (4) through the switching means (6).

26. Automobile seat according to claims 23 and 25 **characterised in that** the switching means (6) during locking of the fixing device (20) are actuated so that they are lifted from the guide face (42).

27. Automobile seat according to one of claims 22 to 24 **characterised in that** the switching means (106) are associated with a stop face (140a) of the memory device (104, 105, 107) and that the stop face (104, 140a) is arranged so that the stop face (140, 140a) on approaching the memory position with the backrest (R) not folded forwards acts on the switching means (106) in order to prevent unlocking of the locking device (104) through the switching means (106).

28. Automobile seat according to claims 23 and 27 **characterised in that** the switching means (106) during locking of the fixing device (120) are actuated so that they are lifted from the stop face (140, 140a).

29. Automobile seat according to claim 28 **characterised in that** the switching means (106, 206) in the memory position with the backrest (R) not folded forwards act on the locking device (4, 7; 104, 107; 204, 207) so that this is unlocked against the elastic pretension force.

30. Automobile seat according to one of the preceding claims **characterised in that** the locking device (4, 7; 104, 107; 204, 207) has a locking unit (4, 104, 204) which can be displaced together with the counter stop (44, 144, 254) of the memory device (4, 5, 7; 104, 105, 107; 204, 205, 207) in the longitudinal direction (L) of the seat.

31. Automobile seat according to claim 30 **characterised in that** the locking unit (4, 104, 204) is associated with a detent device (7, 107, 207) which has detent sites (70, 170, 270) arranged in succession in the longitudinal direction (L) of the seat and on which the locking unit (4, 104, 204) can be locked relative to the detent device (7, 107, 207) .

32. Automobile seat according to claim 33 **characterised in that** the locking unit comprises a swivel mounted locking pawl (4, 104, 204) which has a detent element (41, 141, 241) which can engage at the detent sites (70, 170, 270) in the detent device (7, 107, 207) and which has an operating section (40, 140, 240) on which the switching means (6, 106, 206) can act in order that the detent element (41, 14, 241) can engage in the detent mechanism (7, 107, 207).

33. Automobile seat according to one of claims 30 to 32 **characterised in that** the memory device (4, 5, 7; 104, 105, 107; 204, 205, 207) has a follower (43, 143, 243) which can be brought into engagement with the seat frame (G) in order that the counter stop (44, 144, 254) and the locking unit (4, 104, 204) of the memory device (4, 5, 7; 104, 105, 107; 204, 205, 207) can be displaced together with the seat frame (G) in the longitudinal direction (L) of the seat.

34. Automobile seat according to claim 33 **characterised in that** the follower (43, 143, 243) is associated with an engagement area (34, 134, 234) of the seat frame (G) and that the follower (43, 143, 243) can be brought into engagement with the engagement area (34, 134, 234) by swivelling the follower (43, 143, 243) and the engagement area (34, 134, 234) relative to each other.

35. Automobile seat according to claim 33 or 34 **characterised in that** the follower (43, 143, 243) and the engagement area (43, 143, 243) can only then brought into engagement with each other if the seat frame (G) is located in the memory position.

36. Automobile seat according to one of claims 33 to 35 **characterised in that** the follower (43, 143, 243) is connected with the locking device (4, 7; 104, 107; 204, 207) of the memory device (4, ,5 7; 104, 105, 107; 204, 205, 207) so that it can only then be brought into engagement with the engagement area (3,4 134, 234) of the seat frame (G) when the locking device (4, 7; 104, 107; 204, 207) of the memory device (4, 5, 7; 104, 105, 107; 204, 205, 207) is unlocked.

37. Automobile seat according to claims 32 and 36 **characterised in that** the follower (43, 143, 243) is mounted on the locking pawl (4, 104, 204).

38. Automobile seat according to one of claims 30 to 37 **characterised in that** the memory device (4, 5, 7; 104, 105, 107; 204, 205, 207) has a glide (5, 105, 205) which is mounted movable in the longitudinal direction (L) of the seat and on which the locking unit (4, 7; 104, 107) and the counter stop (44, 144, 254) are mounted.

39. Automobile seat according to claim 32 and claim 38 **characterised in that** the locking pawl (4, 104, 204) is mounted for swivel movement on the glide (5, 105, 205).

40. Automobile seat according to one of claims 30 to 39 **characterised in that** at least one elastically pretensioned slider (228, 256) is mounted movable on the memory device (204, 205, 27) or on the seat frame (G) and in the memory position is supported against pretension on a stop part (253, 203) of the seat frame (G) or the memory device (204, 205, 207) and during displacement of the seat frame (G) can be moved out of the memory position as a result of the pretension into such a position that it prevents unlocking of the locking unit (204).

41. Automobile seat according to claim 40 **characterised in that** the locking unit (204) has an elastically pretensioned movably mounted slider (256) which is supported in the memory position against the pretension on a stop element (203) of the seat frame (G) and which during displacement of the seat frame (G) is moved out of the memory position as a result of the pretension into a position so that it prevents unlocking of the locking unit (204).

42. Automobile seat according to claims 32 and 41 **characterised in that** the slider (256) is moved during displacement of the seat frame (G) out of the memory position as a result of the pretension into such a position that it engages on the locking pawl (204) and thereby prevents unlocking of the locking pawl (204).

43. Automobile seat according to one of claims 40 to 42 **characterised in that** the seat frame (G) has an elastically pretensioned movably mounted slider (228) which in the memory position is supported against pretension on a stop (253) of the memory device (204, 205, 207) and which is moved during displacement of the seat frame (G) out of the memory position with the backrest (R) folded forwards as a result of the pretension into such a position that it blocks the action of the switching means (206) on the locking device (204, 207) which leads to unlocking of the locking device (204, 207) and that when the backrest (R) is raised up out from the forward folded position the position of the slider (228) is not affected.

44. Automobile seat according to claim 43 **characterised in that** the slider (228) has a support section (228a) on which the switching means (206) are supported so that action of the switching means (206) on the locking device (204) which leads to unlocking of the locking device (204) is blocked.

45. Automobile seat according to one of claims 40 to 44 **characterised in that** the at least one slider (228, 256) is moved through the action of the stop element (253, 203) against pretension when the seat frame (G) reaches the memory position, and that through the slider (228, 256) unlocking of the locking device (204) is no longer blocked.

46. Automobile seat according to claim 45 **characterised in that** the switching means (206) are pretensioned elastically towards a switching position in which they cause unlocking of the locking device (204).

47. Automobile seat according to one of the preceding claims **characterised in that** the operating element (20b, 120b, 220b) for unlocking the fixing device (20, 120, 220) can also be operated independently of the position of the backrest (R), e.g. by means of an operating lever (9, 109, 209).

48. Automobile seat according to one of the preceding claims **characterised in that** the operating element (20b, 120b, 220b) is resiliently pretensioned against the position which is to be occupied to unlock the fixing device (20, 120, 220).

## Revendications

1. Siège de véhicule automobile, comportant
- un bâti de siège (G),
- un dossier (R) qui est monté avec faculté de pivotement sur le bâti de siège (G) et qui est rabattable vers l'avant dans la direction d'une surface d'assise du bâti de siège (G),
- un guidage longitudinal (1, 2 ; 101, 102 ; 201, 202) par lequel le bâti de siège (G) est mobile pour régler la position longitudinale du siège dans la direction longitudinale (L) du siège,
- un dispositif d'immobilisation (20, 120, 220) pour arrêter le bâti de siège (G) dans une position longitudinale du siège réglée auparavant,
- un élément d'actionnement (20b, 120b, 220b) pour déverrouiller le dispositif d'immobilisation (20, 120, 220), de sorte que le bâti de siège (G) peut être déplacé dans la direction longitudinale (L) du siège,
- un mécanisme de couplage (9, 21, 21a, 21b ; 109, 121, 121b ; 209, 221, 221b) qui agit sur l'élément d'actionnement (20b, 120b, 220b) et qui déverrouille le dispositif d'immobilisation (20, 120, 220) lorsque le dossier (R) est rabattu vers l'avant dans la direction de la surface d'assise,
- un dispositif à effet mémoire (4, 5, 7 ; 104, 105, 107 ; 204, 205, 207) au moyen duquel, lors d'un mouvement dans la direction longitudinale du siège, le bâti de siège (G) peut être stoppé automatiquement dans une position longitudinale du siège prédéterminée définie comme position de mémoire, une butée (3, 103, 203) associée au bâti de siège (G) et mobile dans la direction longitudinale (L) du siège venant en engagement avec une contrebutée (44, 144, 254) du dispositif à effet mémoire (4, 5, 7 ; 104, 105, 107 ; 204, 205, 207),
- des moyens de réglage (5, 105, 205) du dispositif à effet mémoire (4, 5, 7 ; 104, 105, 107 ; 204, 205, 207), par lesquels la position de mémoire est réglable dans la direction longitudinale (L) du siège,
- un dispositif de verrouillage (4, 7 ; 104, 107 ; 204, 207) du dispositif à effet mémoire (4, 5, 7 ; 104, 105, 107 ; 204, 205, 207), destiné à verrouiller une position de mémoire réglée, et
- des moyens de commutation (6, 102, 206) au moyen desquels le dispositif de verrouillage (4, 7 ; 104, 107 ; 204, 207) est susceptible d'être déverrouillé pour pouvoir régler la position de mémoire,
dans lequel le mécanisme de couplage (9, 21, 21a, 21b ; 109, 121, 121b ; 209, 221, 221b) agit sur l'élément d'actionnement (20b, 120b, 220b), en vue de déverrouiller le dispositif d'immobilisation (20, 120, 220), uniquement tant que le dossier (R) est rabattu vers l'avant, et le bâti de siège (G) est susceptible d'être arrêté par le dispositif d'immobilisation (20, 120, 220) lorsque le dossier (R) n'est pas rabattu vers l'avant,
**caractérisé en ce que**
le dispositif de verrouillage (4, 7 ; 104, 107 ; 204, 207) du dispositif à effet mémoire (4, 5, 7 ; 104, 105, 107 ; 204, 205, 207) est précontraint élastiquement dans la direction de sa position verrouillée au moyen d'un élément élastique (400).

2. Siège de véhicule automobile selon la revendication 1, **caractérisé par** des moyens d'arrêt (33, 35 ; 168, 268) qui sont couplés au dossier (R) et qui, lorsque le dossier (R) est rabattu vers l'avant, sont en liaison d'action avec les moyens de commutation (6, 106, 206) pour empêcher un déverrouillage du dispositif de verrouillage (4, 7 ; 104, 107 ; 204, 207).

3. Siège de véhicule automobile selon la revendication 2, **caractérisé en ce que** les moyens d'arrêt (33, 35 ; 168, 268) sont couplés au dossier (R) via un moyen de traction ou de poussée (21a, 21b ; 121b ; 221b).

4. Siège de véhicule automobile selon la revendication 2 ou 3, **caractérisé en ce que** les moyens d'arrêt (168, 268) sont couplés au dossier (R) via le même mécanisme de couplage (121, 121b ; 221, 221b) que l'élément d'actionnement (120b, 220b).

5. Siège de véhicule automobile selon l'une des revendications 2 à 4, **caractérisé en ce que** les moyens d'arrêt comprennent au moins un élément d'arrêt (33, 35 ; 168, 268) qui, lors du rabattement du dossier (R) vers l'avant, est déplacé de manière à venir en liaison d'action avec les moyens de commutation (6, 106, 206) et à bloquer un déverrouillage du dispositif de verrouillage (4, 7 ; 104, 107; 204, 207).

6. Siège de véhicule automobile selon la revendication 5, **caractérisé en ce que** l'élément d'arrêt (168 ; 268) est déplacé dans la direction longitudinale (L) du siège lors du rabattement du dossier (R) vers l'avant.

7. Siège de véhicule automobile selon la revendication 5, **caractérisé en ce que** l'élément d'arrêt (33, 35) est pivoté lors du rabattement du dossier (R) vers l'avant.

8. Siège de véhicule automobile selon l'une des revendications 5 à 7, **caractérisé en ce que** l'élément d'arrêt (33, 35 ; 168) comprend au moins une butée qui, lors du rabattement du dossier (R) vers l'avant, vient en liaison d'action avec les moyens de commutation (6, 106) et bloque ainsi un déverrouillage du dispositif de verrouillage (4, 104).

9. Siège de véhicule automobile selon l'une des revendications 5 à 7, **caractérisé en ce que** l'élément d'arrêt (268) est relié aux moyens de commutation (206) et, lors du rabattement du dossier (R) vers l'avant, il agit sur les moyens de commutation (206) de telle sorte qu'un déverrouillage du dispositif de verrouillage (204) est bloqué.

10. Siège de véhicule automobile selon l'une des revendications précédentes, **caractérisé en ce que** les moyens de commutation (106, 206) comprennent un levier de commutation qui est susceptible de pivoter pour déverrouiller le dispositif de verrouillage (104, 204)

11. Siège de véhicule automobile selon l'une des revendications 1 à 9, **caractérisé en ce que** les moyens de commutation (6) comprennent un ressort de commutation qui est déformable pour déverrouiller le dispositif de verrouillage (104, 204).

12. Siège de véhicule automobile selon l'une des revendications précédentes, **caractérisé en ce que** les moyens de commutation (6, 106, 206) sont montés sur le bâti de siège (G).

13. Siège de véhicule automobile selon l'une des revendications précédentes, **caractérisé par** un agencement des moyens de commutation (6, 106, 206) tel qu'ils peuvent agir sur le dispositif de verrouillage (4, 7 ; 104, 107 ; 204, 207), en vue du déverrouillage, uniquement lorsque le bâti de siège (G) se trouve dans la position de mémoire.

14. Siège de véhicule automobile selon l'une des revendications précédentes, **caractérisé en ce que** les moyens de commutation (6, 106, 206) sont précontraints dans la direction d'une première position de commutation, et **en ce que** les moyens de commutation (6, 106, 206) sont susceptibles d'être commutés dans une deuxième position de commutation, et dans l'une des deux positions de commutation le dispositif de verrouillage (4, 7 ; 104, 107 ; 204, 207) est verrouillé et dans l'autre position de commutation le dispositif de verrouillage (4, 7 ; 104, 107 ; 204, 207) est déverrouillé.

15. Siège de véhicule automobile selon l'une des revendications précédentes, **caractérisé en ce que** les moyens de commutation (6, 106, 206) sont couplés au dispositif d'immobilisation (20, 120, 220) lorsque le bâti de siège (G) se trouve dans la position de mémoire.

16. Siège de véhicule automobile selon la revendication 15, **caractérisé en ce que** lors de l'actionnement du dispositif d'immobilisation (20, 120) les moyens de commutation (6, 106) sont susceptibles de commuter quand le bâti de siège (G) se trouve dans la position de mémoire.

17. Siège de véhicule automobile selon la revendication 16, **caractérisé en ce que** les moyens de commutation (6) sont commutés lors du déverrouillage du dispositif d'immobilisation (20), de telle sorte que le dispositif de verrouillage (4) est déverrouillé.

18. Siège de véhicule automobile selon la revendication 16, **caractérisé en ce que** les moyens de commutation (106) sont commutés lors du verrouillage du dispositif d'immobilisation (120), de telle sorte que le dispositif de verrouillage (104) est déverrouillé.

19. Siège de véhicule automobile selon l'une des revendications précédentes, **caractérisé en ce que** dans la position de mémoire du bâti de siège (G), le dossier (R) n'étant pas rabattu vers l'avant et le dispositif de verrouillage (104, 204) étant déverrouillé, les moyens de commutation (106, 206) sont supportés de telle sorte que lors d'un déverrouillage du dispositif d'immobilisation (120, 220), les moyens de commutation (106, 206) ne sont pas commutés.

20. Siège de véhicule automobile selon la revendication 19, **caractérisé en ce que** les moyens de commutation (106, 206) sont supportés sur une surface (140, 240) associée au dispositif de verrouillage (120, 220).

21. Siège de véhicule automobile selon la revendication 19, **caractérisé en ce que** les moyens de commutation (206) sont supportes au moyen d'un élément élastique (264).

22. Siège de véhicule automobile selon l'une des revendications précédentes, **caractérisé en ce que** lors d'une approche vers la position de mémoire, le dossier (R) n'étant pas rabattu vers l'avant, les moyens de commutation (6, 106) sont tout d'abord désactivés, ce pourquoi un déverrouillage du dispositif de verrouillage (4, 104) est empêché.

23. Siège de véhicule automobile selon les revendications 15 et 22, **caractérisé en ce que** lors d'un verrouillage qui suit du dispositif d'immobilisation (20, 120) les moyens de commutation (6, 106) sont actionnés de telle sorte qu'ils peuvent de nouveau agir sur le dispositif de verrouillage (4, 104) en vue d'un déverrouillage.

24. Siège de véhicule automobile selon la revendication 23, **caractérisé en ce que** le dispositif de verrouillage (4) est susceptible d'être déverrouillé par déverrouillage du dispositif d'immobilisation (20).

25. Siège de véhicule automobile selon l'une des revendications 22 à 24, **caractérisé en ce qu'**aux moyens de commutation (6) est associée une surface de guidage (42) du dispositif à effet mémoire (4, 5, 7), et **en ce que** la surface de guidage (42) est réalisée de telle sorte que lors de l'approche vers la position de mémoire, le dossier (R) n'étant pas rabattu vers l'avant, les moyens de commutation (6) sont guidés le long de la surface de guidage (42), afin d'empêcher un déverrouillage du dispositif de verrouillage (4) par les moyens de commutation (6).

26. Siège de véhicule automobile selon les revendications 23 et 25, **caractérisé en ce que** lors du verrouillage du dispositif d'immobilisation (20), les moyens de commutation (6) sont actionnés de telle sorte qu'ils sont soulevés de la surface de guidage (42).

27. Siège de véhicule automobile selon l'une des revendications 22 à 24, **caractérisé en ce qu'**aux moyens de commutation (106) est associée une surface de butée (140a) du dispositif à effet mémoire (104, 105, 107), et **en ce que** la surface de butée (140, 140a) est agencée de telle sorte que lors de l'approche vers la position de mémoire, le dossier (R) n'étant pas rabattu vers l'avant, la surface de butée (140, 140a) agit sur les moyens de commutation (106), afin d'empêcher un déverrouillage du dispositif de verrouillage (104) par les moyens de commutation (106).

28. Siège de véhicule automobile selon la revendication 23 et 27, **caractérisé en ce que** lors du verrouillage du dispositif d'immobilisation (120), les moyens de commutation (106) sont actionnés de telle sorte qu'ils sont soulevés de la surface de butée (140, 140a).

29. Siège de véhicule automobile selon la revendication 28, **caractérisé en ce que** dans la position de mémoire, le dossier (R) n'étant pas rabattu vers l'avant, les moyens de commutation (106, 206) agissent sur le dispositif de verrouillage (4, 7 ; 104, 107 ; 204, 207) de telle sorte que celui-ci est déverrouillé à l'encontre de la précontrainte élastique.

30. Siège de véhicule automobile selon l'une des revendications précédentes, **caractérisé en ce que** le dispositif de verrouillage (4, 7 ; 104, 107 ; 204, 207) comprend une unité de verrouillage (4, 104, 204) mobile dans la direction longitudinale (L) du siège conjointement avec la contrebutée (44, 144, 254) du dispositif à effet mémoire (4, 5, 7 ; 104, 105, 107 ; 204, 205, 207).

31. Siège de véhicule automobile selon la revendication 30, **caractérisé en ce qu'**à l'unité de verrouillage (4, 104, 204) est associé un dispositif d'enclenchement (7, 107, 207) qui présente des emplacements d'enclenchement (70, 170, 270) agencés les uns derrière les autres dans la direction longitudinale (L) du siège et auxquels l'unité de verrouillage (4, 104, 204) est susceptible d'être verrouillée par rapport au dispositif de verrouillage (7, 107, 207).

32. Siège de véhicule automobile selon la revendication 31, **caractérisé en ce que** l'unité de verrouillage comprend un cliquet d'arrêt (4, 104, 204) monté mobile en pivotement qui comporte un élément d'enclenchement (41, 141, 241) qui peut venir s'enclencher dans le dispositif d'enclenchement (7, 107, 207) aux emplacements d'enclenchement (70, 170, 270) et qui comprend une portion d'actionnement (40, 140, 240) sur laquelle peuvent agir les moyens de commutation (6, 106, 206) pour faire enclencher l'élément d'enclenchement (41, 141, 241) dans le dispositif d'enclenchement (7, 107, 207).

33. Siège de véhicule automobile selon l'une des revendications 30 à 32, **caractérisé en ce que** le dispositif à effet mémoire (4, 5, 7 ; 104, 105, 107 ; 204, 205, 207) comprend un toc d'entraînement (43, 143, 243) susceptible d'être amené en engagement avec le bâti de siège (G) pour pouvoir déplacer dans la direction longitudinale (L) du siège la contrebutée (44, 144, 254) et l'unité de verrouillage (4, 104, 204) du dispositif à effet mémoire (4, 5, 7 ; 104, 105, 107 ; 204, 205, 207) conjointement avec le bâti de siège (G).

34. Siège de véhicule automobile selon la revendication 33, **caractérisé en ce qu'**au toc d'entraînement (43, 143, 243) est associée une zone d'engagement (34, 134, 234) du bâti de siège (G), et **en ce que** le toc d'entraînement (43, 143, 243) est susceptible d'être amené en engagement avec la zone d'engagement (34, 134, 234) par le fait que le toc d'entraînement (43, 143, 243) et la zone d'engagement (34, 134, 234) sont pivotés l'un par rapport à l'autre.

35. Siège de véhicule automobile selon la revendication 33 ou 34, **caractérisé en ce que** le toc d'entraînement (43, 143, 243) et la zone d'engagement (34, 134, 234) sont susceptibles d'être amenés en engagement l'un avec l'autre uniquement lorsque le bâti de siège (G) se trouve dans la position de mémoire.

36. Siège de véhicule automobile selon l'une des revendications 33 à 35, **caractérisé en ce que** le toc d'entraînement (43, 143, 243) est relié au dispositif de verrouillage (4, 7 ; 104, 107 ; 204, 207) du dispositif à effet mémoire (4, 5, 7 ; 104, 105, 107 ; 204, 205, 207) de telle sorte qu'il peut être amené en engagement avec la zone d'engagement (34, 134, 234) du bâti de siège (G) uniquement lorsque le dispositif de verrouillage (4, 7 ; 104, 107 ; 204, 207) du dispositif à effet mémoire (4, 5, 7 ; 104, 105, 107 ; 204, 205, 207) est déverrouillé.

37. Siège de véhicule automobile selon les revendications 32 et 36, **caractérisé en ce que** le toc d'entraînement (43, 143, 243) est agencé sur le cliquet d'arrêt (4, 104, 204).

38. Siège de véhicule automobile selon l'une des revendications 30 à 37, **caractérisé en ce que** le dispositif à effet mémoire (4, 5, 7 ; 104, 105, 107 ; 204, 205, 207) comprend un coulisseau (5, 105, 205) qui est monté mobile dans la direction longitudinale (L) du siège et sur lequel sont agencées l'unité de verrouillage (4, 7 ; 104, 107) et la contrebutée (44, 144,254).

39. Siège de véhicule automobile selon la revendication 32 et selon la revendication 38, **caractérisé en ce que** le cliquet d'arrêt (4, 104, 204) est monté mobile en pivotement sur le coulisseau (5, 105, 205).

40. Siège de véhicule automobile selon l'une des revendications 30 à 39, **caractérisé en ce que** sur le dispositif à effet mémoire (204, 205, 207) ou sur le bâti de siège (G) est monté mobile au moins un poussoir (228, 256) précontraint élastiquement qui, dans la position de mémoire, prend appui à l'encontre de la précontrainte contre une partie de butée (253, 203) du bâti de siège (G) ou du dispositif à effet mémoire (204, 205, 207) et qui, lors d'une translation du bâti de siège (G) hors de la position de mémoire, se déplace en raison de la précontrainte jusque dans une position telle qu'il empêche un déverrouillage de l'unité de verrouillage (204).

41. Siège de véhicule automobile selon la revendication 40, **caractérisé en ce que** l'unité de verrouillage (204) comprend un poussoir (256) précontraint élastiquement et monté de façon mobile qui, dans la position de mémoire, prend appui à l'encontre de la précontrainte contre un élément de butée (203) du bâti de siège (G) et qui, lors d'une translation du bâti de siège (G) hors de la position de mémoire, se déplace en raison de la précontrainte jusque dans une position telle qu'il empêche un déverrouillage de l'unité de verrouillage (204).

42. Siège de véhicule automobile selon la revendication 32 et 41, **caractérisé en ce que** lors d'une translation du bâti de siège (G) hors de la position de mémoire, le poussoir (256) se déplace en raison de la précontrainte jusque dans une position telle qu'il attaque le cliquet d'arrêt (204) et qu'il empêche ainsi un déverrouillage du cliquet d'arrêt (204).

43. Siège de véhicule automobile selon l'une des revendications 40 à 42, **caractérisé en ce que** le bâti de siège (G) comprend un poussoir (228) précontraint élastiquement et monté de façon mobile qui, dans la position de mémoire, prend appui à l'encontre de la précontrainte contre une butée (253) du dispositif à effet mémoire (204, 205, 207) et qui, lors d'une translation du bâti de siège (G) hors de la position de mémoire, le dossier (R) étant rabattu vers l'avant, se déplace en raison de la précontrainte jusque dans une position telle qu'il bloque une action des moyens de commutation (206) sur le dispositif de verrouillage (204, 207), action qui mènerait au déverrouillage du dispositif de verrouillage (204, 207), et **en ce que** lors d'un rabattement vers le haut du dossier (R) depuis la position rabattue vers l'avant, la position du poussoir (228) n'est pas influencée.

44. Siège de véhicule automobile selon la revendication 43, **caractérisé en ce que** le poussoir (228) comprend une portion de soutien (228a) contre laquelle prennent appui les moyens de commutation (206) de telle sorte qu'une action des moyens de commutation (206) sur le dispositif de verrouillage (204), qui mènerait au déverrouillage du dispositif de verrouillage (204), est bloquée.

45. Siège de véhicule automobile selon l'une des revendications 40 à 44, **caractérisé en ce que** ledit au moins un poussoir (228, 256) est déplacé à l'encontre de la précontrainte par l'action de l'élément de butée (253, 203) lorsque le bâti de siège (G) atteint la position de mémoire, et **en ce qu'**un déverrouillage du dispositif de verrouillage (204) n'est plus bloqué par le poussoir (228, 256).

46. Siège de véhicule automobile selon la revendication 45, **caractérisé en ce que** les moyens de commutation (206) sont précontraints élastiquement dans la direction d'une position de commutation dans laquelle ils provoquent un déverrouillage du dispositif de verrouillage (204).

47. Siège de véhicule automobile selon l'une des revendications précédentes, **caractérisé en ce que** l'élément d'actionnement (20b, 120b, 220b) destiné à déverrouiller le dispositif d'immobilisation (20, 120, 220) est susceptible d'être actionné également indépendamment de la position du dossier (R), par exemple au moyen d'un levier d'actionnement (9, 109, 209).

48. Siège de véhicule automobile selon l'une des revendications précédentes, **caractérisé en ce que** l'élément d'actionnement (20b, 120b, 220b) est précontraint élastiquement à l'encontre de la position à occuper pour déverrouiller le dispositif d'immobilisation (20, 120, 220).
